## (19) Europäisches Patentamt
European Patent Office
Office européen des brevets

(11) **EP 1 035 953 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(21) Anmeldenummer: **98965769.7**

(22) Anmeldetag: **05.12.1998**

(51) Int Cl.⁷: $B25J\ 19/06$

(86) Internationale Anmeldenummer:
**PCT/EP98/07914**

(87) Internationale Veröffentlichungsnummer:
**WO 99/029474 (17.06.1999 Gazette 1999/24)**

(54) **ÜBERWACHUNGS- UND STEUERGERÄT SOWIE VERFAHREN ZUR ÜBERWACHUNG EINER TECHNISCHEN ANLAGE MIT ERHÖHTEN SICHERHEITSANFORDERUNGEN, INSBESONDERE EINES HANDHABUNGSGERÄTES**

MONITORING AND CONTROL DEVICE FOR MONITORING A TECHNICAL FACILITY SUBJECT TO ENHANCED SAFETY REQUIREMENTS, ESPECIALLY A HANDLING DEVICE

APPAREIL DE SURVEILLANCE ET DE COMMANDE ET PROCEDE DE SURVEILLANCE D'UNE INSTALLATION TECHNIQUE SOUMISE A DES EXIGENCES ELEVEES EN MATIERE DE SECURITE, EN PARTICULIER D'UN APPAREIL DE MANIPULATION

(84) Benannte Vertragsstaaten:
**CH DE FR IT LI SE**

(30) Priorität: **06.12.1997 DE 19754208**

(43) Veröffentlichungstag der Anmeldung:
**20.09.2000 Patentblatt 2000/38**

(60) Teilanmeldung:
**02003224.9 / 1 267 234**
**02003225.6 / 1 239 354**
**02003226.4 / 1 247 622**

(73) Patentinhaber:
• **Elan Schaltelemente GmbH & Co. KG**
  **35435 Wettenberg (DE)**
• **Reis GmbH & Co. Maschinenfabrik**
  **63785 Obernburg (DE)**

(72) Erfinder:
• **ZIEGLER, Olaf**
  **D-56379 Geilnau (DE)**
• **BERBERICH, Georg**
  **D-63927 Bürgstadt (DE)**
• **SOM, Franz**
  **D-64750 Lützelbach (DE)**

(74) Vertreter:
**Stoffregen, Hans-Herbert, Dr. Dipl.-Phys.**
**Patentanwalt,**
**Friedrich-Ebert-Anlage 11b**
**63450 Hanau (DE)**

(56) Entgegenhaltungen:
**EP-A- 0 096 830       EP-A- 0 465 710**
**WO-A-96/41705        US-A- 4 776 433**
**US-A- 5 060 544       US-A- 5 418 440**

EP 1 035 953 B1

**Beschreibung**

Die Erfindung bezieht sich auf ein Überwachungs- und Steuergerät zur Überwachung einer zumindest eine portable und/oder mobile und/oder immobile Einrichtung umfassenden technischen Anlage mit erhöhten Sicherheitsanforderungen, insbesondere eines in einer Schutzeinrichtung angeordneten Handhabungsgerätes, mit zumindest einer vorzugsweise zentralen und/oder dezentralen Steuereinheit sowie mit dieser verbundenen Aktoren zur Ausführung von gefahrbringenden Aktionen, wobei das Überwachungs- und Steuergerät mit Sensoren und/oder Aktoren verbunden ist und deren Zustände auswertet, verarbeitet und steuert.

Um ein Handhabungsgerät derart auszubilden, dass es auch in der Nähe von Personen betrieben werden kann, wird in der DE 39 02 247 A 1 vorgeschlagen, Istwertgeber für Lage-Rückmeldungen und Regelkreise redundant auszubilden und zusätzlich eine Überwachungsund Sicherheitsschaltung vorzusehen, die bei Signalabweichungen zwischen den redundanten Abgriffen anspricht.

Die Überwachungs- und Sicherheitsschaltung spricht auf Signalabweichungen zwischen den redundanten Istwertgebern an, wobei jedoch externe Sicherheitsvorkehrungen in die Prüfung nicht einbezogen werden. Auch ist bei der bekannten Überwachungs- und Sicherheitsschaltung nicht vorgesehen, dass diese aktiv in den Bewegungsablauf der Handhabungsmaschine eingreifen kann.

Aus der DE 296 20 592 U 1 ist eine Einrichtung zum sicherheitsgerichteten Überwachen einer Maschinenachse bekannt, die ein getrenntes Prozessor- und Istwert-Erfassungssystem sowie eine Fehleraufdeckung durch Signalvergleichstest und Zwangsdynamisierung aufweist. Die Vorrichtung weist zwei separate Istwert-Erfassungssysteme auf, die ihre Istwerte jeweils getrennten Prozessoren zuleiten. In den Prozessoren werden die Istwerte mit Ober- und Untergrenzwerten verglichen.

Zur Steuerung und Überwachung einer Bremseinrichtung für Antriebe eines Handhabungsgerätes ist aus dem Stand der Technik bekannt, dass eine Bedienperson bei geschlossener Bremseinrichtung einen Antrieb zur Erzeugung eines Drehmomentes mit einem Strom beaufschlagt und über Sichtkontakt prüft, ob sich der Antrieb bei geschlossener Bremseinrichtung bewegt. Diese Vorgehensweise ist unpräzise und muss für jede Achse separat durchgeführt werden.

Auch ist aus dem Stand der Technik bisher nicht bekannt, einen Bewegungsablauf eines definierten Punktes im kartesischen Raum bezüglich Lage und Geschwindigkeit zu überwachen.

Der vorliegenden Erfindung liegt unter anderem das Problem zu Grunde, eine Sicherheitsschaltung zur Überwachung von Bewegungsabläufen einer technischen Anlage zur Verfügung zu stellen, die flexibel einsetzbar ist und die Sicherheit der technischen Anlage erhöht.

Zur Lösung der Problemstellung wird ein Überwachungs- und Steuergerät der eingangs genannten Art vorgeschlagen, das sich dadurch auszeichnet, dass die Steuereinheit über zumindest eine Datenverbindung mit dem zumindest einen Aktor und/oder Sensor und dem Überwachungs- und Steuergerät verbunden ist, dass das Überwachungs- und Steuergerät in Abhängigkeit der Zustände der Sensoren und/oder Aktoren zumindest ein Freigabesignal an die Steuereinheit zur Ermöglichung zumindest einer Aktion in der technischen Anlage überträgt, dass das Freigabesignal eine Aktion auslöst, die durch das Steuer- und Überwachungsgerät durch Vergleich mit gespeicherten und/oder vorgegebenen Ausführungs- und/oder Funktions- und/oder Plausibilitätsvorgaben bzw. Bewegungsabläufen überwacht wird, und dass im Fehlerfall zumindest ein weiteres Signal erzeugt wird, durch das die Anlage in einen sicheren Zustand überführt wird.

Das Überwachungs- und Steuergerät ist derart ausgebildet, dass es zusätzlich in handelsübliche zentrale und/oder dezentrale numerische Steuerungen integriert werden kann, um gefahrbringende Aktionen einer technischen Anlage, insbesondere dreidimensionale gefahrbringende Bewegungen sicherheits- bzw. personenschutzgerichtet zu überwachen. Bei fehlerhafter Ausführung der Aktionen wird ein Signal zum Überführen der Anlage in den sicheren Zustand erzeugt.

Das Überwachungs- und Steuergerät weist Eingangs- und Ausgangsebenen auf, an denen die Sensoren und/oder Aktoren angeschlossen sind. Zusätzlich sind Schnittstellen vorgesehen, um das Überwachungs- und Steuergerät mit der vorhandenen zentralen Steuereinheit gegebenenfalls über einen Bus zu verbinden.

In einer bevorzugten Ausführungsform ist das Überwachungs- und Steuerungsgerät mit einer Robotersteuerung verbunden. Dabei ist vorgesehen, dass der zumindest eine Aktor und/oder der zumindest eine Sensor als eine die technische Anlage in den sicheren Zustand überführende Sicherheitseinrichtung ausgebildet ist. Insbesondere ist der Aktor als Antriebseinheit mit zugehöriger Antriebssteuerung oder als ein die technische Anlage bzw. die Antriebssteuerung mit Energie verbindendes Leistungsschütz ausgebildet.

Wenn sich sämtliche Aktoren und/oder Sensoren in einem den sicherheitstechnischen Anforderungen entsprechenden Zustand befinden, wird durch das Freigabesignal des Überwachungs- und Steuergerätes eine Aktion wie z. B. ein Bewegungsablauf ausgelöst, der durch das Steuer- und Überwachungsgerät bevorzugt durch Vergleich mit gespeicherten und/oder vorgegebenen Werten wie Ausführungs- und/oder Funktions- und/oder Plausibilitätsvorgaben bzw. Bewegungsabläufen überwacht wird.

Ferner sind insbesondere die Steuereinheit und das Übenwachungs- und Steuergerät physisch als separate Einrichtungen ausgebildet.

Zur sicheren Überwachung der Bewegungsabläufe ist erfindungsgemäß vorgesehen, dass von der Steuereinheit fortlaufend oder einmalig ein Lage-Sollwert-Signal an die zumindest eine angeschlossene Antriebssteuerung und/oder an das Überwachungs- und Steuergerät und von der zumindest einen Antriebssteuerung Lage-Istwert-Signale zumindest an die Steuereinheit, vorzugsweise sowohl an die Steuereinheit als auch an das Überwachungs- und Steuergerät übertragen werden, dass die Lage-Istwert-Signale jeder Antriebssteuerung mit in dem Überwachungs- und Steuergerät abgespeicherten und von der Steuereinheit übertragenen antriebsspezifischen Werten und/oder Wertebereichen verglichen werden und dass bei Verlassen des jeweiligen Wertes und/oder Wertebereiches das weitere Signal erzeugt wird.

Um eine möglichst hohe Fehlersicherheit zu erreichen, weisen die Antriebssteuerungen und das Überwachungs- und Steuergerät jeweils zumindest zwei Kanäle auf, wobei die Kanäle über die Busleitung CAN_A und eine weitere Busleitung CAN_B miteinander verbunden sind, wobei über die Busleitung CAN_A Steuersignale und/oder Istwert-Informationen und über die Busleitung CAN_B Istwert-Informationen übertragen werden, die redundant anliegen. Zur Auswertung elektromechanischer Sicherheitsschalter oder ähnlicher Sensoren und zur Ansteuerung externer Schaltgeräte oder Aktoren weist das Überwachungs- und Steuergerät eine zweikanalige Ausgangs- und Eingangsebene auf, wobei zumindest zwei weitere Busanschlüsse vorgesehen sind, um das Überwachungs- und Steuergerät mit einem übergeordneten Sicherheitsbus verbinden zu können.

Bei einer bevorzugten Ausführungsform sind die von den Antriebssteuerungen übertragenen Lage-Istwerte mit einem Identifier deklariert, wobei beim Empfang dieser Identifier in jedem Mikrocontroller des Überwachungs- und Steuergerätes ein Interrupt ausgelöst wird und die Lage-Istwerte innerhalb eines Zeitintervalls gelesen werden. Auch ist jedem Wert und/oder Wertebereich zumindest ein sicherheitsgerichteter Ausgang und/oder Eingang des Überwachungs- und Steuergerätes zugeordnet, wobei die Ausgänge und/oder Eingänge mit passiven und/oder aktiven Schaltelementen wie elektromechanischen Sicherheitsschaltern und/oder Leistungsschützen und Relais verknüpft sind.

Zur Ausführung von Service-Arbeiten und zur Initialisierung der technischen Anlage ist vorgesehen, dass die zentrale Steuereinheit Lage-Sollwert-Informationen zum Anfahren definierter Positionen wie SAFE-Position, SYNC-Position an die Antriebseinheiten und das Überwachungs- und Steuergerät überträgt, wobei den definierten Positionen antriebsspezifische Werte zugeordnet sind, die zu dem Übertragungs- und Steuergerät übertragen und mit den ermittelten Lage-Istwerten der Antriebseinheiten verglichen werden.

Erfindungsgemäß weist die technische Anlage keine Hardware-Endschalter wie Nocken auf, sondern es sind achsspezifische "elektronische Nocken" definiert. Insbesondere sind bezüglich einer Antriebseinheit bzw. einer Antriebsachse eine Vielzahl von Wertebereichen definiert, wobei diese antriebsspezifisch von dem Überwachungs- und Steuergerät überwacht werden, wobei jedem Wert und/oder Wertebereich ein oder mehrere Ausgänge des Überwachungsund Steuergerätes zugeordnet sind. Die Werte und/oder Wertebereiche können achsspezifisch programmiert werden. Beim Überschreiten eines Lage-Wertebereiches werden ein oder mehrere Ausgänge des Überwachungs- und Steuergerätes gesetzt, so dass die technische Anlage abgeschaltet werden kann.

Bei einem Verfahren zum sicherheitsgerichteten Überwachen zumindest einer Achse einer Antriebseinheit wird das Problem verfahrensmäßig dadurch gelöst, dass ein Lage-Istwertsignal der zumindest einen Achse erfasst und ausgewertet wird, wobei das Lage-Istwertsignal aus zwei zueinander phasenverschobenen periodischen Signalen gebildet wird, wobei die Summe der Potenzen der jeweiligen Amplitude der Signale gebildet und mit einem in einem Wertebereich liegenden Wert verglichen wird und wobei ein Fehlersignal erzeugt wird, wenn die Summe nicht innerhalb des vorgegebenen Wertebereichs liegt.

Bei einem Verfahren mit erhöhter Sicherheit ist vorgesehen, dass das Lage-Istwertsignal der zumindest einen Achse einkanalig erfasst und zweikanalig ausgewertet wird, wobei das Lage-Istwertsignal aus den zwei zueinander phasenverschobenen periodischen Signalen gebildet wird, dass in jedem Kanal die Summe der Amplitudenquadrate gebildet und mit einem konstanten Wert oder einem in dem Wertebereich liegenden Wert verglichen wird, dass ein Fehlersignal erzeugt wird, wenn die Summe nicht dem vorgegebenen Wert entspricht bzw. nicht innerhalb des Wertebereichs ist und dass das Lage-Istwertsignal dem weiteren zweikanaligen Überwachungs- und Steuergerät zugeführt wird, das die in jedem Kanal der Antriebssteuerung gebildeten Summen der Amplitudenquadrate miteinander und /oder mit dem konstanten Wert bzw. in dem Wertebereich liegenden Wert vergleicht.

Vorzugsweise setzt sich das Lage-Istwertsignal aus einem sin- und einem cos-Signal zusammen, wobei in jedem Kanal eine Plausibilitätsprüfung der Istwert-Signale durchgeführt wird, wobei geprüft wird, ob die Summe der Quadrate der Ausgangsamplituden in jedem Abtastzeitpunkt einem vorgegebenen Wert x entspricht mit x im Bereich $0,9 \leq x \leq 1,1$, vorzugsweise $x = 1 = (\sin \varphi)^2 + (\cos \varphi)^2.$

Als fehlervermeidende und/oder fehlerbeherrschende Maßnahme ist vorgesehen, dass ein richtungsabhängiges Signal eines Drehzahl- bzw. Lage-Sollwertes erzeugt und mit einem richtungsabhängigen Signal des Drehzahl- bzw. Lage-Istwertes ein- oder zweikanalig verglichen wird und dass die ein- oder zweikanalig erzeugten Werte dem Überwachungs- und Steuergerät zugeführt und dort miteinander verglichen werden.

Des Weiteren ist vorgesehen, dass zwischen den Kanälen, vorzugsweise zwischen den Mikrocomputern ein interner Kreuzvergleich der erfassten Istwerte durchgeführt wird und dass im Fehlerfall eine Impulssperre erzeugt wird.

Bei fehlender üblicher Energieversorgung für die Antriebseinheiten (Power-Down-Modus) wird eine Stillstandsüberwachung durchgeführt, wobei in jedem Kanal die Istwerte überwacht werden und bei Veränderung der Istwerte über eine eingestellte Toleranzgrenze hinaus ein "Marker" gesetzt wird, der nach dem Wiedereinschalten der üblichen Energieversorgung in das Überwachungs- und Steuergerät übertragen und mit abgespeicherten Sollwerten verglichen wird.

Bei einer Anordnung zum sicherheitsgerichten Überwachen einer von einer Antriebseinheit angetriebenen Achse einer technischen Anlage, umfassend einen mit der Achse gekoppelten Lage-Istwertgeber, der mit einer zweikanaligen Antriebssteuerung zur Auswertung verbunden ist, wird das Problem dadurch gelöst, dass der Lage-Istwertgeber einkanalig ausgeführt ist und zumindest zwei Ausgänge aufweist, an denen bei Drehung der Achse zwei zueinander phasenverschobene periodische Signale abgreifbar sind, dass die Ausgänge mit jeweils einem Kanal der Antriebssteuerung verbunden sind und dass die einzelnen Kanäle der Antriebssteuerung einerseits mit einer übergeordneten zentralen oder dezentralen Steuereinheit und andererseits mit einem zweikanaligen Überwachungs- und Steuergerät zum Vergleich der empfangenen Istwert-Signale verbunden sind.

Wenn die Antriebeinheit eines Antriebs eine Zeitwerterfassung nicht zulässt, ist vorgesehen, dass die mit dem Lage-Istwertgeber verbundene zweikanalige Antriebssteuerung als integraler Bestandteil des Überwachungs- und Steuergerätes oder als eigenständige Einheit unabhängig von der Antriebseinheit diesem vorgelagert ist. In diesem Fall kann auch das Überwachungsund Steuergerät die Antriebssteuerung zur Istwerterfassung aufweisen. Selbstverständlich kann die Einrichtung zur Istwerterfassung auch als separate Einheit dem Überwachungs- und Steuergerät vorgelagert sein.

Vorteilhaft ist der Istwert-Geber als Resolver mit zwei analogen Ausgängen für die Istwertsignale und einem Eingang für ein Referenzsignal ausgebildet, wobei die Ausgänge jeweils über einen A/D-Wandler mit einem Kanal der Antriebssteuerung verbunden sind und wobei der Eingang für das Referenzsignal mit einem Referenzgenerator verbunden ist, der seinerseits über eine Kontrolleinheit mit der Steuereinheit eines Kanals verbunden ist.

Zur Steuerung der Istwert-Erfassung ist der A/D-Wandler des zweiten Kanals über einen ersten Anschluss mit einem Interrupt-Eingang des Signalprozessors verbunden, und der A/D-Wandler des ersten Kanals ist über einen zweiten Anschluss mit einem Eingang eines Treiberbausteins verbunden, dessen Ausgang mit einer Interrupt-Steuereinheit des Mikrocontrollers verbunden ist. Dabei wird die Zeit zwischen zwei empfangenen Interrupt-Signalen (EOC) gemessen und dann ein Stop-Signal ausgelöst, wenn innerhalb einer Zeitspanne kein Interrupt-Signal (EOC) detektiert wird. Auch wird bei Abweichung der Referenzfrequenz von einem Frequenznormal eine Impulssperre erzeugt.

Um den Fehler einer mechanischen Trennung bei einkanaliger Antriebs- und Geberwelle des Resolvers zu beherrschen ist vorgesehen, dass die Antriebseinheit als Zwischenkreis gespeistes elektrisches Antriebssystem, vorzugsweise als AC-Servo-Motor realisiert ist.

Bei einem Verfahren zur Steuerung und Überwachung einer Bremseinrichtung mit einem Nennmoment ($M_{NENN}$), die einer Antriebseinheit einer technischen Anlage wie Handhabungsgerät zugeordnet ist, ist zur Ermöglichung einer automatischen Überwachung/Überprüfung vorgesehen, dass ein einem Haltemoment entsprechender Haltestrom ($I_H$) der Antriebseinheit bei geöffneter Bremseinrichtung gemessen und gespeichert wird, dass die Antriebseinheit bei geschlossener Bremseinrichtung mit einem achsspezifischen Stromwert ($I_{TEST}$) beaufschlagt wird, der die Bremseinrichtung mit einem Moment belastet, das gleich oder kleiner als das Nennmoment ($M_{NENN}$. der Bremseinrichtung ist, und dass der Antrieb gleichzeitig auf Stillstand überwacht wird.

Durch das erfindungsgemäße Verfahren erfolgt eine automatische Überwachung/Überprüfung der Bremseinrichtungen. Bei geschlossenen Bremseinrichtungen und Bestromung wird der Antrieb auf Stillstand überwacht. Sobald sich eine Achse bzw. ein Antrieb bewegt, wird über die Stillstandsüberwachung ein Fehlersignal erzeugt, das auf den Defekt einer Bremseinrichtung hinweist. Insbesondere besteht die Möglichkeit, sämtliche Bremseinrichtungen eines Handhabungsgerätes gleichzeitig zu überwachen, indem alle Antriebe bei geschlossener Bremseinrichtung mit einem Stromwert beaufschlagt werden.

Vorzugsweise ergibt sich der Stromwert ($I_{TEST}$) aus dem gemessenen Haltestrom ($I_H$) und einem Offset-Strom ($I_{OFFSET}$) nach der Beziehung

$$I_{TEST} = I_H \pm I_{OFFSET}$$

mit $I_{OFFSET} = x \cdot I_N$
mit $0,6 \leq x \leq 1,0$ , vorzugsweise x = 0,8
mit $I_N$ einem Strom, der ein Nennmoment erzeugt, das dem maximalen Nennmoment der Bremseinrichtung entspricht.

Handelt es sich bei der zu überprüfenden Achse bzw. dem zu überprüfenden Antrieb um eine schwerkraftbelastete Achse, so wird die Bremseinrichtung aufgrund der Schwerkraft z. B. des Roboterarms mit einem bestimmten Moment belastet, das dem Haltemoment entspricht. Zum Testen der Trenneinrichtung wird der Antrieb mit einem Stromwert beaufschlagt, der ein Moment erzeugt, das zusätzlich zu dem von der Schwerkraft erzeugten Moment in dessen Richtung wirkt.

Gemäß einer Weiterbildung ist vorgesehen, dass der Stromwert $I_{TEST}$ in dem Antrieb ein Moment erzeugt, das 60 bis 90 % des Nennmomentes, vorzugsweise 80 % des Nennmomentes beträgt.

Ferner ist bei nicht-schwerkraftbelasteten Achsen vorgesehen, dass die Bremseinrichtung über einen externen Schaltkontakt lösbar ist und über eine externe Hilfsenergie angesteuert wird. Diese Betriebsart wird nur in Notfällen angewendet. Dabei kann die übergeordnete Robotersteuerung und/oder das Überwachungsgerät ausgeschaltet sein. In diesem Zustand kann die Robotermechanik manuell bewegt werden, zum Beispiel zum Befreien einer eingeklemmten Person.

Zur Behebung von Produktionsstörungen ist vorgesehen, dass bei einer individuellen Lösung der Bremseinrichtungen einer Gruppe von nicht oder im wesentlichen nicht durch Schwerkraft belasteten Achsen wie Kopfachsen, verbleibende durch Schwerkraft belastete Achsen auf Stillstand überwacht werden. Diese Betriebsart ist dann von Vorteil, wenn ein Schweißroboter zum Beispiel nach einer Stromquellenstörung mit festgebranntem Schweißdraht an einer schwer zugänglichen Stelle des Werkstücks festklemmt. Für diesen Fall kann an einer Gruppe von Achsen ohne Schwerkraftbelastung die Bremseinrichtung gelüftet werden, um die Achsen sodann manuell in eine übersichtliche Position zu bewegen.

Bei einer bevorzugten Verfahrensweise wird eine Spannungsversorgung für die Bremseinrichtungen über ein externes Steuer- und Überwachungsgerät zugeschaltet, wobei eine mit der Bremseinrichtung verbundene Antriebssteuerung ein Signal erzeugt, mit dem die Bremseinrichtung einer Achse geöffnet bzw. gelüftet wird. Neben einer erhöhten Sicherheit wird dadurch auch die Flexibilität bei einer Vielzahl von angeschlossenen Motoren bzw. Bremsen erhöht.

Die Erfindung bezieht sich des Weiteren auf ein Verfahren zur Überwachung der Geschwindigkeit eines im Raum bewegbaren gerätespezifischen Punktes einer technischen Anlage, insbesondere eines Handhabungsgerätes.

Um einen Bewegungsablauf des definierten Punktes im kartesischen Raum überwachen zu können, ist vorgesehen, dass Lage-Istwert-Signale von Antriebseinheiten erfasst werden, dass aus den Lage-Istwert-Signalen durch eine Transformationsoperation kartesische Koordinaten des Punktes berechnet werden, und dass die berechneten kartesischen Koordinaten mit abgespeicherten Werten und/oder Wertebereichen verglichen werden, um ein Signal zum Stillsetzen der Einrichtung zu erzeugen, wenn die transformierten kartesischen Koordinaten den Wert und/oder Wertebereich überschreiten.

Bei einer bevorzugten Verfahrensweise erfolgt eine Überprüfung auf sicher reduzierte Geschwindigkeit bezogen auf den handhabungsgerätespezifischen Punkt, wobei ein Differenzvektor durch Subtraktion eines ersten kartesischen Koordinatensatzes in einem ersten Abtastzeitpunkt von einem zweiten kartesischen Koordinatensätz in einem zweiten Abtastzeitpunkt errechnet wird, wobei eine kartesische Geschwindigkeit des Punktes über eine Zeitdifferenz zwischen dem ersten und zweiten Abtastzeitpunkt ermittelt wird und wobei ein Signal zum Stillsetzen der Antriebseinheiten dann erzeugt wird, wenn die errechnete Geschwindigkeit eine vorgegebene maximale Geschwindigkeit übersteigt.

Bei einer weiteren bevorzugten Verfahrensweise erfolgt eine sogen. Bremsrampenüberwachung, wobei nach Auslösung eines Signals zum Stillsetzen der Einrichtung eine Anfangsgeschwindigkeit des Punktes ermittelt und gespeichert wird, wobei nach einer Zeitspanne die aktuelle Geschwindigkeit ermittelt und mit der Anfangsgeschwindigkeit verglichen wird und wobei dann, wenn die aktuelle Geschwindigkeit nach der Zeitspanne gleich oder größer der Anfangsgeschwindigkeit ist, ein Signal zum sofortigen Stillsetzen der Einrichtung erzeugt wird.

Weiterbildungen ergeben sich aus den Unteransprüchen, denen zumindest zum Teil eigenerfinderische Ausgestaltungen der Erfindungen zu entnehmen sind.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Figuren zu entnehmenden Ausführungsbeispielen.

Es zeigen:

Fig. 1     eine schematische Darstellung einer technischen Anlage, umfassend ein in einem Schutzraum angeordnetes Handhabungsgerät,

Fig. 2     ein Blockschaltbild eines Steuerungsystems zur Steuerung und/oder Regelung des Handhabungsgerätes,

Fig. 3     ein Blockschaltbild eines Überwachungs- und Steuergerätes,

Fig. 4        ein Blockschaltbild zur Ansteuerung einer Leistungsebene,

Fig. 5        ein Blockschaltbild einer Antriebssteuerung,

Fig. 6 - 9    prinzipielle Schaltungsaufbauten der in einem Programmierhandgerät implizierten Sicherheitsschaltelemente,

Fig. 10       ein Ablaufdiagramm der Funktion "SAFE POSITION",

Fig. 11       ein Ablaufdiagramm der Funktion "SYNCHRON POSITION",

Fig. 12       eine prinzipielle Darstellung von achsspezifisch, programmierbaren "elektronischen Nocken",

Fig. 13       eine prinzipielle Darstellung eines kartesischen Nockens,

Fig. 14       ein Ablaufdiagramm zur Überwachung achsspezifischer elektronischer Nocken,

Fig. 15       ein Ablaufdiagramm zur Überwachung eines kartesischen Nockens,

Fig. 16       ein Drehzahldiagramm zur Darstellung der Funktion "Bremsrampenüberwachung",

Fig. 17       ein Impulsdiagramm zur Erläuterung der Freigabe der Funktion "sicher reduzierte Geschwindigkeit",

Fig. 18       ein Ablaufdiagramm zur Erläuterung der Funktion "sicher reduzierte Geschwindigkeit",

Fig. 19       ein Impulsdiagramm zur Erläuterung der Funktion "TIPPBETRIEB",

Fig. 20       ein Impulsdiagramm zur Erläuterung der Funktion "PULSBETRIEB",

Fig. 21       ein Blockschaltbild zur Ansteuerung von Bremseinheiten,

Fig. 22       ein Ablaufdiagramm der Funktion "NOT-STOP-ROUTINE",

Fig. 23       ein Ablaufdiagramm der Funktion "POWER DOWN MODE" und

Fig. 24       ein Blockschaltbild von Hardware-Elementen, die bei Netzausfall aktiv sind.

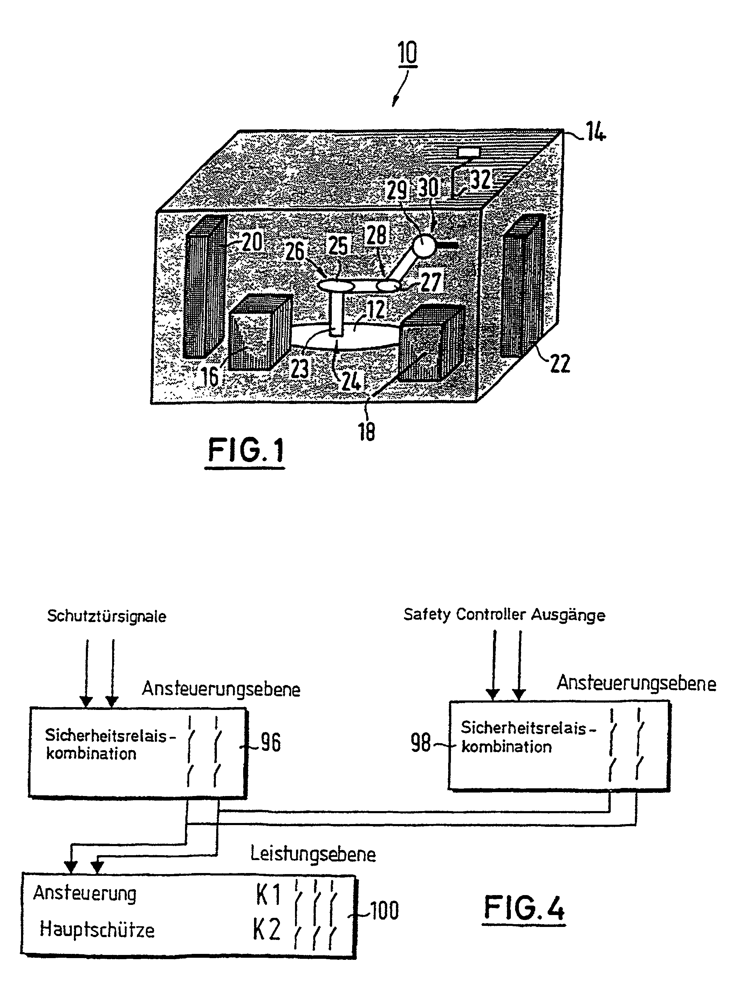

In Fig. 1 ist schematisch eine technische Anlage 10 mit erhöhten Sicherheitsanforderungen dargestellt. In dem beschriebenen Ausführungsbeispiel besteht die technische Anlage 10 aus einem Handhabungsgerät 12, das zusammen mit zwei Bestückungsplätzen 16, 18, die über zugeordnete Schutztüren 20, 22 bestückbar sind, innerhalb einer Sicherheitseinrichtung wie Schutzraum 14 angeordnet ist. Das Handhabungsgerät 12 wird im Folgenden als Roboter 12 bezeichnet.

Der Roboter 12 ist in dem hier beschriebenen Ausführungsbeispiel um zumindest vier Achsen 23, 25, 27, 29 drehbar, wobei jeder Achse 23, 25, 27, 29 ein Aktor 24, 26, 28, 30 zugeordnet ist, der im Ausführungsbeispiel als Antriebseinheit 24, 26, 28, 30 bezeichnet ist. Selbstverständlich kann der Aktor auch ein die Antriebseinheit 24, 26, 28, 30 mit Energie versorgendes Leistungsschütz sein. Um den Roboter 12 zum Beispiel nach einem Spannungsausfall synchronisieren zu können, ist innerhalb des Schutzraumes 14 ein Synchronisationspunkt bzw. Kontakt 32 angebracht.

Befindet sich der Roboter 12 in einer Stellung über dem Bestückungsplatz 18, so kann die Schutztür 20 geöffnet werden, um den Bestückungsplatz 16 zu bestücken. Während dieser Phase wird die Position des Roboters 12 in einer im Folgenden beschriebenen Art und Weise überwacht. Dabei sind Sensoren wie Schaltkontakte der Schutztür 20 mit Lage-Istwert-Signalen des Roboters 12 derart verknüpft, dass dann, wenn der Roboter 12 seine Position über dem Bestückungsplatz 18 in einem bestimmten vorgegebenen Sicherheitsbereich verlässt, eine Abschaltung erzeugt wird.

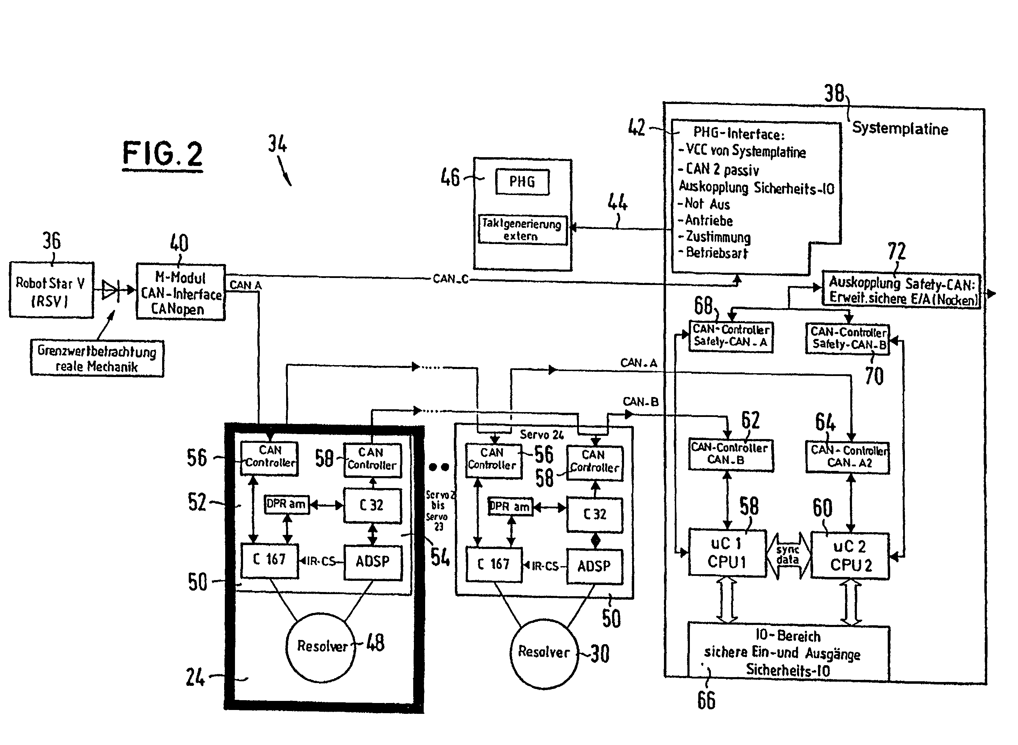

In Fig. 2 ist ein Steuerungssystem 34 dargestellt, bestehend aus einer zentralen und/oder dezentralen Steuereinheit wie Robotersteuerung 36, den Antriebseinheiten 24 bis 30 sowie einem Überwachungs- und Steuergerät 38, das im Folgenden Safety-Controller 38 genannt wird. Die Robotersteuerung 36 ist über ein Interface 40 mit einem Programmierhandgerät 46 und über eine Busleitung CAN_A mit den Antriebseinheiten 24- 30 und dem Safety-Controller 38 nach Art eines Strangs verbunden. Ferner ist der Safety-Controller 38 über eine Verbindungsleitung 44 mit

EP 1 035 953 B1

dem Programmierhandgerät 46 verbunden. Das Programmierhandgerät 46 kann auch zur Programmierung der Robotersteuerung 36 verwendet werden, wozu das Interface 42 des Safety-Controllers 38 über eine Busleitung CAN_C und das CAN-Interface 40 mit der Robotersteuerung 36 verbunden ist

Die Antriebseinheiten 24 - 30 weisen einen gleichen Aufbau auf, der am Beispiel der Antriebseinheit 24 beschrieben werden soll. Zur Erfassung von Lage-Istwert-Signalen weist die Antriebseinheit 24 einen Resolver 48 auf, der mit einer redundant aufgebauten Antriebssteuerung 50 verbunden ist. Die Antriebssteuerung 50 weist zwei Kanäle bzw. Kreise 52, 54 auf, wobei jeder Kanal einen eigenen CAN-Controller 56, 58 beinhaltet. Die CAN-Controller 56 sind untereinander über den betriebsmäßigen Bus CAN_A verbunden, der die Antriebssteuerung 50 einerseits mit der Robotersteuerung 36 und andererseits mit dem Safety-Controller 38 verbindet Die CAN-Controller 58 sind untereinander über einen weiteren Bus CAN_B verbunden, der die Controller 58 mit dem Safety-Controller 38 verbindet. Die Antriebseinheit 24 umfasst des Weiteren einen Motor, ein Leistungsteil, gegebenenfalls ein Getriebe und eine Bremseinheit (nicht dargestellt).

Der Safety-Controller 38 ist ebenfalls zweikanalig aufgebaut und weist in jedem Kanal einen eigenständigen Mikrocomputer 58, 60 auf. Die Mikrocomputer 58, 60 sind jeweils über einen CAN-Controller 62, 64 mit der Busleitung CAN_B oder der Busleitung CAN_A verbunden. Des Weiteren sind die Mikrocomputer 58, 60 mit einer Eingangs-Ausgangsebene 66 verbunden, um sichere Ein- und Ausgänge zu schalten bzw. einzulesen. Sichere Ein- und Ausgänge der Ein-Ausgangsebene 66 sind z. B. mit Kontakten der Schutztüren 20, 22 des Schutzraumes 14 verbunden. Zum weiteren Datenaustausch können die Mikrocomputer 58, 60 über weitere CAN-Controller 68, 70 und ein Interface 72 mit einem übergeordneten Sicherheitsbus gekoppelt werden.

Die Robotersteuerung 36 übernimmt die Aufgabe aller zentralen Regel- und Steuerungsaufgaben und unterliegt keinen sicherheitstechnischen Betrachtungsweisen. Insbesondere ist die Robotersteuerung 36 physisch unabhängig von dem Safety-Controller 38, so dass betriebsmäßige Abläufe in separaten Geräten ablaufen. Es ist vorgesehen, dass der Safety-Controller über die Eingangs-/Ausgangsebene 66 mit den Sensoren bzw. Schaltkontakten der Schutztüren 20, 22 und über die Busleitungen CAN_A und CAN_B mit den Aktoren bzw. Antriebseinheiten 24, 26, 28, 30 verbunden ist, um deren Zustände auszuwerten, zu verarbeiten und zu steuern. In Abhängigkeit der Zustände der Schaltkontakte der Schutztüren 20, 22 und/oder der Antriebseinheiten 24, 26, 28, 30 überträgt der Safety-Controller zumindest ein Freigabe-Signal an die Steuereinheit 36, so dass der Roboter 12 eine Aktion ausführen kann. Anschließend wird die Ausführung der zumindest einen Aktion durch den Safety-Controller fortlaufend überwacht. Im Fehlerfall wird zumindest ein weiteres Signal erzeugt, durch das die Anlage 10 in einen sicheren Zustand überführt wird.

Bei dem weiteren Signal handelt es sich um eine "STOP - 1" -Funktion, d. h., dass durch das Signal ein gesteuertes Stillsetzen eingeleitet wird, wobei die Energiezufuhr zu den Antrieb seinheiten beibehalten wird, um das Stillsetzen zu erzielen und die Energiezufuhr erst dann zu unterbrechen, wenn der Stillstand erreicht ist.

In der Robotersteuerung 36 werden alle Lage-Sollwerte der jeweiligen Antriebseinheiten 24 - 30 berechnet und nacheinander über den Bus CAN_A zu den Antriebseinheiten 24 - 30 übertragen. Die Antriebseinheiten 24 - 30 übertragen jeweils einen Lage-Istwert an die Robotersteuerung über den Bus CAN_A zurück, woraufhin in der Robotersteuerung 36 Werte wie Schlupf-, Schleppabstand und andere berechnet werden können.

Zur Lage-Istwert-Erfassung ist der Resolver 48 vorgesehen, der direkt über eine Motorwelle mit dem Motor mechanisch gekoppelt ist. Am Ausgang des Resolvers 48 liegen analoge Istwert-Signale an, die in der Antriebssteuerung 50 digitalisiert werden. Der Resolver 48 liefert der Antriebssteuerung 50 Informationen, welche zum achsspezifischen Ausregeln von Prozessen dienen. Insbesondere wird durch die Antriebssteuerung 50 eine Stromregelung für das den Motor ansteuernde Leistungsteil erreicht. Die Istwert-Informationen werden jedoch nicht nur über den Bus CAN_A der Robotersteuerung 36, sondern auch über die Busleitungen CAN_A und CAN_B redundant dem Safety-Controller 38 übertragen, um dort überwacht zu werden.

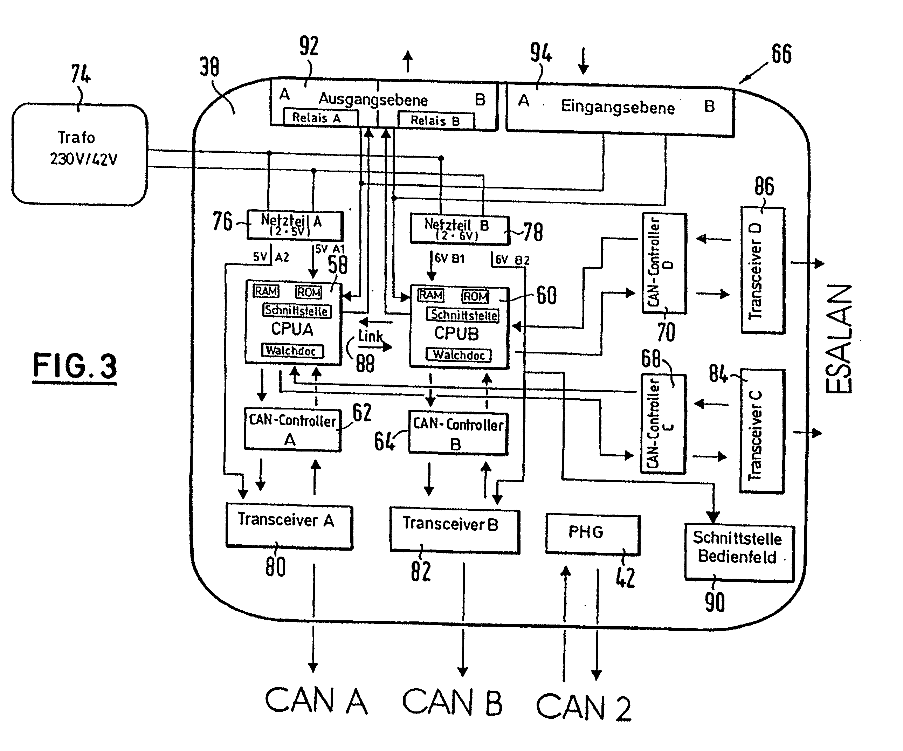

In Fig. 3 ist ein detaillierter Aufbau des Safety-Controllers 38 dargestellt. Der Safety-Controller 38 wird von einem externen Netzgerät 74 mit Energie versorgt. Jedem Mikrocomputer 58, 60 ist ein eigenes Netzteil 76, 78 zugeordnet, das mit dem Netzgerät 74 verbunden ist. Die CAN-Controller 62, 64 sind über Transceiver 80, 82 mit den Busleitungen CAN_A und CAN_B verbunden. Des Weiteren sind die Mikrocomputer 58, 60 über die weiteren CAN-Controller 68, 70 und Transceiver 84, 86 mit einem übergeordneten Sicherheitsbus verbunden. Das Interface 42 für das Programmierhandgerät 46 ist über den Bus CAN_C einerseits mit der Robotersteuerung 36 und andererseits mit dem Programmierhandgerät 46 verbunden, wobei der Bus CAN_C innerhalb des Safety-Controllers 38 physikalisch durchgeschleift ist.

Die Mikrocomputer 58, 60 sind über eine Verbindung 88 zum Datenaustausch miteinander verbunden. Auf diese Weise können die in den einzelnen Kanälen empfangenen Ist-Werte miteinander verglichen werden.

Alternativ zu dem Programmierhandgerät 46 kann der Safety-Controller 38 und/oder das Steuergerät 36 auch über ein Bedienfeld (nicht dargestellt) bedient werden, dessen Schnittstelle Bestandteil des Safety-Controllers 38 und mit zumindest einem der Mikrocomputer 58, 60 verbunden ist.

Die Ein-/Ausgabeeinheit 66 umfasst eine Ausgangsebene 92 und eine Eingangsebene 94. Die Ausgangsebene umfasst Schalttransistoren, die von den Mikrocomputern 58, 60 ansteuerbar sind. Die Eingangsebene 94 um-

7

fasst Eingänge, an denen Sicherheitsschaltgeräte wie Not/Aus-Schalter oder andere Scbaltkontakte anschließbar sind. Ein Sicherheitsschaltgerät wird zwischen jeweils einen Eingang des ersten und zweiten Mikrocomputers 58, 60 oder einen Ausgang des ersten und zweiten Mikrocomputers 58, 60 geschaltet. Die Eingänge sind Leseeingänge des jeweiligen Mikrocomputers 58, 60 und die Ausgänge sind jeweils Schreibausgänge der Mikrocomputer 58. 60. An die Ausgangsebene 92 sind z. B. Aktoren wie Leistungsschütze zur Schaltung eines Freigabesignals anschließbar. Die Eingangsebene 94 ist zum Anschluss von Sensoren wie Schaltkontakten, Not-Aus-Schaltern, Näherungsschaltern u. ä. vorgesehen.

Grundsätzlich erfolgt die Ansteuerung der technischen Anlage 12 mit zugehöriger Steuerung 36 und Antriebseinheiten 24 - 30 über Leistungsschütze bzw. Hauptschütze K1, K2, die unmittelbar mit einem Ausgang des Überwachungs- und Steuergerätes 38 verbunden sind.

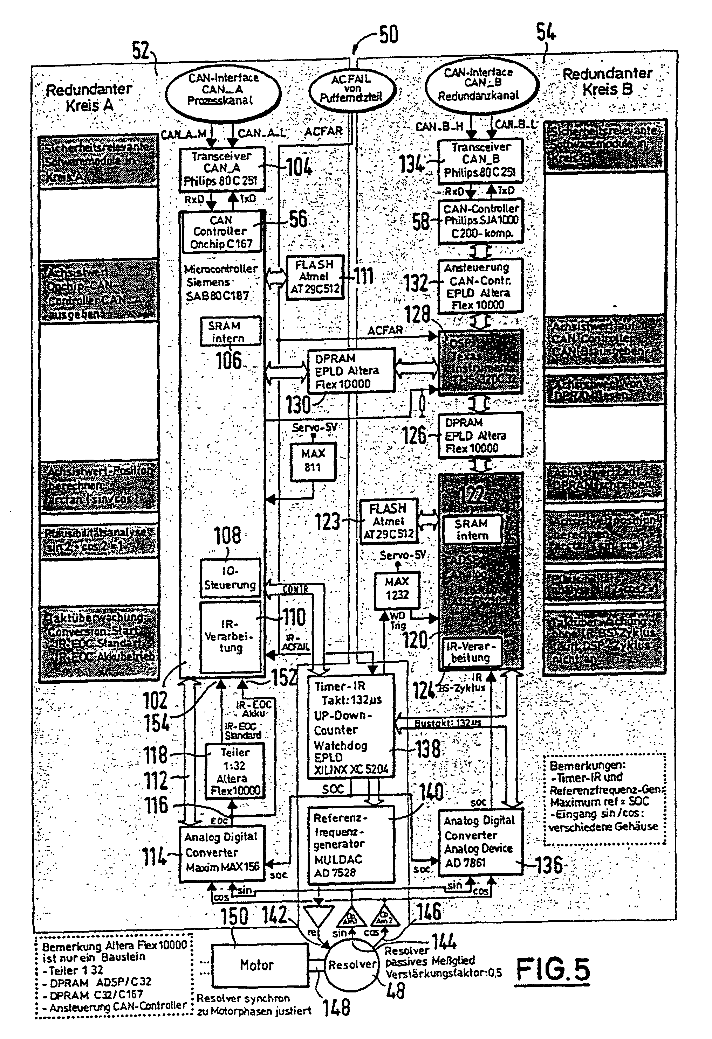

Alternativ kann die Ansteuerung auch gemäß der Anordnung in Fig. 4 erfolgen, wobei Ausgänge des Überwachungs- und Steuergerätes 38 eingespart werden können.

In Fig. 4 ist ein Prinzipschaltbild zur Ansteuerung der Leistungseinheit der Antriebseinheiten 24 - 30 dargestellt. Dabei sind Überwachungsschaltkontakte der Schutztüren 20, 22 mit einem Sicherheitsrelaisbaustein 96 verbunden. Ausgänge des Safety-Controllers 38 sind mit einem zweiten Sicherheitsrelaisbaustein 98 verbunden. Die Ausgänge der Sicherheitsrelaisbausteine sind miteinander gekoppelt und steuern Hauptschütze K1, K2 eines Leistungsschalters 100. Über die Hauptschütze K1, K2 wird die Antriebseinheit mit Energie versorgt. Die Ansteuerung der Hauptschütze K1, K2 erfolgt entweder über den Safety-Controller 38, die Schutztüren 20, 22 oder einer Verknüpfung beider Signale.

Die Robotersteuerung 36 kann insgesamt 24 Antriebseinheiten ansteuern, wobei der Safety-Controller 38 in der Lage ist, diese Anzahl von Achsen zu überwachen.

Der Safety-Controller 38 erhält die Lage-Istwerte der jeweiligen Antriebseinheiten 24 - 30 über die Busse CAN_A und CAN_B. Beide Busse dienen der redundanten Lage-Istwerterfassung. Der Bus CAN_A stellt einen betriebsmäßigen Bus für die Robotersteuerung 36 dar, wobei der Bus CAN_B eine zusätzliche in das System integrierte Übertragungstrecke darstellt, um Redundanz zu erreichen. Da es sich in diesem Fall um zwei unabhängige Übertragungsmedien handelt, ist die Zweitfehlereintrittszeit ausschlaggebend für die Aufdeckung von Hardware-Fehlern in einer der beiden Übertragungsstrecken. Alle über die Busse CAN_ A oder CAN_B übertragenen Nachrichten werden in den separaten CAN-Controllern 62, 64 aufbereitet und dem jeweiligen Mikrocomputer 58, 60 zur Verfügung gestellt. Die übergeordneten Mikrocomputer 58, 60 sind ebenfalls entkoppelt. Hier handelt es sich somit um ein völlig redundantes System, was sowohl das Übertragungsmedium als auch die Verarbeitung von empfangenen Nachrichten angeht.

Sämtliche sicherheitsrelevanten Signale werden auf die Eingänge der Eingangsebene 94 gelegt. Auf diese Weise übernimmt der Safety-Controller 38 neben Überwachungsaufgaben auch die Auswertung von Sensoren wie elektromechanischer Sicherheitsschalter. Über die Ausgangsebene 92 können Aktoren wie externe elektromechanische Relaiskombinationen angesteuert werden, welche dann mit externen Signalen, zum Beispiel Schutztür-Signalen verknüpft werden können oder die Ausgänge des Safety-Controllers 38 werden direkt mit den Leitungsschützen K1, K2 verbunden.

In Fig. 5 ist ein Blockschaltbild der Antriebssteuerung 50 mit Resolver 48 dargestellt. Die Antriebssteuerung 50 besteht aus den redundanten Kreisen 52 und 54. Der Kreis 52 weist einen Mikrocomputer 102 auf, der den CAN-Controller 56 als integralen Bestandteil und Chip aufweist. Über einen Transceiver 104 ist der CAN-Controller 56 mit dem Bus CAN_A, bestehend aus den Datenleitungen CAN_A_H und CAN_A_L verbunden. Des Weiteren enthält der Mikrocomputer 102 ein internes SRAM 106, eine IO-Steuerung 108 sowie eine IR-Verarbeitung 110 und ist über einen Bus 112 mit einem Analog-Digitalwandler verbunden. Ein Ausgang 116 des Analog-Digitalwandlers 14 ist einerseits direkt mit dem Mikrocomputer 102 und andererseits über einen Teiler 117 mit dem Mikrocomputer 102 verbunden.

Der zweite Kanal 54 weist einen ersten Signalprozessor 120 mit einem internen SRAM-Speicher sowie einer internen IR-Verarbeitung 124 auf. Der erste Signalprozessor 120 ist über ein DPRAM 126 mit einem zweiten Signalprozessor 128 verbunden. Dieser wiederum ist über ein DPRAM 130 mit dem Mikrocomputer 102 gekoppelt. Der Signalprozessor 128 ist mit einer Ansteuerung 132 verbunden, die den CAN-Controller 58 steuert. Der CAN-Controller 58 ist über einen Transceiver 134 mit dem Bus CAN_B verbunden, der die Leitungen CAN_B_H und CAN_B_L umfasst.

Über einen Bus ist der Signalprozessor 120 einerseits mit einem Analog-Digitalwandler 136 und andererseits mit einem Steuerwerk 138 verbunden, in dem ein Timer, ein Zählwerk und ein Zustandsgenerator enthalten sind. Das Steuerwerk 138 ist des Weiteren über einen Bus mit dem Mikrocomputer 102 verbunden. Auch ist das Steuerwerk 138 über einen Bus mit einem Frequenzgenerator 140 verbunden, der ein Referenzsignal für den Resolver 48 erzeugt. Dafür ist ein Ausgang des Frequenzgenerators 140 mit einem Eingang 142 des Resolvers verbunden. Schließlich weist das Steuerwerk 138 einen weiteren Ausgang auf, an dem ein Signal SOC (start of convertion) anliegt. Dieser Ausgang ist mit einem Eingang der Analog-Digitalwandler 114, 136 verbunden.

Der Resolver weist einen ersten Ausgang 144 auf, an dem ein Sinus-Signal abgreifbar ist. Der erste Ausgang 144 ist über einen Verstärker jeweils mit einem Eingang der Analog-Digitalwandler 114, 136 verbunden. Ferner weist der Resolver einen zweiten Ausgang 146 auf, an dem ein Cosinus-Signal abgreifbar ist. Der zweite Ausgang 146 ist über einen Verstärker jeweils mit einem Eingang der Analog-Digitalwandler 114, 136 verbunden. Der Resolver 48 ist über eine Welle 148 und einem Motor 150 gekoppelt. Dabei ist der Resolver 48 synchron zu Motorphasen justiert.

Mit Bezug zu Fig. 2 ist anzumerken, dass die Antriebssteuerung 50 eine eigenständige Einheit darstellt, wobei der Safety-Controller 38 keinerlei Einfluss auf die Antriebssteuerung 50 ausübt. Detektiert die Antriebssteuerung 50 einen Fehler, so wird diese Meldung direkt an den Safety-Controller 38 gemeldet oder in der Antriebssteuerung 50 wird eine Impulssperre aktiviert, d. h. das Senden von Istwert-Informationen wird eingestellt. Da der Safety-Controller 38 eine Zeiterwartungsschaltung gegenüber den Istwert-Signalen hat, führt das Fehlen dieser Istwert-Signale dazu, dass die Hauptschütze K1 und K2 durch den Safety-Controller 38 abgeschaltet werden, wodurch die Anlage in einen sicheren Zustand überführt wird.

Die Istwert-Generierung erfolgt, indem dem Resolver 48 über den Eingang 142 ein Referenzsignal zugeführt wird. Das Referenzsignal wird in dem Referenzfrequenzgenerator 140 erzeugt, der vom Steuerwerk 138 angesteuert wird. In dem Steuerwerk 138 ist ein zentraler Timer integriert, der Impulse für eine Zählstufe und einen darnit verbundenen Zustandsgenerator erzeugt. Im Scheitelpunkt der Referenzspannung liegt das Signal SOC (start of convertion) für die Analog-Digitalwandler 114, 136 an. Neben einer Spule, der das Referenzsignal zugeführt wird, weist der Resolver 48 zwei weitere Spulen auf, die vorzugsweise mit der Motorwelle gekoppelt sind und an denen eine Sinus- und Cosinus-Spannung abgreifbar ist.

Der Referenzspule wird das Referenzsignal vorgegeben, welches induktiv auf die Sinus- und Cosinus-Spule gekoppelt wird. Je nach Lage der Sinus-/Cosinus-Spule erhält man ein Sinus/Cosinus-Signal an den Ausgängen 144, 146 mit konstanter Amplitude und Frequenz. Je nach Lage des Rotors resultiert eine Phasenverschiebung (0 ... 360°) zwischen dem Referenzsignal und den Sinus- bzw. Cosinus-Signalen. Im Scheitelpunkt des Referenzsignals bzw. der Referenzspannung werden die Sinus- und Cosinus-Signale abgetastet und aus dem Verhältnis der beiden Amplituden wird eine Ist-Position innerhalb einer Resolverumdrehung berechnet. Ein Rotationswinkel $\varphi$ von 0 bis 360° entspricht bei einer Auflösung von 12 Bit einem Istwert von 0 bis 4096 Inkrementen . Der Resolver 48 muss synchron zu der Motorphase justiert werden, um ein maximales Drehmoment zu liefern. Das heißt, der Phasenwinkel $\varphi = 0$ ist einzustellen. Beim Größerwerden des Phasenwinkels nimmt das Drehmoment des Motors stetig ab und ist bei $\varphi = +90°$ und $\varphi = -90°$ genau Null. Übersteigt der Phasenwinkel $\varphi = \pm 90°$, entsteht eine Umpolung der Wirkrichtung, d. h. eine positive Drehzahlvorgabe bewirkt, dass der Motor in negative Richtung dreht. Dadurch würde der Regelkreis in einen instabilen Zustand kippen, und der Motor wäre nicht mehr regelbar.

Um eine solche Umpolung der Wirkrichtung zu erkennen, ist in der Motorsteuerung eine Drehzahlplausibilitätsprüfung vorgesehen. Dabei wird das Vorzeichen des Drehzahl- bzw.
Lage-Sollwertes ständig mit dem Vorzeichen des Drehzahl- bzw. Lage-Istwertes verglichen.

Sind beide Vorzeichen über eine definierte Zeitdauer konträr, so kann davon ausgegangen werden, dass eine Umkehr der Wirkrichtung vorliegt. Das Beobachten über eine definierte Zeitdauer ist notwendig, um zu verhindern, dass bei betriebsmäßigen Regelschwingungen die Überwachung nicht anspricht.

Die an den Ausgängen 144, 148 des Resolvers 48 anliegenden Sinus- bzw. Cosinus-Signale werden den Analog-Digitalwandlern 140, 136 zugeführt. Nach erfolgter Wandlung liefert der Analog-Digitalwandler 136 ein Signal EOC (end of conversion), wodurch der Betriebssystemzyklus des Signalprozessors 120 angestoßen wird. Nur dann, wenn der Betriebssystemzyklus ordnungsgemäß abläuft, werden die entsprechenden Lage-Istwerte über das DPRAM 126 an den Signalprozessor 128 weitergeleitet, der diese über die Ansteuerung 132, den CAN-Controller 38 und den Transceiver 134 auf den Bus CAN_B überträgt, *über* den die Ist-Werte zu dem Safety-Controller 38 übertragen werden. Sollte der Betriebssystemzyklus nicht ordnungsgemäß angestoßen werden, wird ein Signal "STOP- 0", d. h. sicherer Betriebshalt, über den Bus CAN_B an den Safety-Controller 38 gesendet. Die Fehlermeldung "STOP - 0" bewirkt ein Stillsetzen der Anlage durch ein sofortiges Ausschalten der Energiezufuhr zu den Antriebseinheiten, was auch als ungesteuertes Stillsetzen bezeichnet wird.

Der AD-Wandler 114 liefert nach erfolgreicher Wandlung der Eingangssignale ein Signal EOC (end of conversion), welches über den Timer 118 in einen Interrupt-Eingang des Mikrocomputers 102 geleitet wird. Intern wird die Zeit zwischen zwei eingetroffenen EOC-Interrupts gemessen, um eine Abweichung der Referenzfrequenz vom Frequenznormal, vorzugsweise 7,5 kH, oder ein völliges Ausbleiben der Referenzfrequenz, z. B. beim Ausfall des zentralen Timers festzustellen. In diesem Fall wird eine Impulssperre aktiviert und es erfolgt ein Signal "STOP - 0" über den Bus CAN_A an den Safety-Controller 38.

Sobald der Signalprozessor 122 das Signal EOC erhält, wird ein interner Timer angestoßen, der in einem zyklischen Verwaltungsteil des Betriebssystems dekrementiert wird und dann anspricht, wenn der Zählerstand den Wert Null erreicht, d. h. wenn das Signal EOC ausfällt. Auch in diesem Fall wird die Impulssperre aktiviert. Durch die Impulssperre wird der Motor "momentenfrei" geschaltet. Bei Ansprechen des Watchdogs wird ein Hardware-Test ausgelöst und der Safety-Controller 38 überführt die Anlage 12 in einen sicheren Zustand.

Ferner sind eine Vielzahl von Maßnahmen zur Fehlererkennung und Fehlerbehandlung vorgesehen. Zur Überprüfung der Analog-Digitalwandler 114, 136, des Referenzfrequenzgenerators 140 sowie der Ausgänge 144, 146 des Resolvers 48 wird eine Plausibilitätsprüfung durchgeführt. Die Plausibilitätsprüfung erfolgt über die beiden Amplituden der Sinus-/Cosinus-Signale des Resolvers 48 in der Weise, dass die Summe der Amplitudenquadrate $(\sin \varphi)^2$ + $(\cos \varphi)^2$ idealerweise die Summe x mit x im Bereich von $0,9 \leq x \leq 1,1$ vorzugsweise x = 1 ergibt. Um ein Ansprechen der Plausibilitätsprüfung aufgrund von Störungen wie z. B. Rauschen auf den Signalleitungen zu unterdrücken, wird die Summe x mit einem definierten Toleranzfenster versehen. Voraussetzung für die Plausibilitätsprüfung ist die Normierung der Sinus-/Cosinus-Signale, die einmal festgelegt und anschließend nicht mehr geändert werden.

Bei nicht-plausiblen Amplituden fiir Sinus- und Cosinus-Signale sendet jeder Kanal 52, 54 separat das Signal "STOP - 0" an den Safety-Controller 38. Die Istwert-Bildung und die Plausibilitätsprüfung werden redundant in den Mikrocomputern 102, 120 ausgeführt, wobei der Mikrocomputer 102 mit einer reduzierten Erfassungsrate arbeitet. Eine Erfassung je 32 Perioden entspricht 32 x 132 µs = 4,2 ms (10 ms/U bei max. 6000 U/min). Der Mikrocomputer 102 sendet seine Ist-Werte über den Bus CAN_A, und der Mikrocomputer 120 sendet seine Ist-Werte über den Signalprozessor und den Bus CAN_B an den Safety-Controller 38, der als sicherer Vergleicher die empfangenen Werte prüft. Gleichzeitig führen die Mikrocomputer 102 und 120, 128 über das DPRAM 130 einen internen Kreuzvergleich durch und reagieren im Fehlerfall durch Betätigen der Motorbremse und Aktivierung der Impulssperre und Absetzen des Signal "STOP - 0" über die Busse CAN_A und CAN_B. Hier sei angemerkt, dass die Aktivierung der Impulssperre den Motor schneller stillsetzt als der Safety-Controller 38.

Zur Überwachung des statischen Versatzes zwischen Geber und Motorwelle bzw. zur Überprüfung einer Fehljustierung des Resolvers 48 sowie zur Überprüfung eines dynamisch unkontrollierten Schlupfes zwischen Resolver 48 und Motorwelle 148 wird eine Drehzahl-Plausibilitätsprüfung durchgeführt. Auch die Drehzahlplausibilitätsprüfung erfolgt redundant in den Mikrocomputern 102, 120. Beide Mikrocomputer 102, 120 senden im Falle einer ansprechenden Überwachung unabhängig voneinander das Signal "STOP - 0" über die Busse CAN_A bzw. CAN_B an den Safety-Controller 38. Die Drehzahl-Plausibilitätsprüfung kann nur ordnungsgemäß arbeiten, wenn die Lage- und Drehzahlregelung aktiv ist, d. h. im Normalbetrieb bei eingeschalteten Antrieben.

In einem sogenannten "Power-Down-Modus", d. h. die Antriebe liegen nicht an Betriebsspannung, wird eine Stillstandsprüfung von den Mikrocomputern 102, 120 durchgeführt, in dem die Istwerte der Antriebe erfasst werden. Erfolgt eine Veränderung der Istwerte über eine eingestellte Toleranzgrenze hinaus, wird in den Mikrocomputern ein Merker "Maschine asynchron" gesetzt. Die beiden Asynchron-Merker werden nach dem Wiederanlauf an den Safety-Controller 38 gesendet und dort verglichen.

Des Weiteren erfolgt eine Drehzahl-Plausibilitätsprüfung, um eine Umpolung der Wirrichtung mit Antrieb zu erkennen. Dabei wird ein Vorzeichen des Drehzahl- bzw. Lage-Sollwertes ständig mit einem Vorzeichen des Drehzahlbzw. Lage-Istwertes verglichen. Sind beide Vorzeichen über eine definierte Zeitdauer konträr, so kann davon ausgegangen werden, dass eine umgekehrte Wirrichtung vorliegt. Das Beobachten über eine definierte Zeitdauer ist notwendig, um zu verhindern, dass bei betriebsmäßigen Regelschwingunge die Überwachung anspricht. Die zulässige Regelschwingung muss definiert sein.

Bei einem Phasenversatz zwischen Resolver 48 und Motorwelle 148, der kleiner ist als $\pm 90°$ sowie bei einem dynamisch unkontrollierten Schlupf des Resolvers auf der Motorwelle 148 spricht eine zweikanalige Schleppabstandsüberwachung in dem Signalprozessor 128 sowie dem Mikrocomputer 102 an. Zunächst wird eine Differenz zwischen Lage-Istwert und Lage-Sollwert (Regelabweichung) gebildet. Anschließend erfolgt eine Prüfung, ob die ermittelte Regelabweichung innerhalb eines Toleranzbereichs liegt. Bei Überschreiten des Toleranzbereichs fordert der Mikrocomputer 102 und der Signalprozessor 128 das Signal "STOP - 0" vom Safety-Controller 38 an. Die Schleppstandsprüfung wird in jedem Lage-Regeltakt durchgeführt, der vorzugsweise 2 ms beträgt.

Des Weiteren erfolgen interne Fehleraufdeckungsmechanismen in dem Mikrocomputer 102 sowie dem Mikrocomputer 120. Das Signal EOC des AD-Wandlers 114 wird dem Mikrocomputer 102 über zwei Interrupt-Eingänge 152, 154 gesendet. Dem Eingang 152 wird das Signal EOC unmittelbar zugeführt, wobei der Eingang 154 das Signal EOC erhält, nachdem es den programmierbaren Teiler 118, vorzugweise mit einem Teilerverhältnis 1 : 32 durchlaufen hat. Im Normalbetrieb ist nur der Eingang 154 aktiv. Im "Power Down-Modus" ist nur der Interrupt-Eingang 152 aktiv, da der Teilerbaustein 118 im "Power-Down-Modus" spannungslos ist. Im Narmalbetrieb ist die Zeit zwischen zwei Betriebssystem-Durchläufen vorzugsweise 2 ms, kleiner als die Zeit zwischen zwei Signalen EOC, vorzugsweise 4 ms. Liegt ein Signal EOC am Interrupt-Eingang 154 an, wird eine Interrupt-Routine angesprungen, in welcher folgende Aktionen ausgeführt werden: Zunächst wird ein Interrupt-Merker gesetzt, dann wird ein Zähler (Wertebereich 0...2000 ms) ausgelesen und abgelegt und anschließend wird der über den Bus 112 zugeführte Digitalwert gelesen und abgespeichert. Das Betriebssystem testet in jedem Durchlauf den Interrupt-Merker um zu prüfen, ob zuvor ein Interrupt aufgetreten ist. Ist kein Interrupt aufgetreten, wird lediglich ein Betriebssystemzyklus-Zähler inkrementiert. Ist hingegen ein Interrupt aufgetreten, wird aus der Differenz Timer-Zähler (aktuell) minus Timer-Zähler (Vorgänger) und aus der Anzahl der Betriebssystemzyklen die genaue Zeit zwischen zwei Signalen EOC und somit die Frequenz bestimmt. Weiterhin wird der abgelegte konvertierte Digitalwert verarbeitet und der Betriebssystem-Zyklus-Zähler sowie der Interrupt-Merker auf Null gesetzt. Wird nach einer definierten Zahl von Betriebssystem-Durchläufen kein Interrupt registriert, wird davon ausgegangen, dass ein Hardware-Fehler im zentralen Timer 138 vorliegt.

In dem Mikrocomputer 120 erfolgt keine Frequenzprüfung des Signals EOC, sondern nur eine Prüfung auf Vorhandensein des Signals EOC über einen Software-Watchdog. Bei Eintreffen des Signals EOC an den Mikrocomputer 120 erfolgt ein Interrupt, wodurch ein interner Timer aufgezogen wird, der in einem zyklischen Verwaltungsteil (Warten auf Interrupt) des Betriebssystems dekrementiert wird und dann anspricht, wenn der Timer den Zustand Null aufweist, d. h., wenn das Signal EOC ausgefallen ist. In diesem Fall wird die Impulssperre aktiviert.

Bei Aktivierung der Impulssperre wird ein Steuereingang eines IGBT-Leistungsteils zurückgenommen, wodurch der Antrieb "momentenfrei" wird. Für diesen Steuereingang werden in einer Hardware die Ansteuersignale des Kanals 52 und des Kanals 54 miteinander verknüpft. Wird ein Ansteuersignal eines Kanals 52, 54 zurückgenommen, wird die Impulssperre an dem IGBT gesetzt. Die Ansteuerung der Impulssperre ist zweikanalig und wird erst nach der Verknüpfung in der Hardware einkanalig.

Zur Istwert-Aufnahme durch den Safety-Controller 38 ist Folgendes anzumerken. Als erster Kanal für eine redundante Istwert-Aufnahme dient dem Safety-Controller 38 der betriebsmäßige Bus CAN_A. Auf diesem Bus werden neben den Istwert-Signalen auch betriebsmäßige Daten übertragen. Die Übertragungsgeschwindigkeit kann bis zu 1 Mbit/s betragen. Da der Bus bis 92 % ausgelastet sein kann, erfolgt keine Sicherung der Datenbites auf einer höheren Ebene. Der Safety-Controller 38 filtert sich aus den anstehenden Informationen die Istwert-Signale heraus.

Der zweite Kanal ist ein zusätzlicher physikalisch getrennter Bus CAN_B. Seine Funktion ist es, die zweiten Kanäle 54 der Antriebseinheiten zur Istwert-Erfassung mit dem zweiten Kanal des Safety-Controllers 38 zu verbinden. Die in dem Kanal 54 der Antriebssteuerung 50 generierten Daten werden unabhängig von Kanal 52 auf den Bus CAN_B gelegt. Somit erfolgt eine redundante unabhängige Datenübertragung in den Safety-Controller 38. In dem Safety-Controller 38 werden die Daten mit getrennten Transceivern 80, 82 aufgenommen und mit getrennten CAN-Controllern 62, 64 verarbeitet.

Liegt eine Nachricht an dem Transceiver 80, 82 an, wird diese dem CAN-Controller 62, 64 gemeldet. Der CAN-Controller 60, 64 entscheidet, ob diese Nachricht mit einem Identifier beginnt, welcher als Istwert-Information deklariert wurde. Ist dies der Fall, so löst dieser ein Interrupt in dem Mikrocomputer 58, 60 aus. Der Mikrocomputer 58, 60 liest den CAN-Controller 62, 64 aus. Hat der Mikrocomputer 58, 60 alle Istwerte innerhalb einer definierten Zeit erhalten, laufen die Transformationsroutinen ab. Dieser Vorgang geschieht in beiden Mikrocomputern 58, 60 unabhängig.

Die Robotersteuerung 36 und/oder der Safety-Controller 38 werden über das Programmierhandgerät 46 programmiert. Das Programmierhandgerät 46 ist über eine flexible Leitung 44 mit dem Safety-Controller 38 und dem Bus CAN_C verbunden, um Programmierbefehle vom Programmierhandgerät 46 zu der Robotersteuerung 36 zu übertragen. Diese Busleitung ist innerhalb des Safety-Controllers 38 durchgeschliffen und hat keine elektrische Verbindung mit den internen Komponenten, wie z. B. den Mikrocomputern des Safety-Controllers 38.

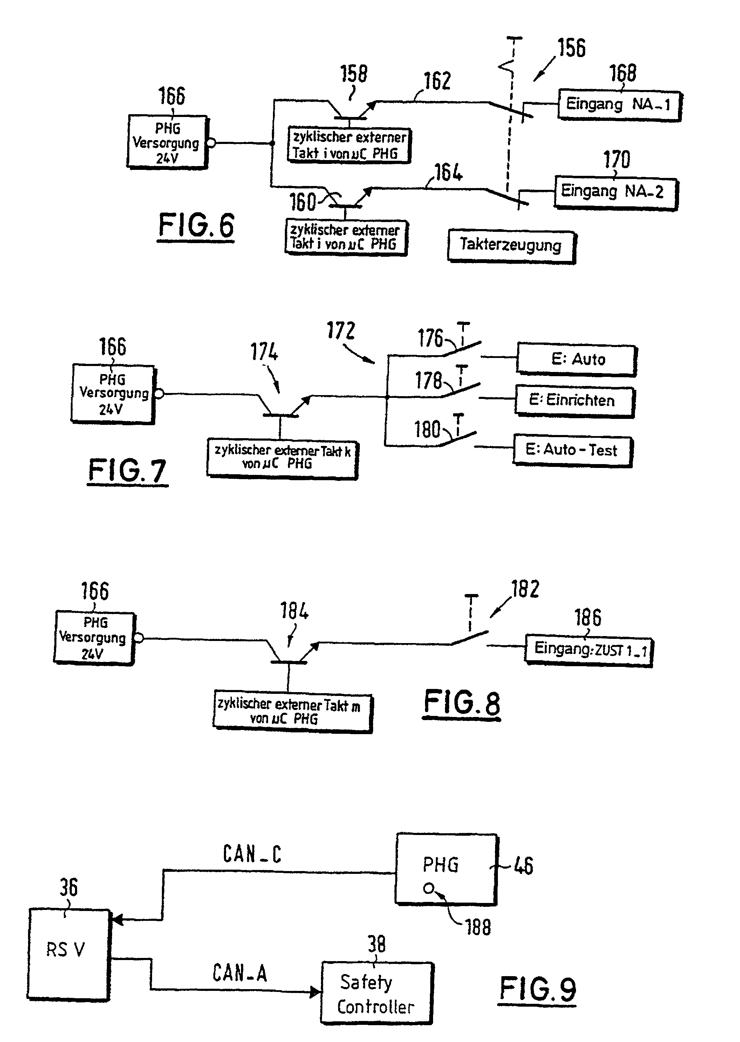

Neben den betriebsmäßigen Funktionstasten enthält das Programmierhandgerät 46 sicherheitsgerichtete Schalter bzw. Taster wie Notaus-Schalter, Betriebsartenwahlschalter, Zustimmungstaster, Eintaster und Austaster. Die Ausführung der sicherheitsrelevanten Schaltelemente des Programmierhandgerätes 46 wird anhand der Fig. 6 bis 9 erläutert.

Ein im Programmierhandgerät 46 integrierter Notaus-Schalter 156 (Fig. 6) wird auf Querschluss überwacht, da die Zuleitung 44 starken Beanspruchungen unterworfen ist. Die Querschluss-Erkennung wird mit Hilfe von durch Schaltelemente 158, 160 erzeugte Impulse über jeweils einen Kanal 162, 164 realisiert. Die Kanäle bzw. Leitungen 162, 164 sind über die Schaltelemente 158, 160 mit einer externen Versorgungspannung innerhalb des Programmierhandgerätes 46 verbunden. Die Leitungen 162, 164 sind mit Eingängen 168, 170 des Safety-Controllers 38 verbunden. Die Schaltelemente erzeugen einen Takt zum Testen der Leitungen 162, 164 innerhalb von Halbleitergruppen in dem Safety-Controller 38. Dieser hat gegenüber dem erzeugten Takt eine Zeiterwartungshaltung. Wird ein Kanal 162, 164 mit einem Takt beaufschlagt, werden alle weiteren Eingänge 168, 170 auf Eingangs-Zustands-änderungen überwacht. Die Freigabe eines Ausgangs wird erst erlaubt, nachdem das Programmierhandgerät 46 die jeweiligen Impulse über die Notaus-Kanäle 162, 164 gesendet hat und die Zeiterwartung gesetzt wurde.

Des Weiteren weist das Programmierhandgerät 46 einen Betriebsartenwahlschalter 172 (Fig. 7) auf, der als Schlüsselschalter ausgebildet ist. Das Programmierhandgerät erzeugt über einen Taktgenerator 174 einen Takt, der sich von dem Takt der Notaus-Einrichtung unterscheidet. Die Stellung des Betriebsarten-Wahlschalters 172 wird einer Plausibilitätsprüfung unterzogen. Der Betriebsartenwahlschalter weist in dem hier beschriebenen Ausführungsbeispiel drei Schließerkontakte 176, 178, 180 auf, wobei ein Schließer des Betriebsartenwahlschalters 172 immer geschlossen sein muss und zwei Schließer immer im geöffneten Zustand bleiben müssen. Es wird nur eine Stellung des Betriebsartenwahlschalters akzeptiert. Insgesamt können drei Funktionsarten eingestellt werden. Dabei ist die Funktionsart "AUTO" nur mit geschlossenem Schutzgitter (20, 22) möglich. Die Funktion "EINRICHTEN" wird auf sicher reduzierte Geschwindigkeit, wie nachfolgend erläutert, überwacht und die Funktion "AUTO-TEST" kann nur mit Hilfe eines Zustimmungstasters 182 ausgeführt werden.

In Fig. 8 ist prinzipiell die Funktion des Zustimmungstasters 182 dargestellt. Der Zustimmungstaster ist über einen Taktgenerator 184 mit der Versorgungsspannung 166 verbunden. Ein Eingang 186 des Safety-Controllers 38 überwacht den Takt des Taktgenerators 184. Der Zustimmungstaster ist als einkanaliger, dreistufiger Taster ausgeführt. Dabei wird nur die mittlere Stufe (EIN) ausgewertet.

Die Antriebseinrichtungen werden durch einen handelsüblichen, nicht sicherheitsgerichteten Taster 188 des Programmierhandgerätes 46 eingeschaltet. Die Information wird über den CAN_C in die Robotersteuerung 36 eingelesen und über den Bus CAN_A dem Safety-Controller 38 mitgeteilt. Die Funktion "ANTRIEB AUS" wird durch einen handelsüblichen Taster mit Öffnerfunktion ausgelöst. Diese Funktion darf von beliebig vielen Stellen aus erfolgen. Diese Information wird in den Safety-Controller 38 eingelesen und über den Bus CAN_A der Robotersteuerung mitgeteilt.

Wie schon zuvor erwähnt, kann der Safety-Controller 38 und/oder die Robotersteuerung 36 über das Programmierhandgerät 46 parametriert werden. In dem Programmierhandgerät ist eine Betriebs- bzw. Anwendersoftware enthalten. Nach der vollständigen Parametrierung muss der Bediener einen Abnahmetest durchführen und sicherheitsrelevante Funktionen testen. Sicherheitsrelevante, nicht veränderliche Daten, welche als Grundparametrierung geladen werden müssen, können mit Hilfe eines Personalcomputers über eine serielle Schnittstelle geladen werden. Alle geladenen Daten werden zwecks Bestätigung durch den Anwender in ein anderes Format und Darstellung vom Safety-Controller 38 zum Personalcomputer zurückgeschickt. Der Anwender muss die empfangenen Daten bestätigen.

Nach dem Stand der Technik weisen Handhabungsgeräte mechanische Nocken auf, die jeweilige Sicherheitsbereiche absichern. Diese Nocken befinden sich entweder direkt auf den Roboterachsen oder falls es sich um Linearmotoren handelt, sind diese Nocken zum Beispiel als Endschalter am Ende einer Bahn ausgebildet.

Erfindungsgemäß ist vorgesehen, dass die Bewegungen des Roboters 12 um seine Achsen über "elektronische Nocken" gesichert sind. Dabei ist der "elektronische Nocken" als Wertebereich in einem Speicher der Mikrocomputer 58, 60 im Safety-Controller 38 abgespeichert, dem ein bestimmter Bewegungsbereich des Roboters zugeordnet ist, wobei die abgespeicherten Werte mit über den Bussen CAN_A und CAN_B übertragenen Lage-Istwerten verglichen werden. Solange sich der Antrieb, d. h. die Lage-Istwerte im definierten Bereich des elektronischen Nockens befindet, wird dies als korrekte Funktion definiert. Die zu überwachende Achse befindet sich in ihrer Sollposition. Wird der elektronische Nocken, d. h. der gespeicherte Wertebereich verlassen, verlässt die Achse ihre Sollposition und der Safety-Controller 38 nimmt einen Ausgang, der diesem Wertebereich zugeordnet ist, zurück. Dieser Ausgang kann direkt auf die Hauptschütze K1, K2 wirken oder kann über Relaiskombinationen mit externen Schutzeinrichtungen, wie zum Beispiel den Schutztürkontakten 20, 22, verknüpft werden.

Wenn eine Bedienperson den Schutzraum 14 betreten möchte, wird eine Sicherheitsposition bzw. "SAFE POSITION" angefahren. In diesem Fall werden alle Achsen 23 - 29 auf Stillstand überwacht. Die Sicherheitsposition kann ausgewählt oder automatisch angefordert werden, wobei durch das Überwachungs- und Steuergerät beim Anfordern über die Robotersteuerung 36 eine aktive Überwachung dieser Funktion automatisch erfolgt.

Wird die Sicherheitsposition von der Robotersteuerung 36 angefordert, fährt der Roboter 12 in eine definierte Position. Wenn alle Antriebseinheiten 24 - 30 bzw. alle Achsen 23 - 29 zum Stillstand gekommen sind, setzt der Safety-Controller 38 in der Ausgangsebene 92 einen Ausgang. Dieser Ausgang ist zum Beispiel mit einem Sicherheitskontakt der Schutztür 20, 22 verknüpft. Die Schutztür 20, 22 kann geöffnet werden, ohne dass eine Fehlermeldung eine Abschaltung erzeugt, da der Roboter 12 auf Stillstand überwacht wird. Verlässt eine der Antriebseinheiten 24 - 30 bzw. eine der Achsen die überwachte Position, nimmt der Safety-Controller 38 den vorher gesetzten Ausgang zurück. Dieser Ausgang ist entsprechend der Steuerungskategorie 3 nach EN 954 - 1 extern mit der Schutztür 20, 22 verknüpft. Wird die Schutztür 20, 22 geöffnet während sich eine oder mehrere Antriebseinheiten 24 - 30 bewegen, fällt der Ausgang des Safety-Controllers 38 beim Öffnen der Schutztür 20, 22 ab und die Hauptschütze K1 und K2 werden nicht weiter bestromt (vgl. Fig. 4).

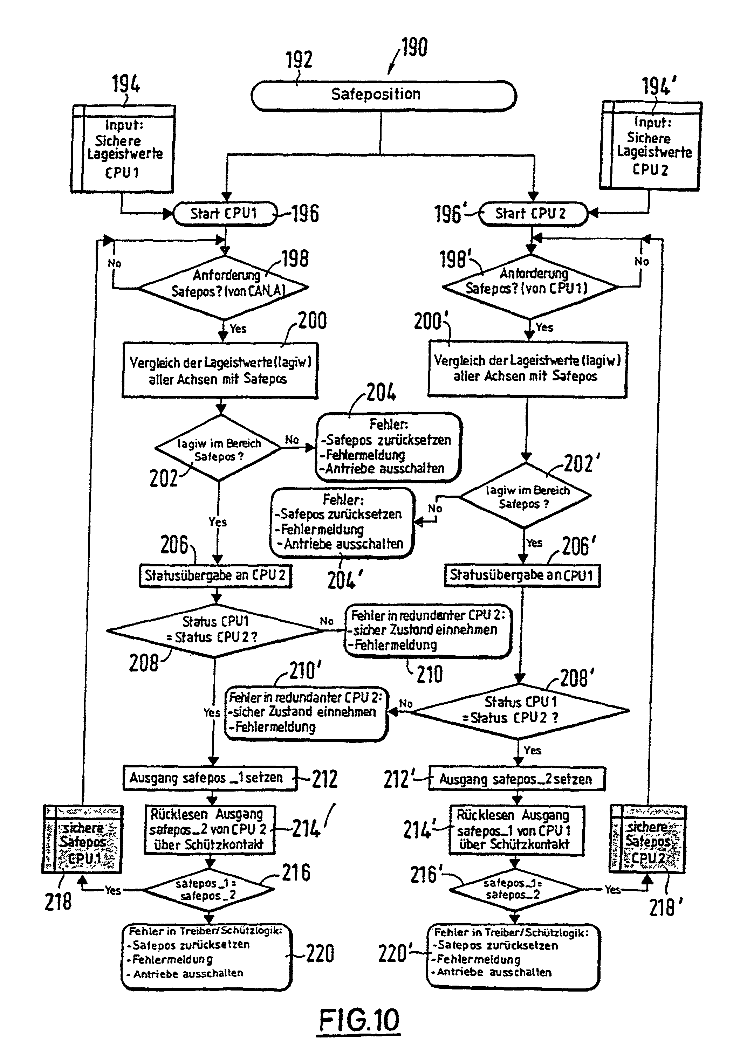

In Fig. 10 ist ein Ablaufdiagramm 190 dargestellt, in dem die Ablaufschritte zur Einstellung der Sicherheitsposition (SAFE POSITION) aufgezeigt werden. Der Programmablauf erfolgt redundant in den Mikrocomputern 58, 60 des Safety-Controllers 80. Die Erläuterung erfolgt anhand des Programmablaufs in dem Mikrocomputer 58 (CPU 1). In einem ersten Schritt 192 fordert die Robotersteuerung 36 über den Bus CAN_A die Sicherheitsposition an. Über eine Eingabe 194, 194' werden den jeweiligen Mikrocomputern 58, 60 die redundanten Lage-Istwerte über die Busse CAN_A und CAN_B zugeführt. Der Empfang der Anforderung der Robotersteuerung startet in einem Schritt 196, 196' den Programmablauf. In einem zweiten Schritt 198, 198' wird abgefragt, ob eine Anforderung der Sicherheitsposition vorliegt. Liegt eine Anforderung an, wird in einem nächsten Programmschritt 200, 200' der aktuelle Lage-Istwert aller Achsen mit der Sicherheitsposition verglichen. In einem nächsten Programmschritt 202, 202' wird festgestellt, ob der Lage-Istwert im Bereich der Sicherheitsposition liegt. Wenn dies nicht der Fall ist, wird in einem Programmschritt 204, 204' eine Fehlermeldung erzeugt, wodurch die Sicherheitsposition zurückgesetzt wird und die Antriebe ausgeschaltet werden.

Liegen die Lage-Istwerte im Bereich der Sicherheitsposition, erfolgt in einem weiteren Programmschritt 206, 206' eine Statusübergabe von Mikrocomputer 58 an Mikrocomputer 60 und umgekehrt. Im Programmschritt 208, 208' erfolgt ein Vergleich, ob der Status des Mikrocomputers 58 dem Status des Mikrocomputers 60 und umgekehrt entspricht. Ist dies nicht der Fall, wird im Programmschritt 210, 210' eine Fehlermeldung erzeugt und der Roboter wird in einen sicheren Zustand überführt. Entspricht der Status des Mikrocomputers 58 dem Status des Mikrocomputers 60 und umgekehrt, wird in einem Programmschritt 212, 212' von jedem Mikrocomputer 58, 60 in der Ausgangsebene 92 jeweils ein Ausgang "SAFE POS_1" und "SAFE POS_2" gesetzt. Anschließend erfolgt in einem Programmschritt 214, 214' ein Rücklesen des Ausgangs "SAFE POS_2" durch den Mikrocomputer 58 bzw. ein Rücklesen des Ausgangs "SAFE POS_1" durch den Mikrocomputer 60. In einem Programmschritt 216, 216' wird überprüft, ob die Ausgänge "SAFE POS_1" und "SAFE POS_2" die gleichen Zustände aufweisen. Ist das der Fall, wird dies über den Programmschritt 218, 218' dem Eingang 198, 198' zurückgemeldet. Anderenfalls wird im Programmschritt 220, 220' eine Fehlermeldung erzeugt, die Ausgänge werden zurückgesetzt und die Antriebe ausgeschaltet.

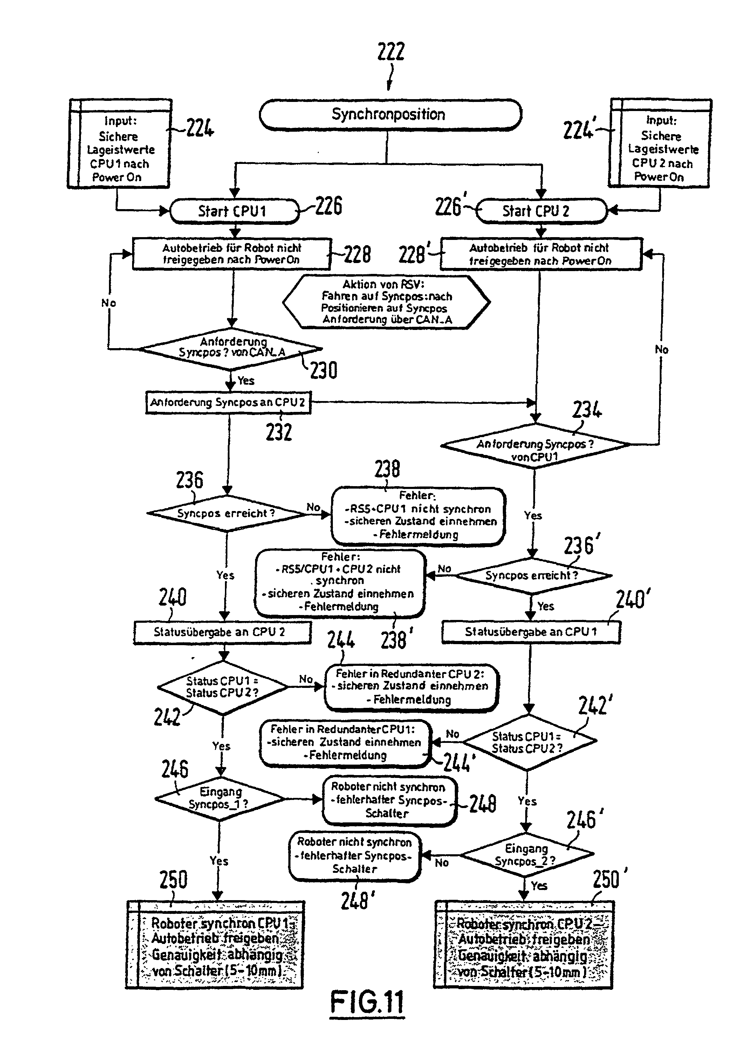

Beim Anlaufen der Robotersteuerung wird eine sichere Synchron-Position benötigt. Ein Ablaufdiagramm zur Einstellung der Synchronposition ist in Fig. 11 dargestellt. Die redundanten Mikrocomputer 102, 120 der Antriebssteuerung 50 prüfen nach dem Einschalten bzw. "POWER ON" gegenseitig ihre beim Ausschalten in den Flash-Speicher 111, 125 abgelegten Lage-Istwerte. Da der Resolver 48 nur auf einer Umdrehung absolut arbeitet, muss in einer zusätzlichen Routine die mechanische Position des Roboters 12 sicher zu diesen Lage-Istwerten synchronisiert werden. Dies geschieht durch Anfahren der Synchronisationsposition 32. Die Auswertung erfolgt durch den Safety-Controller und ist in Fig. 11 anhand des Ablaufdiagramms 222 dargestellt. Zunächst werden in einem ersten Programmschritt 224, 224' den jeweiligen Mikrocomputern 58, 56 die Lage-Istwerte nach dem Einschalten über die Busse CAN_A und CAN_B mitgeteilt.

Nach dem Start durch Programmschritt 226, 226' in einen nächsten Programmschritt 228, 228' wird festgestellt, dass der Autobetrieb für den Roboter 12 nach "POWER ON" nicht freigegeben ist. In einem nächsten Programmschritt 230 wird abgefragt, ob eine Anforderung zur Einstellung der Synchronposition über den Bus CAN_A erfolgt ist. Anschließend erfolgt in einem Programmschritt 232 eine Aufforderung zur Einstellung der Synchronposition von Mikrocomputer 58 an den Mikrocomputer 60, woraufhin in diesem in einem Programmschritt 234 eine Abfrage gestartet wird. Ist keine Anforderung zur Einstellung der Synchron-Position erfolgt, wird zu Programmschritt 228, 228' übergegangen und der Autobetrieb für den Roboter 12 wird nach "POWER ON" nicht freigegeben.

Ist eine Anforderung zur Einstellung der Synchronposition eingegangen, wird in einem nächsten Programmschritt 236, 236' überprüft, ob die Synchronposition erreicht ist Sollte diese Position nicht erreicht werden, wird in einem Programmschritt 238, 238' eine Fehlermeldung erzeugt und der Roboter wird in einen sicheren Zustand gefahren. Ist die Synchronposition erreicht, wird in einem Programmschritt 240, 240' eine Statusübergabe zwischen den Mikrocomputern 58, 60 eingeleitet. Anschließend erfolgt in Programmschritt 242, 242' eine Überprüfung, ob der Status des Mikrocomputers 58 dem des Mikrocomputers 60 entspricht. Sollte der Status nicht übereinstimmen, wird in einem Programmschritt 244, 244' eine Fehlermeldung erzeugt und der Roboter wird in einen sicheren Zustand geschaltet Stimmt der Status überein, wird in einem Programmschritt 246, 246' ein Eingang SYNC POS_1 des Mikrocomputers 58 bzw. ein Eingang SYNC POS_2 des Mikrocomputers 60 überprüft. Liegt an den Eingängen ein Signal nicht an, wird in einem Programmschritt 248, 248' eine Fehlermeldung erzeugt, die anzeigt, dass der Roboter aufgrund eines fehlerhaften Synchronisationsschalters nicht synchron ist. Andererseits wird in einem Programmschritt 250, 250' bei synchronen Robotern der Autobetrieb freigegeben.

In dem hier beschriebenen Ausführungsbeispiel wird die Synchronposition durch den Synchronschalter 32 definiert. Der Synchronschalter 32 kann durch den Roboter 12 beim Erreichen der Synchronposition aktiviert werden oder anderenfalls kann eine Bedienperson die Synchronposition manuell quittieren. Die Synchronposition muss eindeutig sein. Sie darf durch keine andere Winkelkombination der Roboterachsen erreicht werden. Eine Ungenauigkeit eines Sicherheitspositionsschalters von ca. 5 bis 10 mm kann für Personensicherheit akzeptiert werden.

In jedem Fall müssen die Schutztüren 20, 22 während der Fahrt des Roboters auf die Synchronposition bzw. den Synchronschalter geschlossen sein oder anderenfalls muss die Bewegung des Roboters über einen Zustimmungsschalter erfolgen. Erst wenn durch den Programmschritt 250, 250' sicher eine korrekte Synchronisation angezeigt wird, greifen sämtliche Überwachungen. Die Anforderung an den Safety-Controller 38, die Synchronposition zu überwachen, erfolgt über die Robotersteuerung 36 und über den Bus CAN_A, sobald die Robotersteuerung den Roboter auf die Synchronposition positioniert hat.

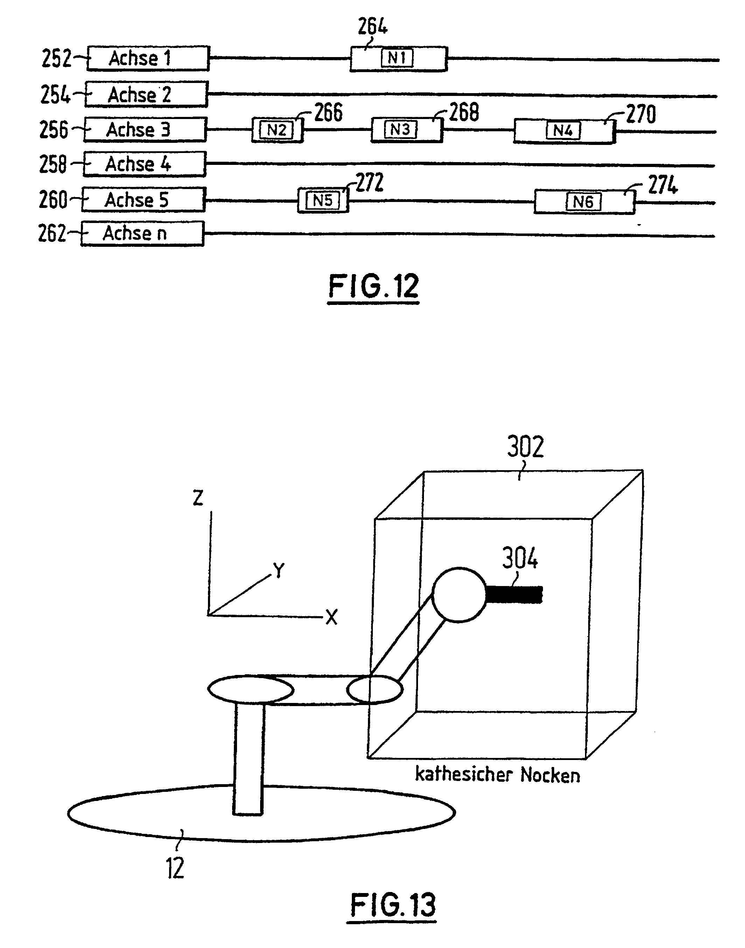

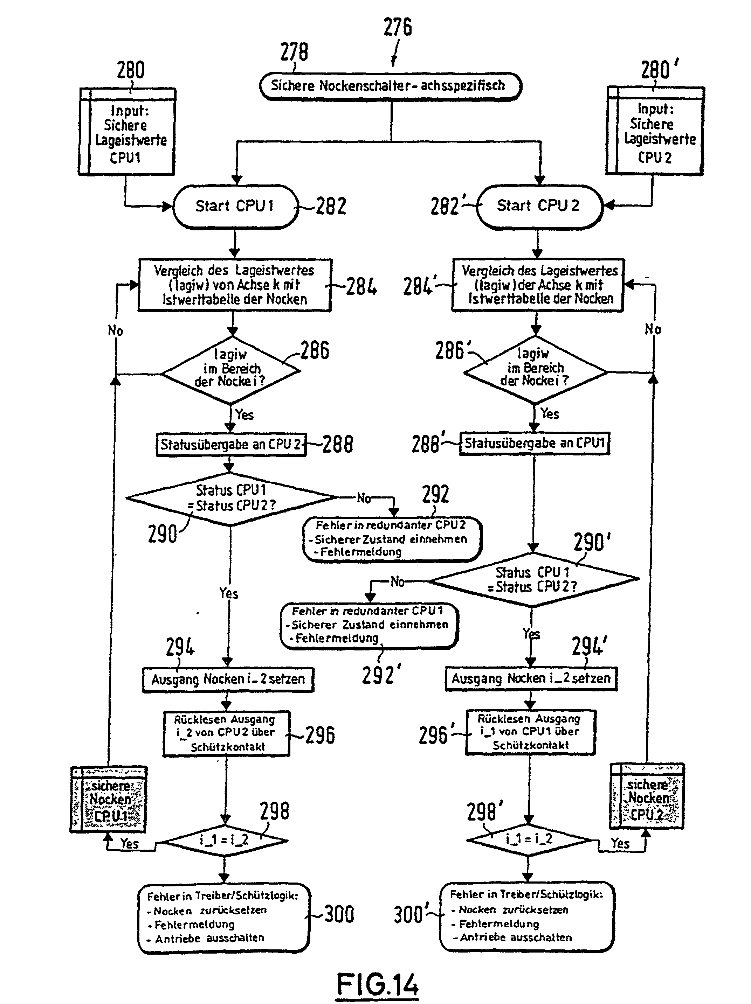

In Fig. 12 sind schematisch Fahrbereiche von Achsen 252 - 262 dargestellt, die in bestimmten Winkelbereichen achsspezifische, programmierbare "elektronische Nocken" 264 - 274 aufweisen. Diese Nocken 264 - 274 gelten nur für die jeweiligen Achsen 252 - 262. Die elektronischen Nocken 264 - 274 der einzelnen Achsen werden durch den Safety-Controller 38 gemäß einem in Fig. 14 dargestellten Ablaufdiagramm 276 permanent überwacht.

In einem Programmschritt 278 werden die achsspezifischen Nocken in eine Istwert-Tabelle eingegeben. Des Weiteren werden in einem Programmschritt 280, 280' den jeweiligen Mikrocomputern 58, 60 die Lage-Istwerte den einzelnen Antriebseinheiten 24 - 30 bzw. den zugehörigen Achsen 252 - 262 zugeführt. Nach dem Programmstart 282, 282' erfolgt ein Vergleich zum Beispiel des Lage-Istwertes der Achse 252 mit einer zugehörigen Werte-Tabelle, in der der Nocken 264 definiert ist. Sollte der Lage-Istwert zum Beispiel der Achse 252 im Bereich des elektronischen Nockens 264 liegen, wird im Programmschritt 286, 286' entschieden, dass im Programmschritt 288, 288' eine Statusübergabe an den Mikrocomputer 58 bzw. den Mikrocomputer 60 erfolgt. Im Programmschritt 290, 290' wird überprüft, ob der Status des Mikrocomputers 58 dem Status des Mikrocomputers 60 und umgekehrt entspricht. Fällt diese Entscheidung negativ aus, wird in einem Programmschritt 292, 292' eine Fehlermeldung erzeugt und der Roboter 12 nimmt einen sicheren Zustand ein. Anderenfalls wird in einem Programmschritt 294, 294' ein dem Nocken 264 zugeordneter erster Ausgang "Nocken 262_1" durch den Mikrocomputer 58 und ein zweiter Ausgang "Nocken 264_2" durch den Mikrocomputer 60 gesetzt. In einem weiteren Programmschritt 296, 296' erfolgt ein kreuzweises Rücklesen der Ausgänge. Sofern die Ausgänge den gleichen Zustand aufweisen, wird in einem Programmschritt 298, 298' ein Signal erzeugt, dass die sichere Nocke erreicht ist; anderenfalls wird in einem Programmschritt 300, 300' eine Fehlermeldung erzeugt, die Nocken werden zurückgesetzt und die Antriebe ausgeschaltet.

Die Anzahl der Ausgänge des Safety-Controllers 38 ist von der jeweiligen Anwendung abhängig. Die elektronischen Nocken der jeweiligen Achsen 252 bis 262 sind vom Anwender frei programmierbar. In Fig. 13 ist das Prinzip einer kartesischen Nocke dargestellt. Eine kartesische Nocke 302 bildet einen räumlichen Bereich vorzugsweise einen Quader innerhalb des Gesamtverfahrbereichs des Roboters 12. Dabei werden Lage-Istwerte durch eine kinematische Transformation auf einen handhabungsgerätespezifischen Punkt 304 wie Roboterflansch bzw. einen TCP (Tool Center Point) verrechnet. Eine entsprechende Transformationsroutine ist in den Mikrocomputern 58 bzw. 60 vorhanden. Aus den empfangenen Lage-Istwerten werden durch Matrizenoperationen kartesische Koordinaten im kartesischen Raum berechnet. In den entsprechenden Matrizen wie z. B. Denavit-Hardenberg-Matrix, wird eine kinematische Kette der Roboterachsen abgebildet, wie z. B. ein Vertikalknick-Roboter oder ein Horizontalschwenkarm-Roboter etc. Diese Matrizen sind für verschiedene Roboter-Kinematiken unterschiedlich. Der Transformationsalgorithmus ist jedoch für alle Kinematiken gleich.

Durch die kartesische Nocke 302 ist eine Überwachung der Roboterachsen 252 - 262 möglich, wobei dann Ausgänge in der Ausgangsebene 92 des Safety-Controllers 38 aktiviert werden, wenn sich der Roboter 12 auf einer definierten Position bzw. innerhalb eines im Raum definierten Bereichs befindet. Falls der Roboter 12 die gewünschte Position nicht erreicht hat oder sich nicht im entsprechenden Bereich befindet, wird der spezifizierte Ausgang deaktiviert.

Die kartesische Nocke 302 kann vom Anwender beliebig programmiert werden. Dabei können mehrere kartesische Nocken programmiert werden. Die Anzahl der Nocken ist durch die maximale Erweiterung an sicheren Ein- und Ausgängen auf dem Safety-Controller 38 festgelegt. Die Berechnung/Festlegung der kartesischen Nocken erfolgt unter Berücksichtigung der Bremswege der jeweiligen Achse. Wie schon erwähnt, können die elektronischen Nocken sowohl für jede Achse einzeln, wie in Fig. 12 dargestellt, als auch für die Summe aller Achsen, wie in Fig. 13 dargestellt, auf kartesischer Basis definiert werden. Die Programmierung der Nocken erfolgt jeweils über Tabellen. Für jede Achse ist eine Tabelle vorgesehen und eine zusätzliche Tabelle für die kartesische Überwachung. In jeder Tabelle können maximal 16 Nocken programmiert werden. In jedem Zyklus wird jede Tabelle durchlaufen, um zu überprüfen, ob sich eine Achse auf einem programmierten Nocken befindet bzw. ob sich die kartesische Position auf einem Nocken befindet. Ist dies der Fall, so wird ein ebenfalls in der Tabelle programmierter Ausgang gesetzt. Das folgende Beispiel soll dies verdeutlichen:

Beispiel:

| Nocken-Tabelle für Achse 1 (analog dazu Achsen 2 ... 24): | | | | |
|---|---|---|---|---|
| Nocken-Nr. | Nocken-Anf. | Nocken-Ende | Ausgang-Nr. | Pegel |
| 1 | 0 Grad | 10 Grad | 10 | 1 |
| 2 | 170 Grad | 180 Grad | 11 | 1 |
| : | 50 mm | 90 mm | : | : |
| : | : | : | : | : |
| 16 | : | : | : | : |

| Nocken-Tabelle für kartesische Überwachung: | | | | |
|---|---|---|---|---|
| Nocken-Nr. | Nocken-Anf. | Nocken-Ende | Ausgang-Nr. | Pegel |
| 1 | X = 10 mm | X = 2000 mm | | |
| | Y = 100 mm | Y = 1900 mm | | |

(fortgesetzt)

| Nocken-Tabelle für kartesische Überwachung: | | | | |
|---|---|---|---|---|
| Nocken-Nr. | Nocken-Anf. | Nocken-Ende | Ausgang-Nr. | Pegel |
|  | Z = 1000 mm | Z = 1500 mm | 10 | 1 |
| 2 | X = 1000 mm | X = 4000 mm |  |  |
|  | Y = 1500 mm | Y = 5000 mm |  |  |
|  | Z = 1200 mm | Z = 1500 mm | 11 | 1 |
| : | : | : | : | : |
| : | : | : | : | : |
| 16 | : | : | : | : |

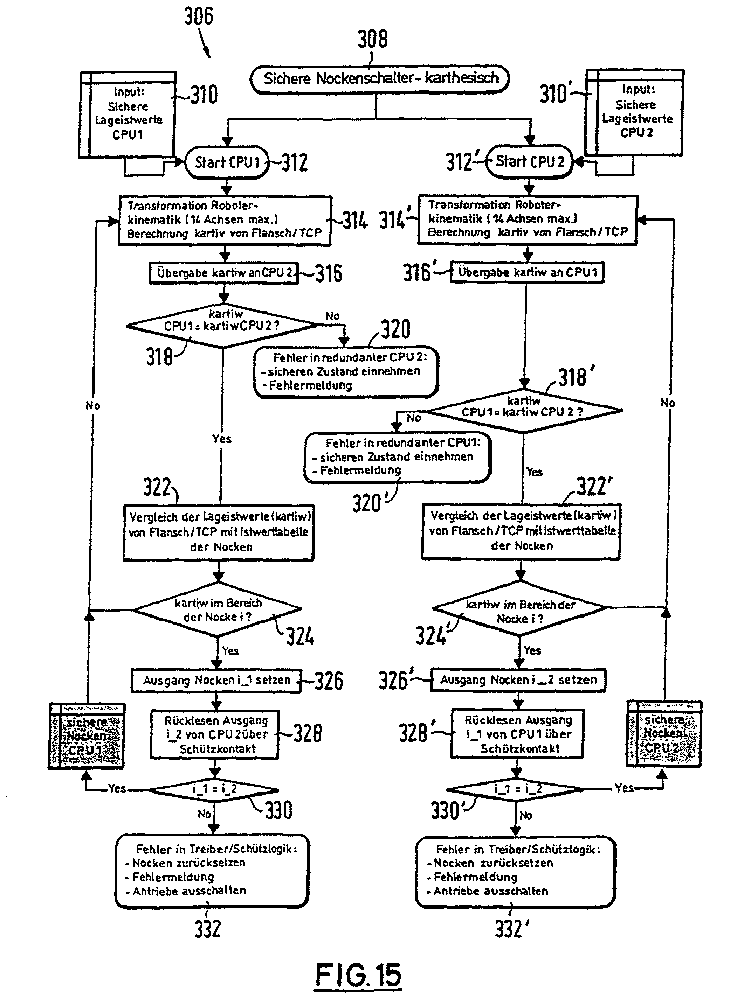

Die Überwachung bzw. Einstellung der kartesischen Nocken wird durch ein Ablaufdiagramm 306 gemäß Fig. 15 beschrieben. Die Werte oder Wertebereiche der sicheren kartesischen Nocken werden in einem Programmschritt 308 den Mikrocomputern 58, 60 mitgeteilt. In den Programmschritten 310, 310' werden den Mikrocomputern die sicheren Lage-Istwerte über die Busse zugeführt. Nach dem Start gemäß Programmschritt 312, 312' werden in einem Programmschritt 314, 314' zunächst die Roboter Kinematik, die insbesondere maximal 2*9=18 Achsen umfassen kann, transformiert und der kartesische Istwert des Punktes 304 wird berechnet. Im Programmschritt 316, 316' wird der berechnete kartesische Istwert des Punktes 304 jeweils dem anderen Mikrocomputer übertragen. Andernfalls erfolgt im Programmschritt 318, 318' ein Vergleich, ob die kartesischen Istwerte der Mikrocomputer 58, 60 übereinstimmen. Unterscheiden sich die kartesischen Istwerte, wird im Programmschritt 320, 320' eine Fehlermeldung erzeugt und der Roboter in einen sicheren Zustand geschaltet. Anschließend erfolgt im Programmschritt 322, 322' ein Vergleich der Lage-Istwerte des TCP mit den in der Tabelle abgespeicherten Istwerten des zugehörigen Nockens. Im Programmschritt 324, 324' wird entschieden, ob die Lage-Istwerte im Bereich der zugeordneten Nocken liegen. Ist dies der Fall, wird im Programmschritt 326, 326' von jedem Mikrocomputer 58, 60 ein der jeweiligen Nocke zugeordneter Ausgang gesetzt. Anderenfalls wird zu Programmschritt 314, 314' übergegangen. Im Programmschritt 328, 328' werden die jeweiligen Ausgänge kreuzweise zurückgelesen. Sind beide Ausgänge gesetzt, wird nach Programmschritt 330, 330' entschieden, dass der sichere Nocken erreicht ist. Sind die Zustände der Ausgänge nicht gleich, wird im Programmschritt 332, 332' eine Fehlermeldung erzeugt, die Nocken werden zurückgesetzt und die Antriebe werden ausgeschaltet.

In einem sogenannten "Einrichtbetrieb" soll der Roboter bzw. ein Roboterflansch mit einer sicher reduzierten Geschwindigkeit verfahren werden. Grundlage der sicher reduzierten Geschwindigkeit sind die sicheren Lage-Istwerte der Achsen 252 bis 262. Die Lage-Istwerte werden in zeitlich gleichen Abständen erfasst und durch eine kinematische Transformation in kartesische Raumkoordinaten umgewandelt und auf den Punkt 304 verrechnet. Aus jeweils zwei transformierten Positionswerten wird durch Differenzieren eine kartesische Geschwindigkeit des Punktes 304 errechnet und mit einer maximal erlaubten Geschwindigkeit verglichen. Bei Überschreiten der erlaubten Maximalgeschwindigkeit wird sofort eine überwachte Funktion wie z. B. "STOP 1" eingeleitet, wobei die Antriebseinheiten 24 bis 30 auf schnellstmögliche Weise stillgesetzt werden, aber die Energiezufuhr zu den Antriebseinheiten beibehalten wird. Nach einschlägiger Norm darf sich der TCP im Einrichtbetrieb mit maximal 250 mm/s bewegen.

Die Überwachungs-software muss zyklisch abgearbeitet werden, wobei eine Zyklusrate (Fehlertoleranzzeit) nicht überschritten werden darf. In einem Abschaltzweig liegen ein Transistortreiber und die Hauptschütze K1, K2, die ebenfalls Abschaltzeiten aufweisen. Die Zykluszeit muss in Abhängigkeit der erreichbaren maximalen Geschwindigkeit in den Betriebsarten EINRICHTEN und AUTOTEST, ungünstiger Achsstellungen, z. B. bei großer Reichweite, der Roboterkinematik und vorgegebener Fehlertoleranzzeit festgelegt werden. Die effektive Stillsetzzeit liegt in der Größenordnung der üblichen kontaktbehafteten Schaltgeräte.

Die Einstellungen der Kinematik, d. h. Definition der kinematischen Kette, Achslängen, Getriebedaten etc. sowie die Einstellungen der maximalen Verfahrgeschwindigkeit (maximal 250 mm/s) erfolgt einmalig in einer Initialisierungsphase beim Hochlaufen der Robotersteuerung 36. Dabei ist sicherzustellen, dass die initialisierten Daten von den Mikrocomputern 58, 60 des Safety-Controllers 38 aufgenommen, sicher abgespeichert und vor schreibendem Zugriff geschützt werden. Die Parameter werden vor Ort mit Hilfe der Robotersteuerung 36 vermessen und berechnet und müssen anschließend von einer Bedienperson verifiziert und bestätigt werden.

Wie zuvor erwähnt, wird die Funktion "STOP 1" für ein geregeltes schnelles Reduzieren der Geschwindigkeit des Punktes 304 wie folgt überwacht: Es findet erfindungsgemäß eine Bremsrampen-Überwachung statt. Bei der kartesischen Bremsrampenüberwachung soll festgestellt werden, ob der Roboter 12 nach Auslösen z. B. einer "STOP-1" bzw. "STOP 2"-Funktion seine Geschwindigkeit verringert. Hierzu werden in zeitlichen Abständen die Drehzahl- bzw. Lage-Istwerte der Achsen eingelesen und kartesisch transformiert. Dadurch werden die kartesischen Raumkoordinaten zum Beispiel des Tool-Center-Points (TCP) bzw. einer Werkzeugspitze für das aktuell eingestellte Werkzeug berechnet. Durch Subtraktion eines kartesischen Datensatzes in einem ersten Abtastzeitpunkt von einem Datensatz in einem zweiten Abtastzeitpunkt ergibt sich ein Differenzvektor. Über eine sich ergebende Zeitdifferenz zwischen zwei Abtastpunkten kann eine kartesische Geschwindigkeit im Raum für die Werkzeugspitze bestimmt werden. Diese errechnete Geschwindigkeit muss nach Erkennen einer "Stop - 1" bzw. "Stop - 2" - Funktion, die z. B. durch eine Stop-Taste oder einen Not-Aus-Schalter ausgelöst wird, geringer werden. Ist dies nicht der Fall, muss eine Funktion "STOP - 0" ausgeführt werden.

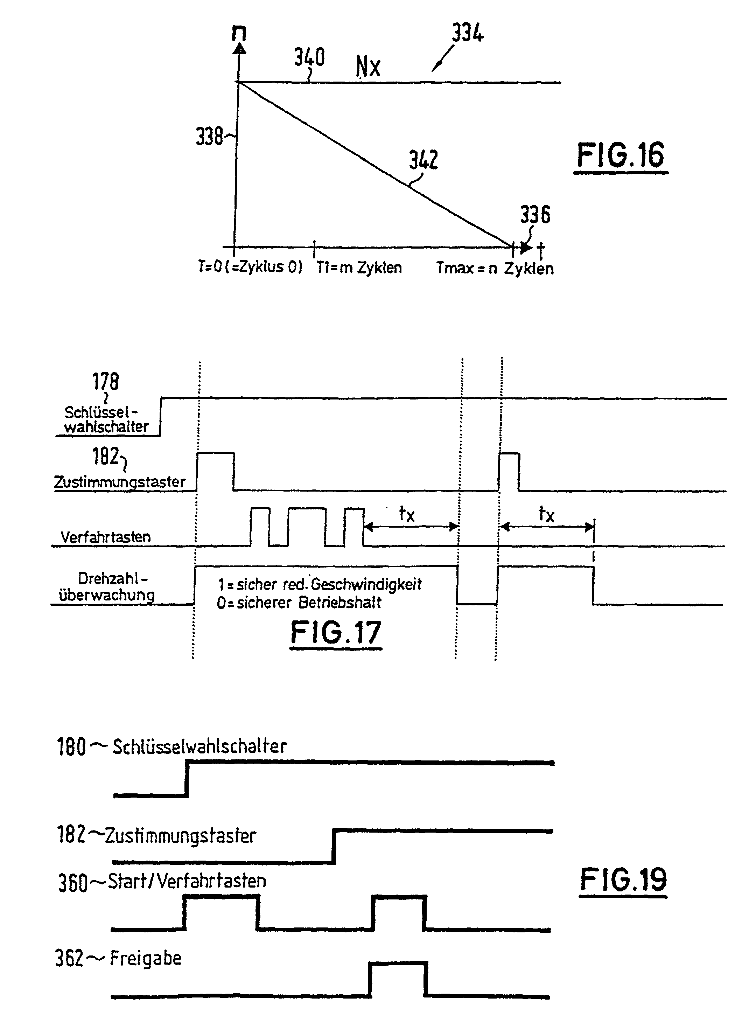

Die Bremsrampen-Überwachung soll mit Hilfe des in Fig. 16 dargestellten Diagramms 334 beschrieben werden. Über die Abszisse 336 ist die Zeit t aufgetragen und über die Ordinate 338 ist die Drehzahl n aufgetragen. Zum Zeitpunkt T0 wird eine Stop-Funktion ausgelöst und eine zu diesem Zeitpunkt gemessene Drehzahl Nx wird abgespeichert. Diese Drehzahl ist in dem Diagramm 334 als Parallele 340 zu der Abszisse 336 dargestellt. T max ist ein Zeitpunkt nach n-Zyklen, nachdem die Hauptschütze K1, K2 zum Abfallen gebracht werden. Die Linie 342 stellt die aktuelle Drehzahl bzw. Geschwindigkeit dar, die zum Zeitpunkt T0 der Drehzahl n = Nx und zum Zeitpunkt Tmax der Geschwindigkeit n = 0 entspricht.

Zum Zeitpunkt T1 wird die aktuelle Drehzahl mit der Anfangsdrehzahl Nx verglichen. Ist die aus den Drehzahlen berechnete kartesische Geschwindigkeit zum Zeitpunkt T1 gleich oder größer als die aus Nx berechnete Anfangsgeschwindigkeit, wird sofort die Funktion "STOP 0" ausgelöst. Ist jedoch die Geschwindigkeit zum Zeitpunkt T1 kleiner als die Anfangsgeschwindigkeit, wird die Funktion "STOP 1" bis zum Zeitpunkt Tmax ausgeführt. Nach dem Zeitpunkt Tmax wird automatisch die Funktion "STOP 0" ausgeführt.

Zum Schutz gegen unerwarteten Anlauf sind die in Fig, 17 dargestellten Maßnahmen vorgesehen. Zunächst wird der Schlüsselwahlschalter 178 in die Stellung "EINRICHTEN" gestellt und alle Verfahrtasten werden auf "nicht-aktiv" überprüft. Zu diesem Zeitpunkt wird auf sicheren Betriebshalt überwacht. Durch einmaliges Betätigen des Zustimmungstasters 182 wird die Überwachung der sicher reduzierten Geschwindigkeit durch den Safety-Controller 38 eingeleitet. Ab diesem Zeitpunkt ist ein Verfahren des Roboters 12 mit den standardmäßigen Verfahrtasten möglich. Steht der Roboter 12 jedoch länger als eine Zeitspanne Tx in Ruhestellung, d. h. dass keine Verfahrtaste betätigt wurde, wird wieder auf sicheren Betriebshalt überwacht. Zum erneuten Verfahren muss der Zustimmungsschalttaster 182 erneut betätigt werden.

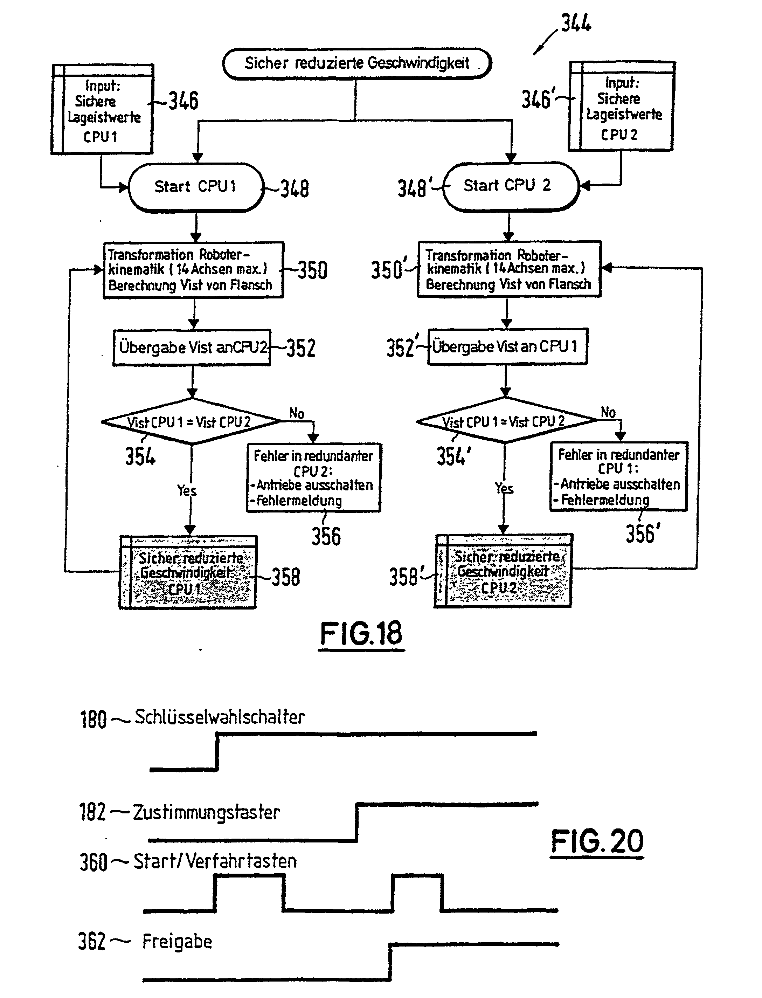

Ein in Fig. 18 dargestelltes Ablaufdiagramm 344 zeigt die Überwachung der sicher reduzierten Geschwindigkeit. In einem ersten Programmschritt 346, 346' werden den Mikrocomputern 58, 60 des Safety-Controllers 38 die sicheren Lage-Istwerte übermittelt. Nach dem Start der Mikrocomputer im Programmschritt 348, 348' werden im Programmschritt 350, 350' die Lage-Istwerte kinematisch transformiert und die Ist-Geschwindigkeit des Punktes bzw. des Roboterflansches 304 wird errechnet. Anschließend wird in einem Programmschritt 352, 352' jeweils die berechnete Ist-Geschwindigkeit von Mikrocomputer 58 an Mikrocomputer 60 übermittelt und umgekehrt. In Programmschritt 354, 354' wird abgefragt, ob die in den Mikrocomputern 58, 60 jeweils berechneten Ist-Geschwindigkeiten identisch sind. Sind die Geschwindigkeiten nicht identisch, wird in einem Programmschritt 356, 356' eine Fehlermeldung erzeugt und die Antriebe werden ausgeschaltet. Anderenfalls ist mit dem Programmschritt 358, 358' die Überprüfung der sicher reduzierten Geschwindigkeit abgeschlossen.

In manchen Anwendungsfällen, wenn der Roboter 12 z. B. Lackieraufgaben ausführen soll, ist es notwendig, den Roboter im Einrichtbetrieb mit seiner betriebsmäßigen Geschwindigkeit zu fahren. Zunächst muss eine Bedienperson über den im Programmierhandgerät 46 integrierten Schlüsselschalter 180 die Betriebsart "AUTO-TEST" auswählen. In einem nächsten Schritt ist es notwendig, den dreistufigen Zustimmungstaster 182 in seine Mittelstellung zu bewegen.

Der Roboter beginnt nun seine Bewegung, d. h., dass ein Freigabe-Signal 362 gesetzt wird, sobald der Start-Verfahrtaster 360 betätigt wird. Wird der Start-Verfahrtaster 360 losgelassen, wird das Freigabesignal 362 zurückgesetzt und der Roboter wird über eine Funktion "STOP 2" stillgesetzt. Die Funktion "STOP 2" bedeutet ein gesteuertes Stillsetzen, bei dem die Energiezufuhr zu den Antriebseinheiten erhalten bleibt.

In einem sogen. "TIPPBETRIEB" löst der Safety-Controller 38 eine Funktion "STOP 1" aus, sobald der Zustimmungstaster 182 bei betätigtem Start-Verfahrtaster 360 seine Mittelstellung verlässt. Wird zunächst der Start-Verfahrtaster 360 losgelassen und anschließend der Zustimmungstaster 182, so wird der Roboter 12 automatisch auf Stillstand, d. h. Funktion "STOP 2" überwacht.

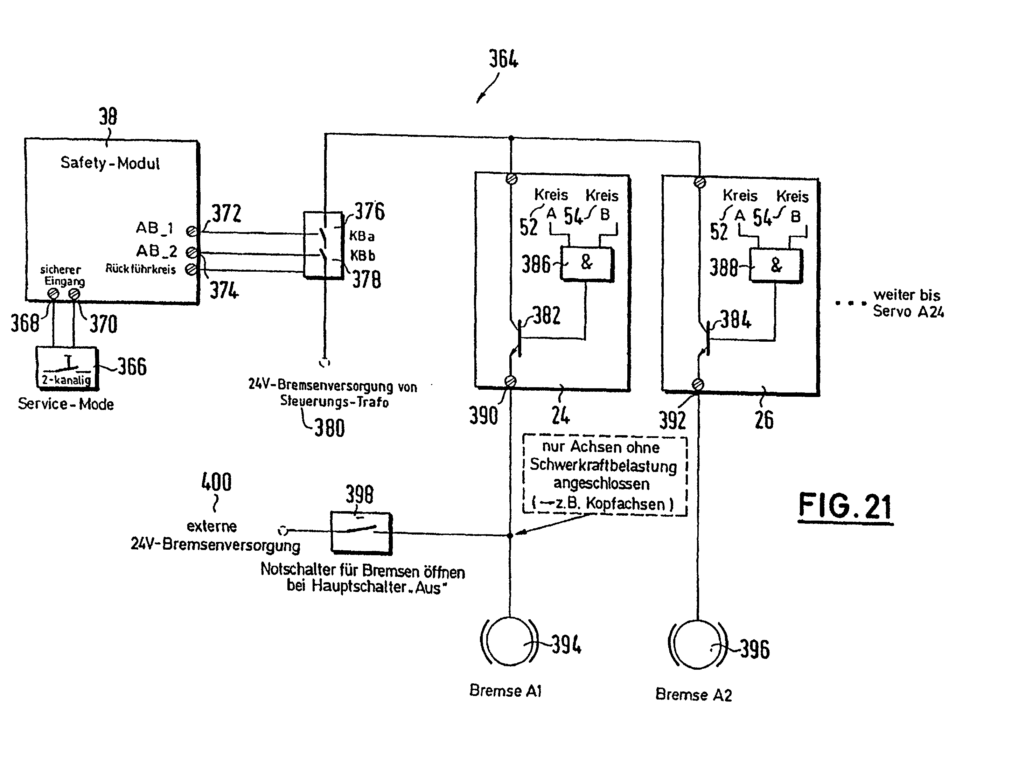

In einem sogen. "PULSBETRIEB", der in Fig. 20 dargestellt ist, ist bei eingeschaltetem Schlüsselwahlschalter 180, betätigtem Zustimmungstaster 182 in Mittelstellung und betätigtem Start-Verfahrtaster 360 ein einmaliges Betätigen des Verfahr-Tasters 360 notwendig, um das Freigabesignal 362 zu schalten.

Des Weiteren kann über den Schlüsselschalter 176 eine Betriebsart "AUTOBETRIEB" ausgewählt werden. Diese Betriebsart kann nur bei geschlossenen Schutztüren 20, 22 ausgeführt werden. Bei dieser Betriebsart werden keine besonderen Anforderungen an den Safety-Controller 38 gestellt.

In Fig. 21 ist eine erfindungsgemäße Bremsensteuerung in einem Prinzipschaltbild 364 dargestellt. Die Bremsensteuerung wird über den Safety-Controller 38 ausgeführt, an dem ein Service-Modul 366 über sichere Eingänge 368, 370 angeschlossen ist. Über sichere Ausgänge 372, 374 werden in Reihe liegende Schützkontakte 376, 380 betätigt, die über einen externen Steuerungstransformator 380 eine 24 V-Bremsenversorgungsspannung an die Antriebseinheiten 24 bis 30 leiten. Die Antriebseinheiten 24 bis 30 weisen jeweils ein elektronisches Schaltelement 382, 384 auf, das über ein Und-Glied 386, 388 mit den redundanten Kreisen bzw. Kanälen 52, 54 der Antriebssteuerung 50 verbunden ist. Ein Ausgang 390, 392 der Antriebseinheiten 24 bis 30 ist mit einer Bremseinrichtung 394, 396 der jeweiligen Antriebseinheiten verbunden. Achsen- bzw. Antriebseinheiten ohne Schwerkraftbelastung sind über einen Notschalter 398 ebenfalls mit einer nicht mit dem Hauptschalter der Steuereinheit geschalteten externen 24 V Bremsenversorgungsspannung 400 verbunden. Über den Notschalter 398 können die angeschlossenen Bremseinrichtungen gelüftet werden, auch wenn die Energieversorgung für die Steuereinheit über den Hauptschalter ausgeschaltet ist Der Leistungsschalter 376, 378 der Bremsenversorgungsspannung ist extern aufgebaut. Dadurch wird die Flexibilität gegenüber der Anzahl und Leitungsaufnahmen der angeschlossenen Motoren bzw. Bremsen erhöht. Bei normaler Betriebsart schalten die Ausgänge 372, 374 parallel zu den Ausgängen zur Ansteuerung der Leitungsschütze K1, K2. Sollte keine andere Betriebsart benötigt werden, können die Schaltelemente 376, 378 Kontakte der Leistungsschütze K1, K2 sein.

Zur Untersuchung der Laufeigenschaften des Roboters, insbesondere von Getrieben oder anderen mechanischen Elementen durch einen Service-Techniker wird der Roboter in eine Betriebsart "SERVICE MODE" geschaltet. Dazu muss zum Beispiel die Bremseinrichtung 394 einer zu untersuchenden Achse manuell gelüftet werden. Im Service-Mode steht der Roboter 12 unter Beobachtung des Service-Technikers. Der Service-Mode kann auf verschiedenen Ebenen (Gefährdungsklassen) aktiviert werden. Einerseits kann der Service-Mode durch Menü-Anwahl im Programmierhandgerät 46 eingestellt werden und andererseits kann eine Freigabe von Energie, zum Beispiel die Leistung für Bremsen, durch Betätigen des an den sicheren Eingängen 368, 370 angeschlossenen Service-Moduls 366 erfolgen.

Für die Betriebsart "SERVICE MODE", d. h. die Bremsen manuell zu lüften, ist folgende Bedienung vorgesehen: Zunächst wird im Programmierhandgerät 46 ein Bedien-Menü angewählt. Es werden einzelne Tasten definiert bzw. freigegeben, mit welchen die einzelnen Haltebremsen 394, 396 gelüftet werden können. Anschließend wird z. B. über einen Schlüsselschalter das Service-Modul 366 an den sicheren Eingängen 368, 370 des Safety-Controllers zur Einstellung des Service-Mode gesetzt. In dieser Konstellation schaltet der Safety-Controller 38 die Bremsleistung über die Schaltkontakte 376, 378 frei. Dabei sind die Bremsen 394, 396 jedoch noch nicht gelüftet. In einem nächsten Schritt kann die Antriebssteuerung 50 innerhalb der Antriebseinheiten 24 bis 30 durch Schalten des internen Bremsschalters 382, 394 die Bremseinrichtungen 394, 396 der zugehörigen Achse lüften. Der Roboter selbst ist in dieser Betriebsart ohne Leistung. Er kann nur manuell oder durch Schwerkraft bewegt werden. Eine Rückkehr in den normalen Betrieb ist nur durch Rücksetzen des "SERVICE MODE" möglich.

Zur Behebung von Produktionsstörungen ist eine Betriebsart "Gruppensteuerung" vorgesehen. Steckt der Schweißroboter 12 zum Beispiel nach einer Stromquellenstörung mit festgebranntem Schweißdraht in einer schwer zugänglichen Stelle des Werkstücks fest, haben sich die Antriebseinheiten 24 bis 30 durch den Fehler abgeschaltet. Ein Verfahren der Roboterachsen im Einrichtbetrieb wäre bei einem ungeübten Bediener gleichbedeutend mit einer erhöhten Kollisionsgefahr. Es ist jedoch schneller und einfacher z. B. an Achsen ohne oder nahezu ohne Schwerkraftbelastung wie Kopfachsen mit einem Befehl über das Programmierhandgerät die Bremseinrichtungen 394, 396 zu lüften und die Achsen manuell in eine übersichtliche Position zu bewegen. Achsen mit einer Schwerkraftbelastung von etwa 6 kg können in dieser Betriebsart gelüftet werden.

Für diese Sonderbetriebsart ist folgende Bedienung vorgesehen: In einem ersten Schritt wird die Gruppe in einen sicherheitsrelevanten Bereich der Maschinendaten abgelegt. In einem zweiten Schritt wird ein Bedien-Menü im Programmierhandgerät angewählt, wobei eine Taste definiert bzw. freigegeben wird, mit der die Gruppe von Haltebremsen im "TIPPBETRIEB" gelüftet werden können. In einem dritten Schritt schaltet der Safety-Controller 38 die Bremsleitung über die Schaltkontakte 376, 378 frei, so dass in einem vierten Schritt Haltebremsen einer Achse durch Schalten des internen Bremsschalters 382, 384 gelüftet werden können.

Auch in dieser Betriebsart ist der Roboter ohne Leistung. Die Achsen mit gelüfteten Bremsen können nur manuell bewegt werden. Die gefährdeten bzw. der Schwerkraft ausgesetzten Achsen sind nicht in die Gruppendefinition aufgenommen. Die nicht freigegebenen Achsen werden während dieser Betriebsart auf Stillstand überwacht. Ein unbeabsichtigtes Schalten zum Beispiel durch einen Defekt des einkanaligen Brernsschalters 382, 384 einer Antriebseinheit 24 - 30, der auch als Servo-Verstärker bezeichnet werden kann, würde auch die Bremse einer schwerkraftbelasteten Achse lüften und die Achse könnte sich bewegen. In diesem Fall schaltet der Safety-Controller 38 die Bremsenleistung ab. Eine Rückkehr in den Normalbetrieb geschieht durch Anwahl der gewünschten Betriebsart "VERFAHREN" durch das Programmierhandgerät. Für eine gesteuerte Roboterbewegung müssen die Antriebe einge-schaltet werden.

Auch besteht die Möglichkeit, über die externe Spannungsversorgung 400 und den Notschalter 398 eine Gruppe von Bremseinrichtungen extern zu lüften. Das externe Lüften von Bremseinrichtungen ist nur für Notfälle vorgesehen. In diesem Fall kann die Robotersteuerung 36 bzw. der Safety-Controller 38 ausgeschaltet sein, wobei jedoch eine externe Hilfsenergie zur Verfügung steht. Durch Betätigen eines leicht zugänglichen Tasters 398 (im Tippbetrieb) werden an allen nicht schwerkraftbelasteten Achsen die Bremseinrichtungen 394 gelüftet. In diesem Zustand kann die Robotermechanik manuell bewegt werden, zum Beispiel zum Befreien einer eingeklemmten Person. Die Auswahl der zulässigen Achsen geschieht durch die interne Schaltschrankverdrahtung, wobei nur die Bremsen an die externe Hilfsenergie 400 angeschlossen werden.

Auch besteht erfindungsgemäß die Möglichkeit, die Bremswirkung der Bremseinrichtungen 394, 396 zu überprüfen. Diese Bremsenprüfung wird bei jedem Einschalten der Antriebe durchgeführt. Zunächst wird ein Hauptschalter eingeschaltet und die Robotersteuerung 36 sowie der Safety-Controller 38 werden hochgefahren. Anschließend werden die Antriebe eingeschaltet und die Bremseinrichtungen 394, 396 gelüftet. Schließlich wird ein Haltestrom $I_H$ der Achsen gemessen, wobei die Roboterachsen unterschiedlich belastet und beliebig im Raum stehen können. Des Weiteren werden die Bremseinrichtungen 394, 396 durch Schaltung der internen Bremsschalter 382, 384 betätigt und ein achsspezifischer Stromwert $I_{Test} = I_H \pm I_{OFFSET}$ wird an die Endstufe abgegeben, mit $I_{OFFSET} = x \cdot I_{NENN}$ und x im Bereich von $0,6 \leq x \leq 1,0$ vorzugsweise 0,8 und $I_{NENN}$ als dem Stromwert, der dem Nennmoment $M_{NENN}$ der Bremseinrichtung entspricht. Als Weiteres werden alle Achsen auf Stillstand überprüft. Bei Bedarf kann der Safety-Controller 38 auf sicheren Betriebshalt prüfen. Dann wird der Offset-Zuschlag vom Stromsollwert zurückgenommen, die Haltebremsen gelüftet und in den Normalbetrieb übergegangen.

Die Nennmomente $M_{NENN}$ der Bremseinrichtungen variieren mit der Baugröße des Motors, so dass diese Information für die Berechnung des Strom-Offsetwertes insbesondere des Wertes $I_{NENN}$ in den Maschinendaten abgelegt sein sollen.

Die Elektronik der Antriebssteuerung 50, die auch als Servo-Verstärker bezeichnet werden kann, wird in Abhängigkeit des Betriebszustandes von verschiedenen Spannungsquellen versorgt. Zunächst weist jede Antriebssteuerung 50 ein Schaltnetzteil auf, mit dem im Betriebszustand Hauptschalter "EIN" und eingeschalteten Antrieben die komplette Elektronik der Motorsteuerung 50 mit Leitungsteilen und aktiver PWM versorgt wird. Ein direkt am Netz liegendes externes Schaltnetzteil versorgt die komplette Elektronik der Motorsteuerung ohne Leistungsteil im Betriebszustand "EIN", aber bei ausgeschalteten Antrieben. Ferner wird durch das externe Schaltnetzteil nur die Resolver-Auswerte-Elektronik versorgt, wenn der Hauptschalter ausgeschaltet ist. Bei Netzausfall wird ebenfalls nur die Resolver-Auswertelogik über einen Akku und ein externes Schaltnetzteil versorgt.

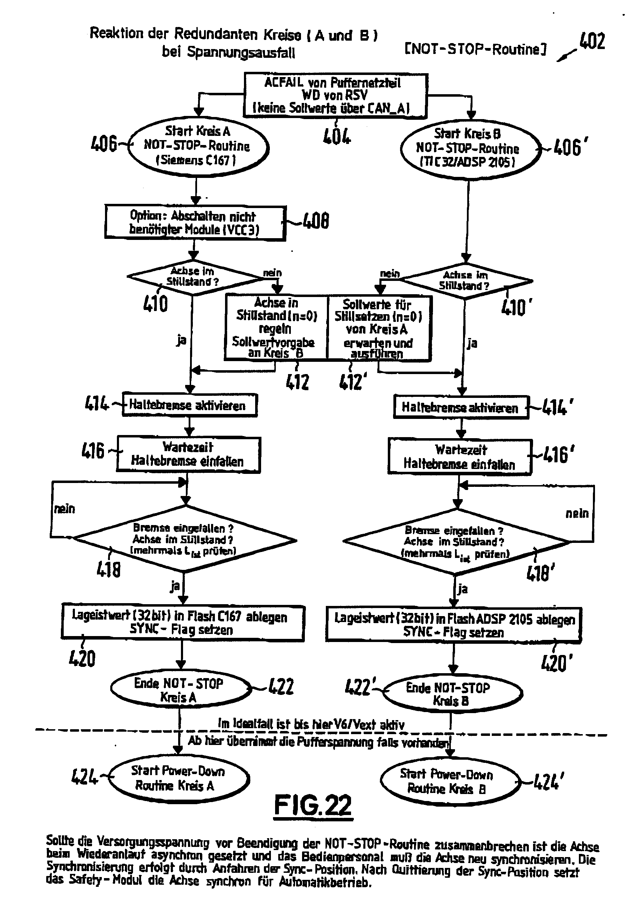

Ein Netzausfall kann in verschiedenen Betriebszuständen auftreten. Dabei geht das System kontinuierlich in den Betriebszustand mit geringster Energie über. In einem Ablaufdiagramm 402 gemäß Fig. 22 ist eine Not-Stop-Routine dargestellt. In einem ersten Programmschritt 404 wird ausgewertet, ob ein Netzausfall durch das Signal ACFAIL oder ein Ausschalten der Robotersteuerung 36 bzw. des Safety-Controllers erkannt wurde. Wurde der Netzausfall oder ein Ausschalten der Robotersteuerung erkannt, startet gemäß Programmschritt 406, 406' eine Not-Stop-Routine sowohl im Kreis 52 als auch im Kreis 554 mit den Mikrocomputern 102, 120. Im Kreis 52 können nicht mehr benötigte Module wie CAN-Interface 56, LED-Anzeigen und andere Module abgeschaltet werden, da die Robotersteuerung 36 und der Safety-Controller 38 in Kürze nicht mehr versorgt werden. Ein Netzausfall wird mit dem Signal ACFAIL des externen Schaltnetzteils der Motorsteuerung erkannt und ein Ausschalten der Steuerung durch Ausbleiben der Sollwerte auf den Bus CAN_A. In einem weiteren Programmschritt 410, 410' wird überprüft, ob sich die Achse im Stillstand befindet. Befindet sich die Achse nicht im Stillstand, wird in einem Programmschritt 412, 412' die Achse zuerst auf Stillstand geregelt. Dazu wird die generatorische Energie der Motoren während des Verzögerns verbraucht. Es werden die Standardkanäle der Lageregelung verwendet. Die programmierte Bahn wird verlassen, da die Robotersteuerung nicht mehr arbeitet. Das Stillsitzen der Achse kann in Abhängigkeit der Roboterkinematik 1 bis 1,5 s andauern.

Die weiteren Programmschritte nach Erreichen des Stillstandes werden in den Kreisen 50, 52 redundant durchgeführt. In einem nächsten Programmschritt 414, 114' wird in beiden Kreisen die Haltebremse aktiviert und in Programmschritt 416, 416' nach einer Wartezeit überprüft, ob die Bremsen eingefallen sind. Dies geschieht durch einen Vergleich im Programmschritt 418, 418' mehrerer Lage-Istwerte, die sich nicht mehr ändern dürfen. Anschließend wird der Lage-Istwert in einem Programmschritt 420, 420', bestehend aus mitgezählten Umdrehungen und dem Resolverwert in ein jeweiliges Systemflag 111, 123 abgelegt. Nach erfolgreichem Schreiben des Lage-Istwertes in das Flag 111, 123 werden die Achsen als synchron markiert. Das heißt, ein Synchron-Flag wird gesetzt. Mit Programmschritt 422, 422' endet die Not-Stop-Routine. Im Normalfall ist bis zu diesem Zeitpunkt das Schaltnetzteil des Leistungsteils aktiv, da Kondensatoren des Zwischenkreises bis zum Stillstand geladen werden. Nach Entladen des Zwischenkreises übernimmt das externe Schaltnetzteil mit Akku-Pufferung die Energieversorgung, indem Programmschritt 424, 424' ausgelöst wird.

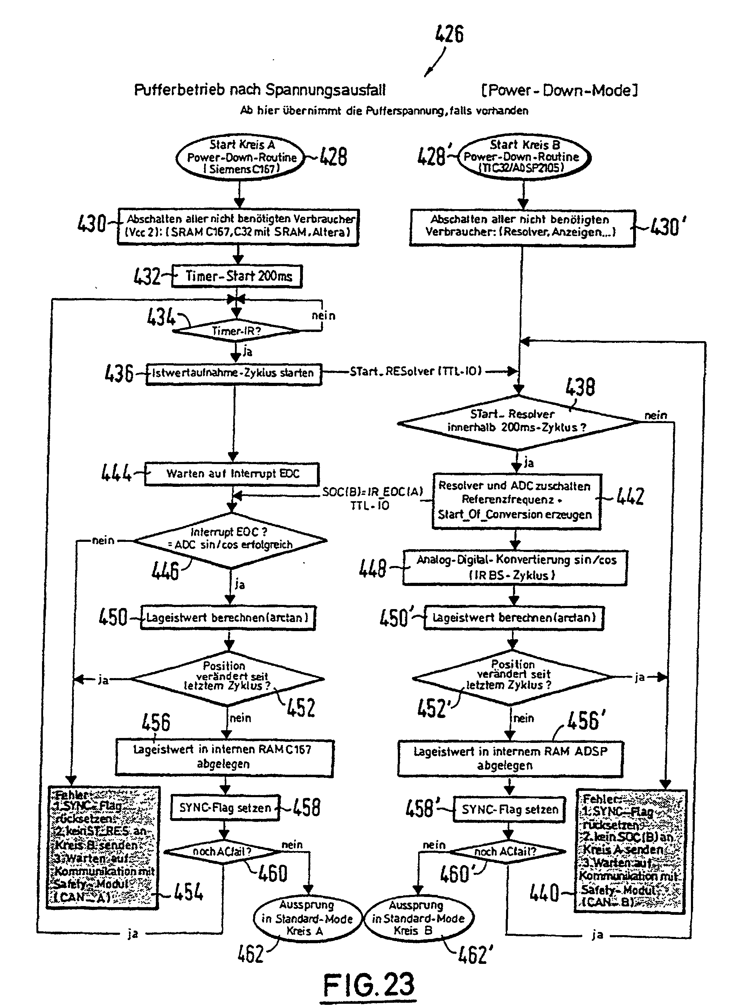

Das Verhalten der Antriebssteuerung 50 im Akku-Betrieb ist einem Ablaufdiagramm 426 gemäß Fig. 23 zu entnehmen. Bei Netzausfall erfolgt die Spannungsversorgung über einen Akku, wobei nur die Resolver-Auswerteelektronik versorgt wird. Dazu werden zur Verlängerung der Pufferzeit nicht mehr benötigte Verbraucher wie SRAM 106 des Mikrocomputers 102, Mikrocomputer 122 und der Teiler 118, DP RAM 130, DP RAM 116 abgeschaltet.

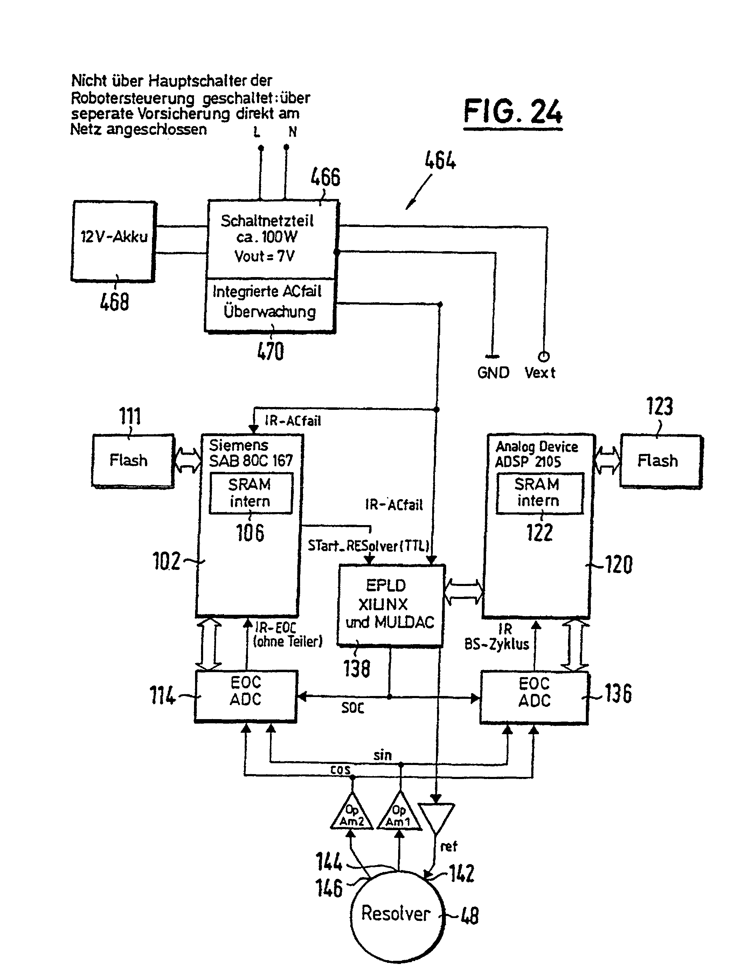

Die verbleibende aktive Hardware ist in Fig. 24 dargestellt. Im Programmschritt 428, 428' wird in den Kreisen 52, 54 der Motorsteuerung die "Power down-Routine" gestartet. Bei Programmschritt 430, 430' werden alle nicht benötigten Verbraucher wie zuvor erwähnt abgeschaltet. Die redundanten Mikrocomputer 102 und 120 arbeiten nur noch im System Flash 111, 123 und im internen SRAM 106, 122. Die Referenzspannung wird zur Verbrauchsminimierung nur im Messintervall aktiviert.

Im Programmschritt 432 wird in Kreis 52, d. h. im Mikrocomputer 102 ein Zeitablauf zur zyklischen Resolver-Auswertung vorgegeben. In Programmschritt 434 wird die Timer-Zeit abgefragt. Alle 200 ms wird in Programmschritt 436 ein Signal "Start-Resolver" erzeugt, über das ein Resolverauswertezyklus in Kreis 54 angefordert wird. Durch Programmschritt 438 im Kreis 54 wird die zyklische Anforderung von Kreis 52 überwacht Detektiert der Programmschritt 438 innerhalb von 200 ms kein Signal "Start-Resolver", wird ein Ausfall von Kreis 52 erkannt und eine Fehlermeldung in Programmschritt 440 erzeugt. Die Achse wird von Kreis 54 asynchron markiert, d. h., das Synchronflag wird zurückgesetzt und auf die Kommunikation mit dem Safety-Controller 38 gewartet.

Bei korrekter zyklischer Anforderung startet Kreis 54 seinen Referenzfrequenz-Generator im Programmschritt 442 und setzt sein Signal SOC (start of conversion) für die Analog-Digitalwandler in den Kreisen 52, 54. In Programmschritt 444 wartet Kreis 52 auf das Signal SOC. Nach erfolgreicher Konvertierung muss das Signal SOC in Programmschritt 446 im Kreis 52 erkannt werden, der die Funktion des Kreises 54 mit identischer Fehlerreaktion überwacht. In Programmschritt 448 startet in Kreis 54 eine Analog-Digitalkonvertierung der Sin-/Cos-Signale. Anschließend erfolgt eine Berechnung der Lage-Istwerte in Programmschritt 450, 450'. Der Lage-Istwert wird in Programmschritt 452, 452' mit dem Lage-Istwert des letzten Zyklus verglichen. Beide Lage-Istwerte müssen gleich sein, d. h. die Achse darf sich nicht bewegen. Sind die Lage-Istwerte nicht identisch, wird in Programmschritt 454 eine Fehlermeldung erzeugt. Wenn in einem Kreis 52, 54 ein Fehler erkannt wird, wird die zyklische Bearbeitung eingestellt. Dadurch wird der redundante Partner ebenfalls in den Fehlerzustand gezwungen. Wird kein Fehler erkannt, legen beide Mikrocomputer 102, 120 in einem Programmschritt 456, 456' den ermittelten Lage-Istwert im jeweiligen prozessorinternen SRAM 106, 122 ab. Sollte bis zu diesem Zeitpunkt kein Fehler aufgetreten sein, wird die Achse als synchron markiert, indem im Programmschritt 458, 458' ein Sync-flag gesetzt wird. Anschließend wird in Programmschritt 460, 460' geprüft, ob das System noch im Powerdown-Modus verbleiben muss. Wenn ja, wird mit Programmschritt 434 bzw. 438 fortgefahren. Wenn nein, wird in den Standard-Mode gemäß Programmschritt 462, 462' übergegangen.

Sobald die Netzspannung wiederkehrt, wird im Falle einer aktiven Akku-Pufferung kein Hardware-Reset durchlaufen. Die in beide Kreisen 52, 54 im prozessorintern SRAM 106, 122 abgelegten Lage-Istwerte und Status-Informationen werden nach Aussprung in Standard-Mode gemäß Programmschritt 462, 462' von beiden Kreisen an den Safety-Controller 38 übertragen. Ist auf beiden Seiten kein Fehler aufgetreten und sind beide Lage-Istwerte identisch, wird die Achse mit Absolutwert von dem Safety-Controller synchron gesetzt und in den Automatik-Betrieb freigegeben. Ist keine Akku-Pufferung aktiv oder bricht die Puffer-Spannung zusammen, z. B. wenn der Akku entladen ist, wird nach dem Wiederanlauf auf die im Flash abgelegten Lage-Istwerte zurückgegriffen und gegenseitig verglichen. Die Achse wird erst nach erfolgreichem Anfahren der Synchronposition von dem Safety-Controller mit Absolutwerten synchron gesetzt.

In Fig. 24 ist ein Prinzipschaltbild 464 dargestellt, das die im Power-down-Mode aktive Hardware zeigt. Im Power-down-Mode ist nur die Resolver-Auswerteelektronik aktiv. Diese besteht aus dem Resolver, den Analog-Digitalwandlern 114, 136, dem Referenzwertgeber 138 und dem Mikrocomputer 102, 122 mit zugeordnetem Flash 111, 123, Bei ausgeschaltetem Hauptschalter liegt ein externes Schaltnetzteil 466 direkt an Netzspannung, ohne dass es über den Hauptschalter der Robotersteuerung schaltbar ist. Das Schaltnetzteil 466 ist mit einem Akku 468 verbunden, der bei Netzausfall die Resolver-Auswerteelektronik mit Spannung versorgt. Das Schaltnetzteil 466 wird über eine integrierte ACFAIL-Überwachung 470 überwacht. Bei Spannungsausfall wird ein Signal IR-ACFAIL erzeugt, das dem Mikrocomputer 102 und dem Steuerwerk 138 zugeführt wird. Der weitere Ablauf ist dem Ablaufdiagramm gemäß Fig. 22 zu entnehmen.

Bei Spannungsabfall wird in jedem Kreis 52, 54 durch ein separates Supervisor-IC (nicht dargestellt) ein Hardware-Reset ausgelöst. Danach werden beide Kreise 52, 54 neu gebootet und initialisiert, wodurch die gespeicherten Statusinformationen im internen SRAM 106, 122 gelöscht werden. Die in dem jeweiligen Systemflash 111, 123 abgelegten Lage-Istwerte und das Synchron-Flag werden über den jeweiligen CAN_B-Bus an den Safety-Controller 38 übertragen. In dem Safety-Controller 38 wird entschieden, ob die Lage-Istwerte von beiden Kreisen 52, 54 gleich sind und ob das Synchron-Flag in beiden Kreisen gesetzt ist. Daraufhin werden die Achsen von der Robotersteuerung 36 auf die Synchronposition gefahren, anschließend setzt der Safety-Controller 38 eine Freigabe für den Automatikbetrieb, wenn der Sync Pos-Eingang bei korrekten Achs-Istwerten bekannt wurde.

Sind die Lage-Istwerte der beiden Kreise 52, 54 unterschiedlich oder ist das Synchron-Flag nicht gesetzt, sind die Achsen asynchron und müssen von einer Bedienperson synchronisiert werden. Dazu werden die Achsen ebenfalls von der Robotersteuerung auf die Synchronposition gefahren, anschließend setzt der Safety-Controller 38 die Freigabe für den Automatikbetrieb, wenn der Sync Pos-Eingang bei korrekten Achs-Istwerten bekannt wurde.

Bei Akku-Pufferung wird bei Wiederkehr des Netzes kein Hardware-Reset durchgeführt. Die abgelegten Status-Informationen (synchron/ asynchron) und der Lage-Istwert in den jeweiligen internen SRAM's 106, 122 werden von beiden Kreisen an den Safety-Controller 38 übertragen. Im Safety-Controller wird verglichen, ob die Lage-Istwerte von beiden Kreisen 52, 54 gleich und ein Synchron-Flag in beiden Kreisen gesetzt wurde. Ist dies der Fall, setzt der Safety-Controller 38 eine Freigabe für Automatikbetrieb, wobei die Synchronposition nicht angefahren werden muss. Sind die Lage-Istwerte von beiden Kreisen unterschiedlich oder wurde der Synchron-Flag nicht gesetzt, sind die Achsen asynchron und müssen von einer Bedienperson synchronisiert werden. Dazu werden die Achsen von der Robotersteuerung 36 auf die Synchron-Position gefahren. Anschließend setzt der Safety-Controller 38 seine Freigabe fiir den Automatik-Betrieb, wenn der Sync Pos - Eingang bei korrekten Achsistwerten erkannt wurde.

**Patentansprüche**

1. Überwachungs- und Steuergerät (38) zur Überwachung einer zumindest eine portable und/oder mobile und/oder immobile Einrichtung umfassenden technischen Anlage (10) mit erhöhten Sicherheitsanforderungen, insbesondere eines in einer Schutzeinricbtung angeordneten Handhabungsgerätes, mit zumindest einer vorzugsweise zentralen und/oder dezentralen Steuereinheit (36) sowie mit dieser verbundene Aktoren (24 - 30; K1, K2) zur Ausführung von gefahrbringenden Aktionen, wobei das Überwachungsund Steuergerät (38) mit Sensoren (20, 22) und/ oder Aktoren (24 - 30) verbunden ist und deren Zustände auswertet, verarbeitet und steuert,
   **dadurch gekennzeichnet,**
   **dass** die Steuereinheit (36) über zumindest eine Datenverbindung mit dem zumindest einen Aktor (24 - 30) und/ oder Sensor (20, 22) und dem Überwachungs- und Steuergerät (38) verbunden ist, dass das Überwachungs- und Steuergerät (38) in Abhängigkeit der Zustände der Sensoren (20, 22) und/oder Aktoren (24 - 30) zumindest ein Freigabesignal an die Steuereinheit zur Ermöglichung zumindest einer Aktion in der technischen Anlage (10) überträgt, dass das Freigabesignal eine Aktion auslöst, die durch das Steuer- und Überwachungsgerät (38) durch Vergleich mit gespeicherten und/oder vorgegebenen Ausführungs- und/oder Funktions- und/oder Plausibilitätsvorgaben bzw. Bewegungsabläufen überwacht wird, und dass im Fehlerfall zumindest ein weiteres Signal erzeugt wird, durch das die Anlage in einen sicheren Zustand überführt wird.

2. Überwachungs- und Steuergerät nach Anspruch 1,
   **dadurch gekennzeichnet,**
   **dass** der Aktor (24 - 30; K1, K2) und/oder der Sensor (20, 22) als eine die technische Anlage (10) in den sicheren Zustand überführende Sicherheitseinrichtung (14)
   ausgebildet ist.

3. Überwachungs- und Steuergerät nach Anspruch 1 oder 2,
   **dadurch gekennzeichnet,**
   **dass** der Aktor (24 - 30) insbesondere eine Antriebseinheit (24 - 30) mit zugehöriger Antriebssteuerung (50), ein Leistungsschütz (K1, K2), ein Relais oder ein Ventil umfasst.

4. Überwachungs- und Steuergerät nach zumindest einem der vorhergehenden Ansprüche,
   **dadurch gekennzeichnet,**
   **dass** die Aktion ein Bewegungsablauf ist.

5. Überwachungs- und Steuergerät nach zumindest einem der vorhergehenden Ansprüche,
   **dadurch** gekennzeichne t,
   dass die Datenverbindung eine serielle Busleitung (CAN_A) ist.

6. Überwachungs- und Steuergerät nach zumindest einem der vorhergehenden Ansprüche,
   **dadurch gekennzeichnet,**
   **dass** die Steuereinheit (36) und das Überwachungs- und Steuergerät (38) physisch separate Einrichtungen sind.

7. Überwachungs- und Steuergerät nach zumindest einem der vorhergehenden Ansprüche,
   **dadurch gekennzeichnet,**
   **dass** von der Steuereinheit (36) fortlaufend oder einmalig ein Lage-Sollwert-Signal an die zumindest eine angeschlossene Antriebssteuerung (50) und/oder an das Überwachungs- und Steuergerät und von der zumindest einen Antriebssteuerung (50) Lage-Istwert-Signale zumindest an die Steuereinheit (36), vorzugsweise sowohl an die Steuereinheit (36) als auch an das Überwachungs- und Steuergerät (38) übertragen werden, dass die Lage-Istwert-Signale jeder Antriebssteuerung (50) mit in dem Überwachungsund Steuergerät (38) abgespeicherten und vorzugsweise von der Steuereinheit (36) übertragenen antriebsspezifischen Werten und/oder Wertebereichen verglichen werden und dass bei Verlassen des jeweiligen Wertes und/oder Wertebereiches das weitere Signal erzeugt wird.

8.  Überwachungs- und Steuergerät nach zumindest seinem der vorhergehenden Ansprüche,
    **dadurch gekennzeichnet,**
    **dass** das Überwachungs- und Steuergerät (38) zur Auswertung elektromechanischer Sicherheitsschalter (366) und zur Ansteuerung externer Schaltgeräte (376, 378) eine zweikanalige Ausgangs- und Eingangsebene (66) mit kreuzweisem Datenvergleich aufweist und/oder dass zumindest ein weiterer Busanschluss (72) vorgesehen ist, um das Überwachungs- und Steuergerät (38) in einen übergeordneten Sicherheitsbus zu integrieren.

9.  Überwachungs- und Steuergerät nach zumindest einem der vorhergehenden Ansprüche,
    **dadurch gekennzeichnet,**
    **dass** das Überwachungs- und Steuergerät (38) zwei Kanäle mit jeweils zumindest einem Mikrocontroller (102, 120) aufweist, wobei jeder Mikrocontroller (102, 120) über einen Buscontroller (56, 58) mit der Busleitung (CAN_A, CAN_B) verbunden. ist.

10. Überwachungs- und Steuergerät nach zumindest einem der vorhergehenden Ansprüche,
    dadurch geke nnzeichne t,
    dass die Mikrocontroller (102, 120) über eine Verbindung (80) zum gegenseitigen Datenaustausch miteinander verbunden sind.

11. Überwachungs- und Steuergerät nach zumindest einem der vorhergehenden Ansprüche,
    **dadurch gekennzeichnet,**
    **dass** die von den Antriebssteuerungen (50) übertragenen Lage-Istwerte mit einem Identifier deklariert werden und dass bei Empfang dieser Identifier in jedem Mikrocontroller (102, 120) des Überwachungs- und Steuergerätes ein Interrupt ausgelöst wird und dass das Überwachungs- und Steuergerät für sicherheitsrelevante. Daten wie Lage-Istwerte, Sensor- und/oder Aktorsignale eine Zeiterwartungshaltung aufweist.

12. Überwachungs- und Steuergerät nach zumindest einem der vorhergehenden Ansprüche, dadurch geke nnzeichne t,
    dass jedem Wert und/oder Wertebereich zumindest ein sicherheitsgerichteter Ausgang und/oder Eingang (92, 94) des Überwachungs- und Steuergerätes (38) zugeordnet ist, wobei die Ausgänge und/oder Eingänge mit passiven und/oder aktiven Schaltelementen (96, 98) (Sensoren und/oder Aktoren) wie elektromechanischen Sicherheitsschaltern oder Leistungsschützen und Relais verknüpft sind.

13. Überwachungs- und Steuergerät nach zumindest einem der vorhergehenden Ansprüche,
    **dadurch gekennzeichnet,**
    **dass** die Steuereinheit (36) Lage-Sollwert-Informationen zum Anfahren definierter Positionen wie Safe-Position, Sync-Position an die zumindest eine Antriebseinheit (24 - 30) und das Überwachungs- und Steuergerät (30) überträgt, wobei den definierten. Positionen antriebsspezifische Werte zugeordnet sind, die zu dem Überwachungs- und Steuergerät (38) übertragen und mit den ermittelten Lage-Istwerten der Antriebseinheiten (24 - 30) verglichen und überwacht werden.

14. Überwachungs- und Steuergerät nach zumindest einem der vorhergehenden Ansprüche,
    dadurch geke nnzeichne t,
    dass bezüglich einer Antriebseinheit (24 - 30) bzw. einer Antriebsachse eine Vielzahl von Wertebereichen definiert sind, die antriebsspezifisch von dem Überwachungs- und Steuergerät (38) überwacht werden, wobei jedem Wert und/oder Wertebereich ein oder mehrere Ausgänge des Überwachungs- und Steuergerätes (38) zugeordnet sind.

15. Überwachungs- und Steuergerät nach zumindest einem der vorhergehenden Ansprüche,
    dadurch geke nnzeichne t,
    dass die Werte und/oder Wertebereiche antriebsspezifisch programmierbar sind und dass jedem Wert und/oder Wertebereich Ausgänge zugeordnet sind.

16. Überwachungs- und Steuergerät nach zumindest einem der vorhergehenden Ansprüche,
    **dadurch gekennzeichnet,**
    **dass** die Lage-Istwerte einzelner Antriebseinheiten (24 - 30) in dem Überwachungsund Steuergerät (38) und/oder der Steuereinheit (36) durch eine vorzugsweise kinematikspezifische Transformation auf einen handhabungsgerätespezifischen Punkt (304) wie Roboterflansch bzw. Tool-Center-Point (TCP) verrechnet werden und dass kartesische Wertebereiche für n-dimensionale Bewegung mit insbesondere n = 3 in einer Tabelle abgespeichert sind, wobei jeder Wertebereich zumindest einem Ausgang des Überwachungs- und Steuergerätes (38) zugeordnet ist.

**17.** Überwachungs- und Steuergerät nach zumindest einem der vorhergehenden Ansprüche,
**dadurch gekennzeichnet,**
**dass** die n-dimensionalen mit insbesondere n=2 oder n=3 in den Tabellen abgelegten Wertebereiche bei jedem Zyklus mit den empfangenen und transformierten Lage-Istwerten verglichen werden.

**18.** Überwachungs- und Steuergerät nach zumindest einem der vorhergehenden Ansprüche,
**dadurch gekennzeichnet,**
**dass** die Lage-Istwerte sämtlicher Antriebseinheiten (24 - 30) ermittelt und durch eine kinematik-spezifische Transformation auf den handhabungsgerätespezifischen Punkt (304) errechnet werden und dass aus zumindest zwei transformierten Positionswerten durch Differenzieren die kartesische Geschwindigkeit des Punktes (304) errechnet und mit einer vorgegebenen maximalen Geschwindigkeit verglichen wird.

**19.** Überwachungs- und Steuergerät nach zumindest einem der vorhergehenden Ansprüche,
**dadurch gekennzeichnet,**
**dass** eine Überwachung der Geschwindigkeit zyklisch erfolgt.

**20.** Überwachungs- und Steuergerät nach zumindest einem der vorhergehenden Ansprüche,
**dadurch gekennzeichnet,**
**dass** nach Auslösung des weiteren Signals eine kartesische Anfangsgeschwindigkeit $V_{Anfang}$ des Punktes (304) ermittelt und gespeichert wird, dass nach einer Zeitspanne $\Delta T$ die aktuelle Geschwindigkeit $V_{akt}$ ermittelt und mit der Anfangsgeschwindigkeit $V_{Anfang}$ verglichen wird, wobei dann, wenn die aktuelle Geschwindigkeit $V_{akt}$ nach der Zeitspanne $\Delta T$ gleich oder größer der Anfangsgeschwindigeit $V_{Anfang}$ ist, die Anlage sofort in den sicheren Zustand überführt wird.

**21.** Verfahren zum sicherheitsgerichteten Überwachen zumindest einer Achse einer Antriebseinheit, insbesondere zur Überwachung einer zumindest eine portable und/oder mobile und/oder immobile Einrichtung umfassenden technischen Anlage (10) mit erhöhten Sicherheitsanforderungen, insbesondere eines in einer Schutzeinrichtung angeordneten Handhabungsgerätes, umfassend zumindest eine vorzugsweise zentrale und/oder dezentrale Steuereinheit (36) sowie mit dieser verbundene Aktoren (24 - 30; K1, K2) zur Ausführung von gefahrbringenden Aktionen, unter Verwendung eines Über-wachungs- und Steuergerätes nach zumindest Anspruch 1,
**dadurch gekennzeichnet,**
**dass** ein Lage-Istwertsignal der zumindest einen Achse einkanalig erfasst und zweikanalig ausgewertet wird.

**22.** Verfahren nach Anspruch 21,
**dadurch gekennzeichnet, dass** das Lage-Istwertsignal aus zwei zueinander phasenverschobenen periodischen Signalen gebildet wird, dass die Summe von Potenzen von Amplituden der Signale gebildet und mit einem in einem Wertebereich liegenden Wert verglichen wird, und dass ein Fehlersignal erzeugt wird, wenn die Summe nicht innerhalb des vorgegebenen Wertebereichs liegt.

**23.** Verfahren nach Anspruch 21 oder 22,
**dadurch gekennzeichnet, dass**
wobei das Lage-Istwertsignal aus den zwei zueinander phasenverschobenen periodischen Signalen gebildet wird, dass in jedem Kanal die Summe der Amplitudenquadrate gebildet und mit einem konstanten oder einem in dem Wertebereich liegenden Wert verglichen wird, dass ein Fehlersignal erzeugt wird, wenn die Summe nicht dem vorgegebenen Wert entspricht bzw. nicht innerhalb des Wertebereichs ist, und dass das Lage-Istwertsignal dem weiteren zweikanaligen Überwachungs- und Steuergerät (38) zugeführt wird, das die in jedem Kanal gebildeten Summen der Amplitudenquadrate miteinander und /oder mit dem konstanten Wert bzw. in dem Wertebereich liegenden Wert vergleicht.

**24.** Verfahren nach einem der Ansprüche 21 bis 23,
**dadurch gekennzeichnet,**
**dass** eine Plausibilitätsprüfung der Lage-Istwert-Signale durchgeführt wird, wobei geprüft wird, ob die Summe der Quadrate der Ausgangsamplituden einem vorgegebenen Wert x entspricht, mit x im Bereich von $0,9 \leq x \leq 1,1$ vorzugsweise $x = 1 = . (\sin \varphi)^2 + (\cos \varphi)^2$.

**25.** Verfahren nach zumindest einem der 21-24, Ansprüche
**dadurch gekennzeichnet,**
**dass** ein richtungsabhängiges Signal eines Drehzahl- bzw. Lage-Sollwertes erzeugt und mit einem richtungsabhängigen Signal des Drehzahl- bzw. Lage-Istwertes vorzugsweise zweikanalig verglichen wird und dass die vorzugsweise zweikanalig erzeugten Werte dem Überwachungs- und Steuergerät (38) zugeführt und dort miteinander verglichen werden.

**26.** Verfahren nach zumindest einem der Ansprüche 21-25,
**dadurch gekennzeichnet,**
**dass** zwischen den Kanälen (52, 54), vorzugsweise zwischen den Mikrocomputern, ein interner Kreuzvergleich der erfassten Istwerte durchgeführt wird und dass im Fehlerfall eine Impulssperre erzeugt wird.

**27.** Verfahren nach zumindest einem der Ansprüche 21-26,
**dadurch gekennzeichnet,**
**dass** bei fehlender üblicher Energieversorgung der Antriebseinheiten (24 - 30) (Power-Down-Modus) eine Stillstandsüberwachung durchgeführt wird, wobei in jedem Kanal (52, 54) die Istwert-Signale überwacht werden und bei Veränderung der Istwert-Signale über eine eingestellte Toleranzgrenze hinaus ein "Marker" gesetzt wird, der nach Wiedereinschalten der üblichen Energieversorgung in das Überwachungs- und Steuergerät (38) übertragen und mit abgespeicherten Sollwerten verglichen wird.

**Claims**

**1.** Monitoring and control device (38) for monitoring a technical system (10) with enhanced safety requirements that comprises at least one portable and/or mobile and/or immobile device, in particular a handling device arranged in a protective device, with at least one preferably central and/or decentralized control unit (36) as well as actuators (24-30; K1, K2) connected to it for executing dangerous operations, whereby the monitoring and control device (38) is connected to sensors (20, 22) and/or actuators (24-30) and evaluates, processes and controls their status,
**characterized in**
**that** the control unit (36) is connected to the at least one actuator (24-30) and/or sensor (20, 22) and the monitoring and control device (38) via at least one data circuit, that the monitoring and control device (38) transmits at least one release signal to the control unit in dependence on the status of the sensors (20, 22) and/or actuators (24-30) in order to enable at least one operation in the technical system (10), that the release signal triggers an operation, which is monitored by the monitoring and control device (38) by comparing it with stored and/or specified execution and/or function and/or plausibility specifications or processes of movements, and that in case of an error at least one other signal is generated, which transfers the system into a safe condition.

**2.** Monitoring and control device in accordance with Claim 1,
**characterized in**
**that** the actuator (24-30; K1, K2) and/or the sensor (20, 22) is designed as a safety device (14) that transfers the technical system (10) into a safe status.

**3.** Monitoring and control device in accordance with Claim 1 or 2,
**characterized in**
**that** the actuator (24-30) includes in particular a drive unit (24-30) with appropriate drive control (50), a contactor (Kl, K2), a relay or a valve.

**4.** Monitoring and control device in accordance with at least one of the previous claims,
**characterized in**
**that** the operation comprises a process of movements.

**5.** Monitoring and control device in accordance with at least one of the previous claims,
**characterized in**
**that** the data circuit comprise a serial bus line (CAN_A).

**6.** Monitoring and control device in accordance with at least one of the previous claims,
**characterized in**
**that** the control unit (36) and the monitoring and control device (38) are physically separate devices.

7. Monitoring and control device in accordance with at least one of the previous claims, **characterized in that** from the control unit (36) a target status value signal is transmitted continuously or once to the at least one connected drive control (50) and/or to the monitoring and control device and that from the at least one drive control (50) actual status value signals are transmitted at least to the control unit (36), preferably to both the control unit (36) and the monitoring and control device (38), that the actual status value signals of every drive control (50) are compared to the drive-specific values and/or value ranges that have been stored in the monitoring and control device (38) and preferably been transferred by the control unit (36), and that upon deviation from the respective value and/or value range the other signal is generated.

8. Monitoring and control device in accordance with at least one of the previous claims, **characterized in that** the monitoring and control device (38) is equipped with a two-channel output and input level (66) with crosswise data comparison for evaluating electromechanical safety switches (366) and for addressing external switching devices (376, 378) and/or that at least one additional bus connection (72) is provided in order to integrate the monitoring and control device (38) into a higher-ranking safety bus.

9. Monitoring and control device in accordance with at least one of the previous claims, **characterized in that** the monitoring and control device (38) is equipped with two channels, each with at least one microcontroller (102, 120), with each microcontroller (102, 120) being connected to the bus line (CAN_A, CAN_B) via a bus controller (56, 58).

10. Monitoring and control device in accordance with at least one of the previous claims, **characterized in that** the microcontrollers (102, 120) are connected to each other via a connection (80) for mutual data exchange purposes.

11. Monitoring and control device in accordance with at least one of the previous claims, **characterized in that** the actual status values transmitted by the drive controls (50) are declared with an identifier and that upon receipt of these identifiers an interrupt is triggered in each microcontroller (102, 120) of the monitoring and control device, and that the monitoring and control device is equipped with a time expectancy device for safety-related data such as actual status values, sensors and/or actuator signals.

12. Monitoring and control device in accordance with at least one of the previous claims, **characterized in that** each value and/or value range is assigned at least one safety-related output and/or input (92, 94) of the monitoring and control device (38), with the outputs and/or inputs being connected to passive and/or active switching elements (96, 98) (sensors and/or actuators) such as electromechanical safety switches or contactors and relays.

13. Monitoring and control device in accordance with at least one of the previous claims, **characterized in that** the control unit (36) transmits target status value information for assuming defined positions such as safe position, sync position to the at least one drive unit (24-30) and to the monitoring and control device (30), with the defined positions being assigned drive-specific values that are transmitted to the monitoring and control device (38) and compared to the measured actual status values of the drive units (24-30) and monitored.

14. Monitoring and control device in accordance with at least one of the previous claims, **characterized in that** with regard to a drive unit (24-30) or drive axis a variety of value ranges is defined, which are monitored by the monitoring and control device (38) in a drive-specific manner, with each value and/or value range being assigned one or more outputs of the monitoring and control device (38).

15. Monitoring and control device in accordance with at least one of the previous claims, **characterized in that** the values and/or value ranges can be programmed in a drive-specific manner and that outputs are assigned to each value and/or value range.

**16.** Monitoring and control device in accordance with at least one of the previous claims,
**characterized in**
**that** the actual status values of individual drive units (24-30) are calculated in the monitoring and control device (38) and/or the control unit (36) through a preferably kinematic-specific transformation to a handling device specific point (304) such as robot flange or tool center point (TCP) and that Cartesian value ranges are stored in a table for n-dimensional movement, particularly with n = 3, with every value range being assigned at least one output of the monitoring and control device (38).

**17.** Monitoring and control device in accordance with at least one of the previous claims,
**characterized in**
**that** the n-dimensional, particularly with n = 2 or n = 3, value ranges stored in the tables are compared with the received and transformed actual status values during every cycle.

**18.** Monitoring and control device in accordance with at least one of the previous claims,
**characterized in**
**that** the actual status values of all drive units (24-30) are determined and are calculated to a handling device specific point (304) through a kinematic-specific transformation and that the Cartesian speed of the point (304) is calculated from at least two transformed position values through differentiation and compared to a specific maximum speed.

**19.** Monitoring and control device in accordance with at least one of the previous claims,
**characterized in**
**that** monitoring of the speed occurs in a cyclical manner.

**20.** Monitoring and control device in accordance with at least one of the previous claims,
**characterized in**
**that** upon triggering the other signal a Cartesian starting speed $V_{Start}$ of the point (304) is determined and stored, that after a time period $\Delta T$ the current speed $V_{curr}$ is determined and compared to the starting speed $V_{Start}$, with the system being transferred immediately into the safe status when the current speed $V_{curr}$ is equal to or larger than the starting speed $V_{Start}$ after the time period $\Delta T$.

**21.** Method for the safety-related monitoring of at least one axis of a drive unit, particularly for monitoring a technical system (10) with enhanced safety requirements comprising at least one portable and/or mobile and/or immobile device, in particular of a handling device arranged in a protective device, comprising at least one preferably central and/or decentralized control unit (36) as well as actuators (24-30; K1, K2) connected to it for executing dangerous operations, using a monitoring and control device according to at least Claim 1,
**characterized in**
**that** an actual status value signal of the at least one axis is recorded in a single-channel manner and evaluated in a two-channel manner.

**22.** Method in accordance with Claim 21,
**characterized in**
**that** the actual status value signal being formed by two periodic signals that are phase-displaced towards each other, that the sum of powers of amplitudes of the signals is formed and compared to a value within a value range, and that an error signal is generated when the sum is not within the specified value range.

**23.** Method in accordance with Claim 21 or 22,
**characterized in**
**that** the actual status value signal being formed by the two periodic signals that are phase-displaced towards each other, that in each channel the sum of the amplitude squares is formed and compared to a constant value or a value within the value range, that an error signal is generated when the sum does not correspond to the specified value or is not within the value range, and that the actual status value signal is fed to the other two-channel monitoring and control device (38), which compares the sums of amplitude squares formed in each channel to each other and/or to the constant value or value within the value range.

**24.** Method in accordance with one of the Claims 21 to 23,

**characterized in**

**that** a plausibility check of the actual status value signals is performed, checking whether the sum of squares of the output amplitudes corresponds to a specified value x, with x being in the range of $0.9 \leq x \leq 1.1$, preferably x = $1 = (\sin \varphi)^2 + (\cos \varphi)^2$.

**25.** Method in accordance with at least one of the Claims 21 to 24,
**characterized in**
**that** a directional signal of a target speed or status value is generated and compared to a directional signal of the actual speed or status value, preferably in a two-channel manner, and that the values, preferably generated in a two-channel manner, are sent to the monitoring and control device (38) and are there compared to each other.

**26.** Method in accordance with at least one of the Claims 21 to 25,
**characterized in**
**that** an internal cross-comparison on the measured actual values is performed between the channels (52, 54), preferably between the micro-computers, and that a pulse block is generated in case of an error.

**27.** Method in accordance with at least one of the Claims 21 to 26,
**characterized in**
**that** when the usual energy supply to the drive units (24-30) (power down mode) is lacking a standstill monitoring process is performed, with the actual value signals being monitored in each channel (52, 54) and a "marker" being set when the actual value signals change beyond a set tolerance limit which is transmitted into the monitoring and control device (38) when the usual energy supply has returned and compared to the stored target values.

**Revendications**

**1.** Appareil de surveillance et de commande (38) pour surveiller une installation technique (10) comprenant au moins une installation portable et/ou mobile et/ou immobile soumise à des conditions de sécurité élevées, en particulier d'un appareil à main installé dans une installation de protection, ayant au moins une unité de commande (36) centrale et/ou décentralisée ainsi que des actionneurs (24 - 30 ; K1, K2) reliés à celle-ci pour effectuer des actions dangereuses, l'appareil de surveillance et de commande (38) étant relié à des capteurs (20, 22) et/ou actionneurs (24 - 30) dont il exploite, traite et commande les états,
**caractérisé en ce que**
l'unité de commande (36) est reliée par au moins une liaison de données à au moins un actionneur (24 - 30) et/ou capteurs (20, 22) et à l'appareil de surveillance et de commande (38),
l'appareil de surveillance et de commande (38) transmet en fonction de l'état des capteurs (20, 22) et/ou des actionneurs (24- 30) au moins un signal de libération à l'unité de commande pour permettre au moins une action dans l'installation technique (10),
le signal de libération déclenche une action qui est surveillée par l'appareil de commande et de surveillance (38) par la comparaison avec des consignes d'exécution mises en mémoire et/ou prédéterminées et/ou des consignes de fonction et/ou de plausibilité ou des déroulements d'opérations, et
en cas de défaut, on génère au moins un autre signal qui met l'installation dans un état de sécurité.

**2.** Appareil de surveillance et de commande selon la revendication 1,
**caractérisé en ce que**
l'actionneur (24 - 30 ; K1, K2) et/ou le capteur (20, 22) est réalisé comme une installation de sécurité (14) faisant passer l'installation technique (10) dans un état de sécurité.

**3.** Appareil de surveillance et de commande selon la revendication 1 ou 2,
**caractérisé en ce que**
l'actionneur (24 - 30) comprend notamment une unité d'entraînement (24 - 30) avec une commande d'entraînement (50) correspondante, une protection de puissance (K1, K2), un relais et une vanne.

**4.** Appareil de surveillance et de commande selon au moins l'une des revendications précédentes,
**caractérisé en ce que**
l'action est le déroulement d'un mouvement.

**5.** Appareil de surveillance et de commande selon au moins l'une des revendications précédentes,

**caractérisé en ce que**

la liaison de données est un bus série (CAN - A).

6. Appareil de surveillance et de commande selon l'une des revendications précédentes,
**caractérisé en ce que**
l'unité de commande (36) et l'appareil de surveillance et de commande (38) sont des installations physiquement distinctes.

7. Appareil de surveillance et de commande selon au moins l'une des revendications précédentes,
**caractérisé en ce que**
l'unité de commande (36) transmet en continu une fois un signal de valeur de consigne de position à au moins une commande d'entraînement (50) raccordée et/ou à l'appareil de surveillance et de commande, et au moins cette commande d'entraînement (50) transmet des signaux de valeurs réelles de position au moins à l'unité de commande (36) de préférence à la fois à l'unité de commande (36) et à l'appareil de surveillance et de commande (38),
les signaux de valeur réelle de position de chaque commande d'entraînement (50) sont enregistrés avec l'appareil de surveillance et de commande (38) et sont comparés à des valeurs et/ou plages de valeurs spécifiques à l'entraînement, transmises par l'unité de commande (36), et
en quittant la valeur respective et/ou la plaque de valeurs, on génère l'autre signal.

8. Appareil de surveillance et de commande selon au moins l'une des revendications précédentes,
**caractérisé en ce que**
pour exploiter un commutateur de sécurité électromécanique (366) et pour commander des appareils de commutation externes (376, 378), l'appareil de surveillance et de commande (38) comprend un plan de sortie et d'entrée (66) à deux canaux avec comparaison de données croisées, et/ou au moins un autre branchement de bus (72) est prévu pour intégrer l'appareil de surveillance et de commande (38) dans un bus de sécurité subordonné.

9. Appareil de surveillance et de commande selon au moins l'une des revendications précédentes,
**caractérisé en ce que**
l'appareil de surveillance et de commande (38) comporte deux canaux avec chaque fois au moins un micro contrôleur (102, 120) et chaque micro contrôleur (102, 120) est relié à la ligne de bus (CAN - A, CAN - B) par un contrôleur de bus (56, 58).

10. Appareil de surveillance et de commande selon l'une des revendications précédentes,
**caractérisé en ce que**
les micro contrôleurs (102, 120) sont reliés par une liaison (80) les uns aux autres pour l'échange réciproque de données.

11. Appareil de surveillance et de commande selon l'une des revendications précédentes,
**caractérisé en ce que**
les valeurs réelles de position transmises par les commandes d'entraînement (50) sont déclarées avec un identificateur, et
à la réception de cet identificateur, dans chaque micro contrôleur (102, 120) de l'appareil de surveillance et de commande on déclenche une interruption, et
l'appareil de surveillance et de commande présente une gestion de temps d'entretien pour les données concernant la sécurité comme la valeur réelle de la position, les signaux de capteurs et/ou les signaux d'actionneurs.

12. Appareil de surveillance et de commande selon au moins l'une des revendications précédentes,
**caractérisé en ce que**
une sortie de sécurité et/ou une entrée (92, 94) de l'appareil de surveillance et de commande (38) sont associées à chaque valeur et/ou plage de valeurs, les sorties et/ou les entrées étant combinées de manière passive et/ou active à des éléments de commutation (96, 98) (capteurs et/ou actionneurs) comme par exemple des commutateurs de sécurité électromécaniques ou des disjoncteurs de puissance et des relais.

13. Appareil de surveillance et de commande selon l'une des revendications précédentes,
**caractérisé en ce que**
l'unité de commande (36) transmet des informations de valeur de consigne de position pour atteindre des positions définies telles qu'une position de sécurité, une position de synchronisation vers au moins une unité d'entraînement (24 - 30) et vers l'appareil de surveillance et de commande (30), des valeurs spécifiques à l'entraînement étant associées à des positions définies qui sont transmises vers l'appareil de surveillance et de commande (38) et sont comparées à l'aide des valeurs réelles de position obtenues pour les unités d'entraînement (24 - 30) puis sont surveillées.

**14.** Appareil de surveillance et de commande selon au moins l'une des revendications précédentes,
**caractérisé en ce que**
un grand nombre de plages de valeurs sont définies pour une unité d'entraînement (24 - 30) ou un essieu moteur, ces plages étant surveillées de manière spécifique à l'entraînement par l'appareil de surveillance et de commande (38), et à chaque valeur et/ou plage de valeurs, on a associé une ou plusieurs sorties de l'appareil de surveillance et de commande (38).

**15.** Appareil de surveillance et de commande selon au moins l'une des revendications précédentes,
**caractérisé en ce que**
les valeurs et/ou plages de valeurs spécifiques à l'entraînement sont programmables et à chaque valeur et/ou plage de valeurs sont associées des sorties.

**16.** Appareil de surveillance et de commande selon au moins l'une des revendications précédentes,
**caractérisé en ce que**
les valeurs réelles de position de différentes unités d'entraînement (24 - 30) dans l'appareil de surveillance et de commande (38) et/ou de l'unité de commande (36) sont calculées par une transformation de préférence spécifique à la cinématique en un point (304) spécifique à l'appareil de manipulation, comme par exemple la bride d'un robot ou un point central d'outil (TCP), et on enregistre des plages de valeurs cartésiennes pour un mouvement à n dimensions avec notamment n = 3 dans un tableau, en associant à chaque plage de valeurs au moins une sortie de l'appareil de surveillance et de commande (38).

**17.** Appareil de surveillance et de commande selon au moins l'une des revendications précédentes,
**caractérisé en ce que**
les plages de valeurs à n dimensions en particulier n = 2 ou n = 3 sont enregistrées dans des tableaux et à chaque cycle on les compare aux valeurs réelles de positions reçues et transformées.

**18.** Appareil de surveillance et de commande selon l'une quelconque des revendications précédentes,
**caractérisé en ce que**
on détermine la valeur réelle de positions de toutes les unités d'entraînement (24 - 30) et on les calcule par une transformation en cinématique spécifique par rapport à un point (304) spécifique à l'appareil de manipulation, et à partir d'au moins deux valeurs de position transformées, on calcule par différenciation la vitesse cartésienne du point (304) que l'on compare à une vitesse maximale prédéterminée.

**19.** Appareil de surveillance et de commande selon au moins l'une des revendications précédentes,
**caractérisé en ce que**
la surveillance de la vitesse est cyclique.

**20.** Appareil de surveillance et de commande selon l'une des revendications précédentes,
**caractérisé en ce qu'**
après déclenchement de l'autre signal, on détermine une vitesse initiale cartésienne ($V_{in}$) du point (304) et on l'enregistre en mémoire,
après une durée $\Delta T$, on détermine la vitesse actuelle ($V_{act}$) et on la compare à la vitesse initiale ($V_{in}$) et si la vitesse actuelle ($V_{act}$) après la durée $\Delta T$ est égale ou supérieure à la vitesse initiale ($V_{in}$), on fait immédiatement passer l'installation en position de sécurité.

**21.** Procédé de surveillance en sécurité d'au moins un axe d'une unité d'entraînement notamment pour surveiller une installation technique (10) comportant au moins une installation portable et/ou mobile et/ou immobile soumises à des conditions de sécurité poussées, notamment d'un appareil de manipulation dans une installation de sécurité comprenant au moins une unité de commande (36) de préférence centrale et/ou décentralisée ainsi que des actionneurs (24 - 30 ; K1, K2) reliés à celle-ci pour effectuer des actions dangereuses en utilisant un appareil de commande et de surveillance selon au moins la revendication 1,
**caractérisé en ce qu'**
on saisit suivant un canal le signal de valeur réelle de position d'au moins un axe et on l'exploite sur deux canaux.

**22.** Procédé selon la revendication 21,
**caractérisé en ce qu'**
on forme le signal de valeur réelle de position à partir de deux signaux périodiques déphasés l'un par rapport à l'autre, on forme la somme des puissances des amplitudes des signaux et on la compare à une valeur située dans une plage de valeurs, et on génère un signal de défaut si la somme ne se situe pas dans la plage de valeurs prédéterminées.

**23.** Procédé selon la revendication 21 ou 22,
**caractérisé en ce que**
on forme le signal de valeur réelle de position à partir de deux signaux périodiques déphasés l'un par rapport à l'autre,
dans chaque canal on forme la somme des carrés des amplitudes et on compare à une valeur constante ou une valeur située dans une plage de valeur, on génère un signal de défaut si la somme ne correspond pas à la valeur prédéterminée ou ne se situe pas dans la plage de valeurs, et on fait passer le signal de valeur réelle de position dans l'autre appareil de surveillance et de commande (38) à deux canaux de façon à comparer les sommes des carrés des amplitudes formées dans chaque canal et/ou à comparer à une valeur constante ou dans la plage de valeurs.

**24.** Procédé selon l'une des revendications 21 à 23,
**caractérisé en ce qu'**
on effectue un contrôle de plausibilité des signaux de valeur réelle de position et on vérifie si la somme des carrées des amplitudes de sortie correspond à une valeur prédéterminée x définie dans une plage comprise entre $0,9 \leq x \leq 1,1$ et de préférence $x = 1 = (\sin \varphi)^2 + (\cos \varphi)^2$.

**25.** Procédé selon au moins l'une des revendications 21 à 24,
**caractérisé en ce qu'**
un signal dépendant de la direction génère une valeur de consigne de vitesse de rotation et de position et on compare un signal dépendant de la direction de la valeur réelle de vitesse de rotation ou de position de préférence à deux canaux, et on applique les valeurs générées de préférence par deux canaux à l'appareil de surveillance et de commande (38) et on les y compare.

**26.** Procédé selon au moins l'une des revendications 21 à 25,
**caractérisé en ce qu'**
entre les canaux (52, 54) de préférence entre les micro-ordinateurs, on effectue une comparaison croisée interne des valeurs réelles saisies, et on génère une barrière impulsionnelle en cas de défaut.

**27.** Procédé selon au moins l'une des revendications 21 à 26,
**caractérisé en ce qu'**
en l'absence de l'alimentation habituelle en énergie pour les unités motrices (24 - 30) (mode de coupure de puissance), on effectue une surveillance de l'état immobilisé en surveillant dans chaque canal (52, 54) les signaux de valeur réelle et en cas de variation des signaux de valeur réelle au-delà d'une limite de tolérance réglée, on fixe un marqueur qui après rétablissement de l'alimentation en énergie habituelle est transmis à l'appareil de surveillance et de commande (38) et est comparé aux valeurs de consigne mises en mémoire.

__FIG.1__

Schutztürsignale

Safety Controller Ausgänge

Ansteuerungsebene

Ansteuerungsebene

Sicherheitsrelais-kombination — 96

98 — Sicherheitsrelais-kombination

Leistungsebene

Ansteuerung  K1

Hauptschütze  K2 — 100

__FIG.4__

# FIG.2

Systemplatine (38)

PHG-Interface: (42)
- VCC von Systemplatine
- CAN 2 passiv
Auskopplung Sicherheits-IO
- Not Aus
- Antriebe
- Zustimmung
- Betriebsart

Auskopplung Safety-CAN: (72)
Erweit. sichere E/A (Nocken)

CAN-Controller Safety-CAN-B (70)
CAN-Controller CAN-A2 (64)
uC 2 CPU2 (60)

CAN-Controller Safety-CAN-A (68)
CAN-Controller CAN-B (62)
uC 1 CPU1 (58)

sync data

IO-Bereich sichere Ein- und Ausgänge Sicherheits-IO (66)

Taktgenerierung extern (44)

PHG (46)

CAN_C

Servo 24 (56)
CAN Controller (58)
C 32
ADSP
DPR am
C 167
IR-CS
Resolver (30) (50)

CAN_A
CAN_B

Servo 2 bis Servo 23 (54)
CAN Controller (56)
C 32
ADSP (58)
DPR am
C 167
IR-CS
Resolver (48)
(52) (50) (24)

M-Modul CAN-Interface CANopen (40)
CAN_A

Robot Star V (RSV) (36)

Grenzwertbetrachtung reale Mechanik

(34)

Trafo 230V/42V — 74

66

38

92 Ausgangsebene A Relais A / B Relais B

94 Eingangsebene A / B

Netzteil A (2·5V) — 76
5V A2
5V A1 — 58
RAM ROM Schnittstelle CPUA Walchdoc

Netzteil B (2·6V) — 78
6V B1
6V B2 — 60
RAM ROM Schnittstelle CPUB Walchdoc

Link — 88

CAN-Controller A — 62
CAN-Controller B — 64

Transceiver A — 80
Transceiver B — 82
PHG — 42

CAN-Controller C — 68
CAN-Controller D — 70

Transceiver C — 84
Transceiver D — 86

Schnittstelle Bedienfeld — 90

ESALAN

CAN A   CAN B   CAN 2

FIG.3

**52** Redundanter Kreis A

**50**

**54** Redundanter Kreis B

CAN-Interface CAN_A Prozesskanal

AC FAIL von Puffernetzteil

CAN-Interface CAN_B Redundanzkanal

CAN_A_H   CAN_A_L   ACFAR

CAN_B_H   CAN_B_L

Sicherheitsrelevante Softwaremodule in Kreis A

Sicherheitsrelevante Softwaremodule in Kreis B

Transceiver CAN_A Philips 80C251 — **104**

Transceiver CAN_B Philips 80C251 — **134**

RxD   TxD

RxD   TxD

CAN Controller Onchip C167 — **56**

CAN-Controller Philips SJA1000 C200-komp. — **58**

Microcontroller Siemens SAB80C187

FLASH Atmel AT29C512 — **111**

Ansteuerung CAN-Contr. EPLD Altera Flex 10000 — **132**

Achsistwert Onchip-CAN-Controller CAN_A ausgeben

**128**

SRAM intern — **106**

ACFAR

DSP

Achsistwert auf CAN-Controller CAN_B ausgeben

DPRAM EPLD Altera Flex 10000 — **130**

Servo-5V

DPRAM EPLD Altera Flex 10000 — **126**

Achsistwert von DPRAM holen

Achsistwert-Position berechnen arctan ( sin/cos )

MAX 811

**122**

FLASH Atmel AT29C512 — **123**

SRAM intern

Plausibilitätsanalyse sin 2 + cos 2 = 1

Servo-5V

MAX 1232

DSP

DPRAM schreiben

IO-Steuerung — **108**

CONTR

WD Trig — **120**

DPRAM schreiben

Taktüberwachung Conversion-Start IR EOC Standard IR-EOC-Akkubetrieb

IR-Verarbeitung — **110**

IR-ACFAIL

IR-Verarbeitung

IR BS-Zyklus

Taktüberwachung DPRAM

**152**

**124**

**102**
**154**

IR-EOC Akku

IR-EOC Standard

Timer-IR Takt:132μs UP-Down-Counter Watchdog EPLD XILINX XC 5204

Bustakt: 132μs — **138**

**118**
**112**

Teiler 1:32 Altera Flex 10000

**116**

EOC

SOC

SOC

**140**

soc

**114**

Analog Digital Converter Maxim MAX156

Referenz-frequenz-generator MULDAC AD 7528

Analog Digital Converter Analog Device AD 7861 — **136**

soc

soc

sin   cos

cos   sin

sin   cos

**150**   **142**

**146**

Bemerkungen:
- Timer-IR und Referenzfrequenz-Gen. Maximum ref = SOC
- Eingang sin/cos: verschiedene Gehäuse

ref   sin   cos

A/R1   B A/R2 — **144**

**148**

Bemerkung Altera Flex 10000 ist nur ein Baustein
- Teiler 1 32
- DPRAM ADSP/C32
- DPRAM C32/C167
- Ansteuerung CAN-Controller

Motor

Resolver

Resolver passives Meßglied Verstärkungsfaktor: 0,5

**48**

Resolver synchron zu Motorphasen justiert — **148**

**FIG.5**

166
PHG
Versorgung
24V

158

162

156

168
Eingang NA_1

zyklischer externer
Takt i von µC PHG

164

170
Eingang NA_2

160

Takterzeugung

zyklischer externer
Takt i von µC PHG

**FIG.6**

166
PHG
Versorgung
24V

174

172

176

E: Auto

178

E: Einrichten

180

E: Auto - Test

zyklischer externer Takt k
von µC PHG

**FIG.7**

166
PHG
Versorgung
24V

184

182

186
Eingang: ZUST 1_1

zyklischer externer Takt m
von µC PHG

**FIG.8**

CAN_C

PHG

46

36

188

RS V

38

CAN_A

Safety
Controller

**FIG.9**

190

192

**Safeposition**

194

Input:
Sichere
Lageistwerte
CPU 1

194'

Input:
Sichere
Lageistwerte
CPU 2

Start CPU1 — 196

196' — Start CPU 2

No

198

Anforderung
Safepos? (von CAN_A)

198'

Anforderung
Safepos? (von CPU 1)

No

Yes

200

Vergleich der Lageistwerte (lagiw)
aller Achsen mit Safepos

200'

Vergleich der Lageistwerte (lagiw)
aller Achsen mit Safepos

Yes

204

Fehler:
-Safepos zurücksetzen
-Fehlermeldung
-Antriebe ausschalten

lagiw im Bereich
Safepos ?

No

202

Fehler:
-Safepos zurücksetzen
-Fehlermeldung
-Antriebe ausschalten

202'

lagiw im Bereich
Safepos ?

No

Yes

206

204'

Yes

206'

Statusübergabe an CPU 2

Statusübergabe an CPU 1

Status CPU1
= Status CPU 2 ?

No

Fehler in redundanter CPU 2:
-sicher Zustand einnehmen
-Fehlermeldung

208

210'

210

208'

Fehler in redundanter CPU 2:
-sicher Zustand einnehmen
-Fehlermeldung

Yes

No

Status CPU 1
= Status CPU 2 ?

Yes

Ausgang safepos_1 setzen — 212

212' — Ausgang safepos_2 setzen

sichere
Safepos
CPU 1

Rücklesen Ausgang
safepos_2 von CPU 2
über Schützkontakt — 214

214' — Rücklesen Ausgang
safepos_1 von CPU 1
über Schützkontakt

sichere
Safepos
CPU 2

218

216

safepos_1 =
safepos_2

Yes

216'

safepos_1 =
safepos_2

Yes

218'

Fehler in Treiber/Schützlogik:
-Safepos zurücksetzen
-Fehlermeldung
-Antriebe ausschalten — 220

220' — Fehler in Treiber/Schützlogik:
-Safepos zurücksetzen
-Fehlermeldung
-Antriebe ausschalten

## FIG.10

222

Synchronposition

Input:
Sichere
Lageistwerte
CPU1 nach
Power On
224

224'
Input:
Sichere
Lageistwerte
CPU 2 nach
Power On

Start CPU1 — 226

226' — Start CPU 2

Autobetrieb für Robot nicht
freigegeben nach Power On — 228

228' — Autobetrieb für Robot nicht
freigegeben nach Power On

Aktion von RSV:
Fahren auf Syncpos: nach
Positionieren auf Syncpos
Anforderung über CAN_A

No

Anforderung
Syncpos? von CAN_A
230

Yes

Anforderung Syncpos an CPU 2

232

234

Anforderung Syncpos?
von CPU1

No

238
Fehler:
-RS5·CPU1 nicht synchron
-sicheren Zustand einnehmen
-Fehlermeldung

Yes

236
Syncpos erreicht?

No

236'
Syncpos erreicht?

No

Fehler:
-RS5/CPU1·CPU2 nicht
. synchron
-sicheren Zustand einnehmen
-Fehlermeldung

Yes

Yes

240

240'

Statusübergabe an CPU 2

244

238'

Statusübergabe an CPU 1

Status CPU1 =
Status CPU 2?
242

No

Fehler in Redundanter CPU 2:
-sicheren Zustand einnehmen
-Fehlermeldung

242'
Status CPU1 =
Status CPU2?

Fehler in Redundanter CPU1:
-sicheren Zustand einnehmen
-Fehlermeldung
244'

No

Yes

246
Eingang
Syncpos_1?

Roboter nicht synchron
-fehlerhafter Syncpos-
Schalter
248

Yes

246'
Eingang
Syncpos_2?

Roboter nicht synchron
-fehlerhafter Syncpos-
Schalter

No

Yes

Yes

250

248'

250'

Roboter synchron CPU 1
Autobetrieb freigeben
Genauigkeit abhängig
von Schalter (5-10mm)

Roboter synchron CPU 2
Autobetrieb freigeben
Genauigkeit abhängig
von Schalter (5-10mm)

FIG.11

36

264

252 — Achse 1 ——————— N1 ————————

254 — Achse 2 —————————————————

266 268 270

256 — Achse 3 ——— N2 ———— N3 ———— N4 ———

258 — Achse 4 —————————————————

272 274

260 — Achse 5 ——— N5 ——————— N6 ———

262 — Achse n —————————————————

## FIG.12

302

Z

Y

X

304

kathesicher Nocken

12

## FIG.13

276

278

280

280'

Sichere Nockenschalter- achsspezifisch

Input:
Sichere
Lageistwerte
CPU1

Input:
Sichere
Lageistwerte
CPU 2

Start CPU 1 — 282

282' — Start CPU 2

Vergleich des Lageistwertes
(lagiw) von Achse k mit
Istwerttabelle der Nocken — 284

284' — Vergleich des Lageistwertes
(lagiw) der Achse k mit
Istwerttabelle der Nocken

No

No

lagiw
im Bereich
der Nocke i ? — 286

286' — lagiw
im Bereich
der Nocke i ?

Yes

Yes

Statusübergabe an CPU 2 — 288

288' — Statusübergabe an CPU1

Status CPU 1
= Status CPU 2 ?

No

292

290

Fehler in redundanter CPU 2
- Sicherer Zustand einnehmen
- Fehlermeldung

290'

Status CPU 1
= Status CPU 2 ?

Yes

No

Fehler in redundanter CPU 1
- Sicherer Zustand einnehmen
- Fehlermeldung

Yes

294

294'

Ausgang Nocken i_2 setzen

292'

Ausgang Nocken i_2 setzen

Rücklesen Ausgang
i_2 von CPU 2 über
Schützkontakt — 296

296' — Rücklesen Ausgang
i_1 von CPU1 über
Schützkontakt

sichere
Nocken
CPU 1

298

sichere
Nocken
CPU 2

298'

i_1 = i_2

Yes

i_1 = i_2

Yes

Fehler in Treiber/Schützlogik:
- Nocken zurücksetzen
- Fehlermeldung
- Antriebe ausschalten — 300

300' — Fehler in Treiber/Schützlogik:
- Nocken zurücksetzen
- Fehlermeldung
- Antriebe ausschalten

## FIG.14

FIG.15

**FIG.16**

178
Schlüsselwahlschalter

182
Zustimmungstaster

Verfahrtasten

$t_x$       $t_x$

Drehzahl-
überwachung

1 = sicher red. Geschwindigkeit
0 = sicherer Betriebshalt

**FIG.17**

180 — Schlüsselwahlschalter

182 — Zustimmungstaster

360 — Start/Verfahrtasten

362 — Freigabe

**FIG.19**

**FIG.18**

**FIG.20**

FIG.21

Safety-Modul

AB_1 372
AB_2 374
Rückführkreis

sicherer
Eingang

368 370

366
2-kanalig
Service-Mode

376 KBa
378 KBb

380
24V-Bremsenversorgung von
Steuerungs-Trafo

364

Kreis A 54 Kreis B
52

386 &
382
390 24

Kreis A 54 Kreis B
52

388 &
384
392 26

... weiter bis
Servo A24

nur Achsen ohne
Schwerkraftbelastung
angeschlossen
(→z.B. Kopfachsen)

400
externe
24V-Bremsenversorgung

398

Notschalter für Bremsen öffnen
bei Hauptschalter „Aus"

394
Bremse A1

396
Bremse A2

EP 1 035 953 B1

Reaktion der Redundanten Kreise ( A und B )
bei Spannungsausfall               [NOT-STOP-Routine]  _402_

ACFAIL von Puffernetzteil
WD von RSV
(keine Sollwerte über CAN_A)  _404_

406 — **Start Kreis A**
**NOT-STOP-Routine**
**(Siemens C167)**

**Start Kreis B**
**NOT-STOP-Routine**
**(TI C32/ADSP 2105)**  _406'_

Option: Abschalten nicht
benötigter Module (VCC3)  _408_

Achse im
Stillstand?  _410_  — nein

Achse in
Stillstand (n=0)
regeln
Sollwertvorgabe
an Kreis B  _412_

Sollwerte für
Stillsetzen (n=0)
von Kreis A
erwarten und
ausführen  _412'_

nein — Achse im
Stillstand?  _410'_

ja

414 — Haltebremse aktivieren

Haltebremse aktivieren  _414'_

416 — Wartezeit
Haltebremse einfallen

Wartezeit
Haltebremse einfallen  _416'_

nein

Bremse eingefallen?
Achse im Stillstand?
(mehrmals L_ist prüfen)  _418_

Bremse eingefallen?
Achse im Stillstand?
(mehrmals L_ist prüfen)  _418'_  — nein

ja

Lageistwert (32bit) in Flash C167 ablegen
SYNC-Flag setzen  _420_

Lageistwert (32bit) in Flash ADSP 2105 ablegen
SYNC-Flag setzen  _420'_

ja

Ende NOT-STOP
Kreis A  _422_

_422'_  Ende NOT-STOP
Kreis B

Im Idealfall ist bis hier V6/Vext aktiv
Ab hier übernimmt die Pufferspannung falls vorhanden!

_424_ — Start Power-Down
Routine Kreis A

Start Power-Down
Routine Kreis B  _424'_

## FIG.22

Sollte die Versorgungsspannung vor Beendigung der NOT-STOP-Routine zusammenbrechen ist die Achse beim Wiederanlauf asynchron gesetzt und das Bedienpersonal muß die Achse neu synchronisieren. Die Synchronisierung erfolgt durch Anfahren der Sync-Position. Nach Quittierung der Sync-Position setzt das Safety-Modul die Achse synchron für Automatikbetrieb.

426

Pufferbetrieb nach Spannungsausfall       [Power - Down - Mode]

Ab hier übernimmt die Pufferspannung, falls vorhanden

428 — ( **Start Kreis A** Power-Down-Routine ( Siemens C167) )

428' — ( **Start Kreis B** Power-Down-Routine (TIC32/ADSP2105) )

430 — | Abschalten aller nicht benötigten Verbraucher (Vcc 2): ( SRAM C167, C32 mit SRAM, Altera) |

| Abschalten aller nicht benötigten Verbraucher: (Resolver, Anzeigen...) | — 430'

432 — | Timer - Start 200ms |

434 — ◇ Timer-IR? ◇    nein

ja

436 — | Istwertaufnahme-Zyklus starten | — STart_RESolver (TTL-IO) →

438

◇ STart_ Resolver innerhalb 200ms-Zyklus ? ◇    nein

ja

444 — | Warten auf Interrupt EOC |

SOC(B)=IR_EOC(A) TTL-IO →

| Resolver und ADC zuschalten Referenzfrequenz + Start_Of_Conversion erzeugen | — 442

◇ **Interrupt EOC ?** = ADC sin/cos erfolgreich ◇    nein

446

ja

448 — | Analog-Digital- Konvertierung sin/cos ( IR BS - Zyklus ) |

450 — | Lageistwert berechnen (arctan ) |

450' — | Lageistwert berechnen (arctan) |

◇ **Position** verändert seit letztem Zyklus ? ◇    ja

452

nein

456

| Lageistwert in internen RAM C167 abgelegen |

◇ **Position** verändert seit letztem Zyklus ? ◇    ja

452'     456'

nein

| Lageistwert in internem RAM ADSP abgelegen |

| **Fehler:** 1. SYNC-Flag rücksetzen 2. kein ST_RES an Kreis B senden 3. Warten auf Kommunikation mit Safety-Modul (CAN_A) | — 454

458 — | SYNC-Flag setzen |

458' — | SYNC-Flag setzen |

| **Fehler:** 1. SYNC-Flag rücksetzen 2. kein SOC(B) an Kreis A senden 3. Warten auf Kommunikation mit Safety-Modul (CAN_B) | — 440

◇ noch ACfail? ◇    nein

460

◇ noch ACfail? ◇    nein

460'

ja

( **Aussprung** in Standard-Mode Kreis A )

462

( **Aussprung** in Standard-Mode Kreis B )

462'

ja

## FIG.23

# FIG. 24

Nicht über Hauptschalter der
Robotersteuerung geschaltet:über
seperate Vorsicherung direkt am
Netz angeschlossen

L    N

466    464

12V-Akku

Schaltnetzteil
ca. 100W
Vout = 7V

468

Integrierte ACfail
Überwachung

470

GND   Vext

111    123

Flash

IR-ACfail

Siemens
SAB 80C 167

SRAM
intern

106

102

Analog Device
ADSP 2105

SRAM
intern

122

Flash

120

IR-ACfail

STart_RESolver(TTL)

EPLD
XILINX
und MULDAC

138

IR-EOC
(ohne Teiler)

IR
BS-Zyklus

114

EOC
ADC

SOC

EOC
ADC

136

sin

cos

Op
Am2

Op
Am1

ref

144

146

142

Resolver   48